# EUROPEAN PATENT APPLICATION

(11) **EP 4 580 099 A1**
(43) Date of publication of application: **02.07.2025**
(21) Application number: 23845451.6
(22) Date of filing: 21.07.2023
(51) Int. Cl.: H04L 5/00

(54) **METHOD AND APPARATUS USED IN NODE FOR WIRELESS COMMUNICATION**

(30) Priority: 27.07.2022 CN 202210892646
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2023/108599
(87) International publication number: WO 2024/022241

(57) **Abstract**

Disclosed in the present invention are a method and apparatus used in a node for wireless communication. The method comprises: a first receiver receiving a first RRC signaling set, the first RRC signaling set comprising first RRC signaling, and the first RRC signaling being configured for a first cell; receiving first DCI, the first DCI being used for scheduling a PUSCH on at least one cell, the first cell being one of the at least one cell; and a first transmitter sending the PUSCH on each of the at least one cell, wherein a first field set in the first DCI is applied to the at least one cell; the indication of the first field set in the first DCI depends on a first parameter set; whether the first parameter set uses a configuration of the first RRC signaling is related to the number of cells comprised in the at least one cell; and if the number of cells comprised in the at least one cell is 1, the first parameter set uses the configuration of the first RRC signaling.

## Description

### Technical Field

This application relates to a transmission method and apparatus in a wireless communication system, and in particular, to a radio signal transmission method and apparatus in a wireless communication system supporting a cellular network.

### Related Art

In a 5G NR system, to support Enhanced Mobile Broadband (eMBB), a large number of pieces of downlink control information (DCI) signaling need to be sent to complete scheduling of physical layer channels (such as a physical downlink shared channel (PDSCH) and a physical uplink shared channel (PUSCH)). Performing scheduling on multiple serving cells by using a single piece of DCI signaling is an effective means for reducing DCI overheads, and how to interpret the indication of a field in DCI is an important aspect that needs to be considered.

### SUMMARY

For the foregoing problem, this application discloses a solution. It should be noted that, eMBB is used as an example in the foregoing descriptions, this application is also applicable to other scenarios such as Ultra-Reliable Low-Latency Communications (URLLC), Internet of Vehicles, Internet of Things, non-terrestrial networks (NTNs), multicast broadcast services (MBSs), extended reality (XR), enhanced Machine-Type Communication (eMTC), and full-duplex communication, and similar technical effects are achieved. In addition, applying a unified solution to different scenarios (including but not limited to eMBB, URLLC, Internet of Vehicles, Internet of Things, the NTNs, the MBSs, XR, and eMTC) further helps to reduce hardware complexity and costs or improve performance. In the absence of conflicts, an embodiment of any node in this application and features in the embodiment can be applied to any other node. In the absence of conflicts, embodiments of this application and features in the embodiments can be combined with each other in different manners.

In an embodiment, for explanations of terminologies in this application, refer to definitions in the TS36 series of 3GPP specification protocols.

In an embodiment, for explanations of terminologies in this application, refer to definitions in the TS38 series of 3GPP specification protocols.

In an embodiment, for explanations of terminologies in this application, refer to definitions in the TS37 series of 3GPP specification protocols.

In an embodiment, for explanations of terminologies in this application, refer to definitions in Institute of Electrical and Electronics Engineers (IEEE) specification protocols.

This application discloses a method used in a first node for wireless communication, including:
receiving a first RRC signaling set, where the first RRC signaling set includes first RRC signaling, and the first RRC signaling is configured for a first cell; and receiving first DCI, where the first DCI is used for scheduling a PUSCH on at least one cell, and the first cell is one of the at least one cell; and
sending the PUSCH on each of the at least one cell, where
a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In an embodiment, benefits of the foregoing method include: Configuration or scheduling flexibility is improved.

In an embodiment, benefits of the foregoing method include: System performance is improved.

In an embodiment, benefits of the foregoing method include: Signaling overheads are reduced.

In an embodiment, benefits of the foregoing method include: Good compatibility is achieved.

In an embodiment, benefits of the foregoing method include: Modifications to existing 3GPP standards are few.

According to an aspect of this application, in the foregoing method,
the first RRC signaling is PUSCH-Config.

According to an aspect of this application, in the foregoing method,
the first RRC signaling is PUSCH-ConfigCommon.

According to an aspect of this application, in the foregoing method,
the first RRC signaling is PUSCH-ServingCellConfig.

According to an aspect of this application, in the foregoing method,
the number of cells included in the at least one cell is greater than 1; and the first parameter set includes a first parameter subset, and the first parameter subset is default.

According to an aspect of this application, in the foregoing method,
the number of cells included in the at least one cell is greater than 1; the first RRC signaling set includes second RRC signaling, and the second RRC signaling is not configured for the first cell; and the first parameter set includes a second parameter subset, and the second parameter subset uses a configuration of the second RRC signaling.

According to an aspect of this application, in the foregoing method,
the second RRC signaling is configured for a first reference cell, the first reference cell is a cell other than the first cell in the at least one cell, and a second field in the first DCI is used for determining the first reference cell.

According to an aspect of this application, in the foregoing method,
the number of cells included in the at least one cell is greater than 1; the first RRC signaling set includes a target RRC signaling subset, all pieces of signaling in the target RRC signaling subset are configured for the first cell, and the first RRC signaling is one of the multiple pieces of RRC signaling included in the target RRC signaling subset; and the first parameter set includes a third parameter subset, and the third parameter subset uses a configuration of one piece of RRC signaling other than the first RRC signaling in the target RRC signaling subset.

According to an aspect of this application, in the foregoing method,
the number of cells included in the at least one cell is greater than 1; the indication of a second field set in the first DCI depends on a second parameter set; the first RRC signaling set includes multiple pieces of RRC signaling, and the first RRC signaling is one of the multiple pieces of RRC signaling; the multiple pieces of RRC signaling are respectively configured for the at least one cell; and the second parameter set uses a configuration of at least one of the multiple pieces of RRC signaling, and configurations of the multiple pieces of RRC signaling for the second parameter set are expected to be the same.

This application discloses a method used in a second node for wireless communication, including:
sending a first RRC signaling set, where the first RRC signaling set includes first RRC signaling, and the first RRC signaling is configured for a first cell; and sending first DCI, where the first DCI is used for scheduling a PUSCH on at least one cell, and the first cell is one of the at least one cell; and
receiving the PUSCH on each of the at least one cell, where
a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

According to an aspect of this application, in the foregoing method,
the first RRC signaling is PUSCH-Config.

According to an aspect of this application, in the foregoing method,
the first RRC signaling is PUSCH-ConfigCommon.

According to an aspect of this application, in the foregoing method,
the first RRC signaling is PUSCH-ServingCellConfig.

According to an aspect of this application, in the foregoing method,
the number of cells included in the at least one cell is greater than 1; and the first parameter set includes a first parameter subset, and the first parameter subset is default.

According to an aspect of this application, in the foregoing method,
the number of cells included in the at least one cell is greater than 1; the first RRC signaling set includes second RRC signaling, and the second RRC signaling is not configured for the first cell; and the first parameter set includes a second parameter subset, and the second parameter subset uses a configuration of the second RRC signaling.

According to an aspect of this application, in the foregoing method,
the second RRC signaling is configured for a first reference cell, the first reference cell is a cell other than the first cell in the at least one cell, and a second field in the first DCI is used for determining the first reference cell.

According to an aspect of this application, in the foregoing method,
the number of cells included in the at least one cell is greater than 1; the first RRC signaling set includes a target RRC signaling subset, all pieces of signaling in the target RRC signaling subset are configured for the first cell, and the first RRC signaling is one of the multiple pieces of RRC signaling included in the target RRC signaling subset; and the first parameter set includes a third parameter subset, and the third parameter subset uses a configuration of one piece of RRC signaling other than the first RRC signaling in the target RRC signaling subset.

According to an aspect of this application, in the foregoing method,
the number of cells included in the at least one cell is greater than 1; the indication of a second field set in the first DCI depends on a second parameter set; the first RRC signaling set includes multiple pieces of RRC signaling, and the first RRC signaling is one of the multiple pieces of RRC signaling; the multiple pieces of RRC signaling are respectively configured for the at least one cell; and the second parameter set uses a configuration of at least one of the multiple pieces of RRC signaling, and configurations of the multiple pieces of RRC signaling for the second parameter set are expected to be the same.

This application discloses a first node for wireless communication, including:
a first receiver, configured to: receive a first RRC signaling set, where the first RRC signaling set includes first RRC signaling, and the first RRC signaling is configured for a first cell; and receive first DCI, where the first DCI is used for scheduling a PUSCH on at least one cell, and the first cell is one of the at least one cell; and
a first transmitter, configured to send the PUSCH on each of the at least one cell, where
a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

This application discloses a second node for wireless communication, including:
a second transmitter, configured to: send a first RRC signaling set, where the first RRC signaling set includes first RRC signaling, and the first RRC signaling is configured for a first cell; and send first DCI, where the first DCI is used for scheduling a PUSCH on at least one cell, and the first cell is one of the at least one cell; and
a second receiver, configured to receive the PUSCH on each of the at least one cell, where
a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

### BRIEF DESCRIPTION OF THE DRAWINGS

Other features, objectives, and advantages of this application are more obvious through reading of detailed descriptions of nonrestrictive embodiments with reference to the following accompanying drawings:
FIG. 1 is a flowchart of processing by a first node according to an embodiment of this application;
FIG. 2 is a diagram of a network architecture according to an embodiment of this application;
FIG. 3 is a diagram of radio protocol architectures for a user plane and a control plane according to an embodiment of this application;
FIG. 4 is a diagram of a first communication device and a second communication device according to an embodiment of this application;
FIG. 5 is a flowchart of signal transmission according to an embodiment of this application;
FIG. 6 is an illustrative diagram of a third parameter subset according to an embodiment of this application;
FIG. 7 is a diagram of a relationship between a first parameter set and a first parameter subset according to an embodiment of this application;
FIG. 8 is a diagram of a relationship between a first RRC signaling set, second RRC signaling, a first cell, a first parameter set, and a second parameter subset according to an embodiment of this application;
FIG. 9 is a diagram of a relationship between a first RRC signaling set, second RRC signaling, a first reference cell, and a first cell according to an embodiment of this application;
FIG. 10 is a diagram of a relationship between a first RRC signaling set, multiple pieces of RRC signaling, first RRC signaling, at least one cell, the indication of a second field set in first DCI, and a second parameter set according to an embodiment of this application;
FIG. 11 is a structural block diagram of a processing apparatus in a first node device according to an embodiment of this application; and
FIG. 12 is a structural block diagram of a processing apparatus in a second node device according to an embodiment of this application.

### DETAILED DESCRIPTION

The following further describes technical solutions of this application in detail with reference to the accompanying drawings. It should be noted that, in the absence of conflicts, embodiments of this application and features in the embodiments can be combined with each other in different manners.

### Embodiment 1

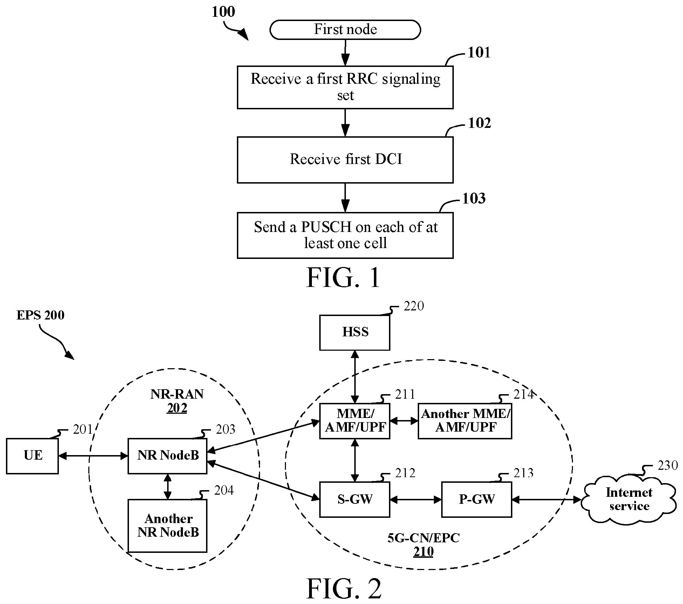

Embodiment 1 illustrates a flowchart of processing by a first node according to an embodiment of this application, as shown in FIG. 1.

In Embodiment 1, the first node in this application receives a first RRC signaling set in step 101, receives first DCI in step 102, and sends a PUSCH on each of at least one cell in step 103.

In Embodiment 1, the first RRC signaling set includes first RRC signaling, and the first RRC signaling is configured for a first cell. The first DCI is used for scheduling the PUSCH on the at least one cell, and the first cell is one of the at least one cell. A first field set in the first DCI is applied to the at least one cell. The indication of the first field set in the first DCI depends on a first parameter set. Whether the first parameter set uses a configuration of the first RRC signaling is related to the number of cells included in the at least one cell. The first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In an embodiment, the number of cells included in the at least one cell is used for determining whether the first parameter set uses the configuration of the first RRC signaling.

In an embodiment, the first RRC signaling set includes at least one piece of RRC signaling.

In an embodiment, the first RRC signaling set includes at least one information element (IE).

In an embodiment, the first RRC signaling set includes at least one field in at least one IE.

In an embodiment, one piece of RRC signaling in the first RRC signaling set includes at least a part of ServingCellConfig.

In an embodiment, one piece of RRC signaling in the first RRC signaling set includes at least a part of BWP-Uplink.

In an embodiment, one piece of RRC signaling in the first RRC signaling set includes at least a part of BWP-UplinkCommon.

In an embodiment, one piece of RRC signaling in the first RRC signaling set includes at least a part of BWP-UplinkDedicated.

In an embodiment, one piece of RRC signaling in the first RRC signaling set includes at least a part of PUSCH-Config.

In an embodiment, one piece of RRC signaling in the first RRC signaling set includes at least a part of PUSCH-ConfigCommon.

In an embodiment, one piece of RRC signaling in the first RRC signaling set includes at least a part of PUSCH-ServingCellConfig.

In an embodiment, the first RRC signaling includes at least one IE.

In an embodiment, the first RRC signaling includes at least one field in at least one IE.

In an embodiment, the first RRC signaling includes at least a part of ServingCellConfig.

In an embodiment, the first RRC signaling includes at least a part of BWP-Uplink.

In an embodiment, the first RRC signaling includes at least a part of BWP-UplinkCommon.

In an embodiment, the first RRC signaling includes at least a part of BWP-UplinkDedicated.

In an embodiment, the first RRC signaling includes at least a part of PUSCH-Config.

In an embodiment, the first RRC signaling includes at least a part of PUSCH-ConfigCommon.

In an embodiment, the first RRC signaling includes at least a part of PUSCH-ServingCellConfig.

In an embodiment, when one piece of RRC signaling belongs to a ServingCellConfig IE for configuring one cell, the piece of RRC signaling is configured for the cell.

In an embodiment, when one piece of RRC signaling belongs to a BWP-Uplink IE for configuring one cell, the piece of RRC signaling is configured for the cell.

In an embodiment, when one piece of RRC signaling belongs to a BWP-UplinkCommon IE for configuring one cell, the piece of RRC signaling is configured for the cell.

In an embodiment, when one piece of RRC signaling belongs to a BWP-UplinkDedicated IE for configuring one cell, the piece of RRC signaling is configured for the cell.

In an embodiment, in this application, that one piece of RRC signaling is configured for one cell includes the following meaning: The RRC signaling is configured for sending of a PUSCH on the cell.

In an embodiment, the first DCI includes physical layer signaling.

In an embodiment, the first DCI includes one piece of DCI signaling.

In an embodiment, the first DCI is one DCI format.

In an embodiment, the first DCI includes at least one field in one DCI format.

In an embodiment, the first DCI is used for indicating at least one of a time domain resource occupied by, a frequency domain resource occupied by, a modulation and coding scheme (MSC) used for, or precoding used for the PUSCH on each of the at least one cell.

In an embodiment, based on the scheduling using the first DCI: the first node sends at least one PUSCH on each of the at least one cell.

In a sub-embodiment of the foregoing embodiment, there is one cell, in the at least one cell, on which the first node sends multiple PUSCHs scheduled by using the first DCI.

In an embodiment, based on the scheduling using the first DCI, the first node performs signal sending on at least one PUSCH on each of the at least one cell.

In an embodiment, based on the scheduling using the first DCI, the first node sends at least one of a transport block (TB) or a channel state information (CSI) report on one PUSCH on each of the at least one cell.

In an embodiment, before a bit block including bits of the TB or the CSI report is sent on the PUSCH, the bit block sequentially undergoes at least a part of CRC attachment, code block segmentation, code block CRC attachment, channel coding, rate matching, code block concatenation, scrambling, modulation, layer mapping, transform precoding, precoding, mapping to a virtual resource block, mapping from a virtual resource block to a physical resource block (PRB), multi-carrier symbol generation, and modulation and up-conversion.

In an embodiment, before a bit block including bits of the TB or the CSI report is sent on the PUSCH, the bit block sequentially undergoes at least a part of CRC attachment, code block segmentation, code block CRC attachment, channel coding, rate matching, code block concatenation, scrambling, modulation, layer mapping, transform precoding, precoding, mapping to a virtual resource block, and mapping from a virtual resource block to a PRB.

In an embodiment, the first field set in the first DCI includes only one field.

In an embodiment, the first field set in the first DCI includes multiple fields.

In an embodiment, one field in the first field set in the first DCI includes at least one bit.

In an embodiment, one field in the first field set in the first DCI includes a non-negative integer number of bits.

In an embodiment, the first field set in the first DCI includes a Frequency domain resource assignment field.

In an embodiment, the first field set in the first DCI includes a Time domain resource assignment field.

In an embodiment, the first field set in the first DCI includes a Frequency hopping flag field.

In an embodiment, the first field set in the first DCI includes a Modulation and coding scheme field.

In an embodiment, the first field set in the first DCI includes a HARQ process number field.

In an embodiment, the first field set in the first DCI includes a Second TPC command for scheduled PUSCH field.

In an embodiment, the first field set in the first DCI includes an SRS resource indicator field.

In an embodiment, the first field set in the first DCI includes an SRS resource set indicator field.

In an embodiment, the first field set in the first DCI includes a Precoding information and number of layers field.

In an embodiment, the first field set in the first DCI includes a Second Precoding information field.

In an embodiment, the first field set in the first DCI includes an Antenna ports field.

In an embodiment, the first field set in the first DCI includes a CSI request field.

In an embodiment, the first field set in the first DCI includes a CBG transmission information (CBGTI) field.

In an embodiment, the first field set in the first DCI includes a PTRS-DMRS association field.

In an embodiment, the first field set in the first DCI includes a beta_offset indicator field.

In an embodiment, the first field set in the first DCI includes a DMRS sequence initialization field.

In an embodiment, the first field set in the first DCI includes a ChannelAccess-CPext-CAPC field.

In an embodiment, the first field set in the first DCI includes an SCell dormancy indication field.

In an embodiment, one field in the first field set in the first DCI is used for indicating frequency domain resource assignment.

In an embodiment, one field in the first field set in the first DCI is used for indicating time domain resource assignment.

In an embodiment, one field in the first field set in the first DCI is used for indicating whether to perform frequency hopping.

In an embodiment, one field in the first field set in the first DCI is used for indicating an MCS.

In an embodiment, one field in the first field set in the first DCI is used for indicating a hybrid automatic repeat request (HARQ) process number.

In an embodiment, one field in the first field set in the first DCI is used for determining transmit power of the PUSCH.

In an embodiment, one field in the first field set in the first DCI is used for indicating a sounding reference signal (SRS) resource.

In an embodiment, one field in the first field set in the first DCI is used for indicating an SRS resource set.

In an embodiment, one field in the first field set in the first DCI is used for indicating at least one of precoding information or the number of transmission layers.

In an embodiment, one field in the first field set in the first DCI is used for indicating an antenna port.

In an embodiment, one field in the first field set in the first DCI is used for indicating related information of the CSI report.

In an embodiment, one field in the first field set in the first DCI is used for indicating code block group (CBG) transmission information.

In an embodiment, one field in the first field set in the first DCI is used for indicating an association between a PTRS and a DMRS.

In an embodiment, one field in the first field set in the first DCI is used for indicating a beta_offset value.

In an embodiment, a value of one field in the first field set in the first DCI is used for generation of a demodulation reference signal (DMRS) sequence.

In an embodiment, one field in the first field set in the first DCI is used for indicating SCell dormancy information.

In an embodiment, one field in the first field set in the first DCI is used for indicating a sending waveform of the PUSCH.

In an embodiment, one field in the first field set in the first DCI is used for indicating whether to enable transform precoding.

In an embodiment, one of the cells in this application is a serving cell.

In an embodiment, one of the cells in this application is a configurable cell.

In an embodiment, the first field set in the first DCI is applied to each of the at least one cell.

In an embodiment, the first field set in the first DCI is applied to sending of the PUSCH on each of the at least one cell.

In an embodiment, the first field set in the first DCI is applied to sending of reference signal(s) corresponding to the PUSCH on each of the at least one cell.

In an embodiment, that the first field set in the first DCI is applied to the at least one cell includes: The first field set in the first DCI includes scheduling information for the PUSCH sent on the at least one cell.

In an embodiment, that the first field set in the first DCI is applied to the at least one cell includes: The first field set in the first DCI includes related indication information for the PUSCH sent on all of the at least one cell.

In an embodiment, that the first field set in the first DCI is applied to the at least one cell includes: The first field set in the first DCI includes scheduling information for the PUSCH sent on all of the at least one cell.

In an embodiment, that the first field set in the first DCI is applied to the at least one cell includes: The first field set in the first DCI includes indication information for all of the at least one cell.

In an embodiment, that the first field set in the first DCI is applied to the at least one cell includes: The first field set in the first DCI includes indication information for sending of the PUSCH on the at least one cell.

In an embodiment, that the first field set in the first DCI is applied to the at least one cell includes: Each field in the first field set in the first DCI includes indication information for all of the at least one cell.

In an embodiment, that the first field set in the first DCI is applied to the at least one cell includes: Each field in the first field set in the first DCI includes indication information for the PUSCH sent on all of the at least one cell.

In an embodiment, the indication of each field in the first field set in the first DCI depends on at least one parameter in the first parameter set.

In an embodiment, that the indication of the first field set in the first DCI depends on a first parameter set includes: Indication content of at least one field in the first field set in the first DCI depends on at least one parameter in the first parameter set.

In an embodiment, that the indication of the first field set in the first DCI depends on a first parameter set includes: The indication mode of at least one field in the first field set in the first DCI depends on at least one parameter in the first parameter set.

In an embodiment, that the indication of the first field set in the first DCI depends on a first parameter set includes: A size of at least one field in the first field set in the first DCI depends on at least one parameter in the first parameter set.

In an embodiment, that the indication of the first field set in the first DCI depends on a first parameter set includes: A table on which the indication of at least one field in the first field set in the first DCI is based depends on at least one parameter in the first parameter set.

In an embodiment, that the indication of the first field set in the first DCI depends on a first parameter set includes: One field in the first field set in the first DCI indicates one value in one value range, and at least one parameter in the first parameter set is used for configuring the value range.

In an embodiment, that the indication of the first field set in the first DCI depends on a first parameter set includes: Content indicated by one field in the first field set in the first DCI is indicated by one parameter in the first parameter set.

In an embodiment, the first field set in the first DCI includes all fields in the first DCI.

In an embodiment, the first field set in the first DCI includes only a part of fields in the first DCI.

In an embodiment, the first parameter set includes only one parameter.

In an embodiment, the first parameter set includes multiple parameters.

In an embodiment, that the indication of the first field set in the first DCI depends on a first parameter set includes: A meaning of a bit in at least one field in the first field set in the first DCI depends on at least one parameter in the first parameter set.

In an embodiment, that the indication of the first field set in the first DCI depends on a first parameter set includes: Content indicated by a value of at least one field in the first field set in the first DCI depends on at least one parameter in the first parameter set.

In an embodiment, the relying on the first parameter set includes: being indicated by at least one parameter in the first parameter set or being jointly indicated by multiple parameters including at least one parameter in the first parameter set.

In an embodiment, the relying on the first parameter set includes: being determined based on at least one parameter in the first parameter set.

In an embodiment, the relying on the first parameter set includes: being determined based on configuration information represented by at least one parameter in the first parameter set.

In an embodiment, the relying on the first parameter set includes: being determined based on configuration information included in at least one parameter in the first parameter set.

In an embodiment, the relying on the first parameter set includes: being determined based on configuration information indicated by at least one parameter in the first parameter set.

In an embodiment, the indication of the first field set in the first DCI includes: the indication, for a time domain resource, of at least one field in the first field set in the first DCI.

In an embodiment, the indication of the first field set in the first DCI includes: the indication, for a frequency domain resource, of at least one field in the first field set in the first DCI.

In an embodiment, the indication of the first field set in the first DCI includes: the indication, for whether to perform frequency hopping, of at least one field in the first field set in the first DCI.

In an embodiment, the indication of the first field set in the first DCI includes: the indication, for an MCS, of at least one field in the first field set in the first DCI.

In an embodiment, the indication of the first field set in the first DCI includes: the indication, for a HARQ process number, of at least one field in the first field set in the first DCI.

In an embodiment, the indication of the first field set in the first DCI includes: the indication, for a power control-related parameter for the PUSCH, of at least one field in the first field set in the first DCI.

In an embodiment, the indication of the first field set in the first DCI includes: the indication, for an SRS resource, of at least one field in the first field set in the first DCI.

In an embodiment, the indication of the first field set in the first DCI includes: the indication, for an SRS resource set, of at least one field in the first field set in the first DCI.

In an embodiment, the indication of the first field set in the first DCI includes: the indication, for at least one of precoding information or the number of transmission layers, of at least one field in the first field set in the first DCI.

In an embodiment, the indication of the first field set in the first DCI includes: the indication, for an antenna port, of at least one field in the first field set in the first DCI.

In an embodiment, the indication of the first field set in the first DCI includes: the indication, for related information of the CSI report, of at least one field in the first field set in the first DCI.

In an embodiment, the indication of the first field set in the first DCI includes: the indication, for CBGTI, of at least one field in the first field set in the first DCI.

In an embodiment, the indication of the first field set in the first DCI includes: the indication, for an association between a PTRS and a DMRS, of at least one field in the first field set in the first DCI.

In an embodiment, the indication of the first field set in the first DCI includes: the indication, for a beta_offset value, of at least one field in the first field set in the first DCI.

In an embodiment, the indication of the first field set in the first DCI includes: the indication, for related information for generation of a DMRS sequence, of at least one field in the first field set in the first DCI.

In an embodiment, the indication of the first field set in the first DCI includes: the indication, for SCell dormancy information, of at least one field in the first field set in the first DCI.

In an embodiment, the indication of the first field set in the first DCI includes: the indication, for a sending waveform of the PUSCH, of at least one field in the first field set in the first DCI.

In an embodiment, the indication of the first field set in the first DCI includes: the indication, for whether to enable transform precoding, of at least one field in the first field set in the first DCI.

In an embodiment, one parameter in the first parameter set is a parameter configured by using RRC signaling.

In an embodiment, one parameter in the first parameter set is a parameter configured by using higher layer signaling.

In an embodiment, one parameter in the first parameter set is a configuration status.

In an embodiment, one parameter in the first parameter set represents a configuration status.

In an embodiment, one parameter in the first parameter set includes a configuration status.

In an embodiment, one parameter in the first parameter set is used for indicating a configuration status.

In an embodiment, one parameter in the first parameter set is a configurable value.

In an embodiment, one parameter in the first parameter set is used for indicating a configurable value.

In an embodiment, at least one parameter in the first parameter set represents the number of repetitions for data.

In an embodiment, at least one parameter in the first parameter set represents a transmission scheme for the PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the first parameter set represents a DMRS configuration for PUSCH transmission using a PUSCH mapping type A.

In an embodiment, at least one parameter in the first parameter set represents a DMRS configuration for PUSCH transmission using a PUSCH mapping type B.

In an embodiment, at least one parameter in the first parameter set represents related information of power control for the PUSCH.

In an embodiment, at least one parameter in the first parameter set represents a frequency hopping mode.

In an embodiment, at least one parameter in the first parameter set represents a set of frequency hopping offset(s).

In an embodiment, at least one parameter in the first parameter set represents a resource allocation type.

In an embodiment, at least one parameter in the first parameter set represents a frequency domain resource allocation type.

In an embodiment, at least one parameter in the first parameter set represents a list of time domain allocations for timing of UL assignment to UL data.

In an embodiment, at least one parameter in the first parameter set represents an MCS table used for the PUSCH when there is no transformer precoder.

In an embodiment, at least one parameter in the first parameter set represents an MCS table used for the PUSCH when there is a transformer precoder.

In an embodiment, at least one parameter in the first parameter set represents whether to enable transform precoding.

In an embodiment, at least one parameter in the first parameter set represents a particular selection of a transformer precoder for the PUSCH.

In an embodiment, at least one parameter in the first parameter set represents a subset of precoding matrix indicators (PMIs) addressed by TPMIs.

In an embodiment, at least one parameter in the first parameter set represents a subset of PMIs addressed by TRIs.

In an embodiment, at least one parameter in the first parameter set represents a resource block group (RBG) size selected between a configuration 1 and a configuration 2 for the PUSCH.

In an embodiment, at least one parameter in the first parameter set represents a beta offset set.

In an embodiment, at least one parameter in the first parameter set represents whether to enable pi/2-BPSK modulation with transform precoding.

In an embodiment, at least one parameter in the first parameter set is used for determining the number of repetitions for data.

In an embodiment, at least one parameter in the first parameter set is used for determining a transmission scheme for the PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the first parameter set is used for determining a DMRS configuration for PUSCH transmission using a PUSCH mapping type A.

In an embodiment, at least one parameter in the first parameter set is used for determining a DMRS configuration for PUSCH transmission using a PUSCH mapping type B.

In an embodiment, at least one parameter in the first parameter set is used for determining power control for the PUSCH.

In an embodiment, at least one parameter in the first parameter set is used for determining a frequency hopping mode.

In an embodiment, at least one parameter in the first parameter set is used for determining a set of frequency hopping offset(s).

In an embodiment, at least one parameter in the first parameter set is used for determining a resource allocation type.

In an embodiment, at least one parameter in the first parameter set is used for determining a frequency domain resource allocation type.

In an embodiment, at least one parameter in the first parameter set is used for determining a list of time domain allocations for timing of UL assignment to UL data.

In an embodiment, at least one parameter in the first parameter set is used for determining an MCS table used for the PUSCH when there is no transformer precoder.

In an embodiment, at least one parameter in the first parameter set is used for determining an MCS table used for the PUSCH when there is a transformer precoder.

In an embodiment, at least one parameter in the first parameter set is used for determining whether to enable transform precoding.

In an embodiment, at least one parameter in the first parameter set is used for determining a particular selection of a transformer precoder for the PUSCH.

In an embodiment, at least one parameter in the first parameter set is used for determining a subset of PMIs addressed by TPMIs.

In an embodiment, at least one parameter in the first parameter set is used for determining a subset of PMIs addressed by TRIs.

In an embodiment, at least one parameter in the first parameter set is used for determining an RBG size selected between a configuration 1 and a configuration 2 for the PUSCH.

In an embodiment, at least one parameter in the first parameter set is used for determining a beta offset set.

In an embodiment, at least one parameter in the first parameter set is used for determining whether to enable pi/2-BPSK modulation with transform precoding.

In an embodiment, at least one parameter in the first parameter set is used for indicating the number of repetitions for data.

In an embodiment, at least one parameter in the first parameter set is used for indicating a transmission scheme for the PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the first parameter set is used for indicating a DMRS configuration for PUSCH transmission using a PUSCH mapping type A.

In an embodiment, at least one parameter in the first parameter set is used for indicating a DMRS configuration for PUSCH transmission using a PUSCH mapping type B.

In an embodiment, at least one parameter in the first parameter set is used for indicating power control for the PUSCH.

In an embodiment, at least one parameter in the first parameter set is used for indicating a frequency hopping mode.

In an embodiment, at least one parameter in the first parameter set is used for indicating a set of frequency hopping offset(s).

In an embodiment, at least one parameter in the first parameter set is used for indicating a resource allocation type.

In an embodiment, at least one parameter in the first parameter set is used for indicating a frequency domain resource allocation type.

In an embodiment, at least one parameter in the first parameter set is used for indicating a list of time domain allocations for timing of UL assignment to UL data.

In an embodiment, at least one parameter in the first parameter set is used for indicating an MCS table used for the PUSCH when there is no transformer precoder.

In an embodiment, at least one parameter in the first parameter set is used for indicating an MCS table used for the PUSCH when there is a transformer precoder.

In an embodiment, at least one parameter in the first parameter set is used for indicating whether to enable transform precoding.

In an embodiment, at least one parameter in the first parameter set is used for indicating a particular selection of a transformer precoder for the PUSCH.

In an embodiment, at least one parameter in the first parameter set is used for indicating a subset of PMIs addressed by TPMIs.

In an embodiment, at least one parameter in the first parameter set is used for indicating a subset of PMIs addressed by TRIs.

In an embodiment, at least one parameter in the first parameter set is used for indicating an RBG size selected between a configuration 1 and a configuration 2 for the PUSCH.

In an embodiment, at least one parameter in the first parameter set is used for indicating a beta offset set.

In an embodiment, at least one parameter in the first parameter set is used for indicating whether to enable pi/2-BPSK modulation with transform precoding.

In an embodiment, the first parameter set includes: the number of repetitions for data.

In an embodiment, the first parameter set includes: a transmission scheme for the PUSCH.

In an embodiment, the transmission scheme is one of codebook-based transmission, non-codebook-based transmission, and single-antenna-port transmission.

In an embodiment, the first parameter set includes: a DMRS configuration for PUSCH transmission using a PUSCH mapping type A.

In an embodiment, the first parameter set includes: a DMRS configuration for PUSCH transmission using a PUSCH mapping type B.

In an embodiment, the first parameter set includes: related information of power control for the PUSCH.

In an embodiment, the first parameter set includes: a frequency hopping mode.

In an embodiment, the first parameter set includes: a set of frequency hopping offset(s).

In an embodiment, the first parameter set includes: a resource allocation type.

In an embodiment, the first parameter set includes: a frequency domain resource allocation type.

In an embodiment, the first parameter set includes: a list of time domain allocations for timing of UL assignment to UL data.

In an embodiment, the first parameter set includes: an MCS table used for the PUSCH when there is no transformer precoder.

In an embodiment, the first parameter set includes: an MCS table used for the PUSCH when there is a transformer precoder.

In an embodiment, the first parameter set includes: information about whether to enable transform precoding.

In an embodiment, the first parameter set includes: a particular selection of a transformer precoder for the PUSCH.

In an embodiment, the first parameter set includes: a subset of PMIs addressed by TPMIs.

In an embodiment, the first parameter set includes: a subset of PMIs addressed by TRIs.

In an embodiment, the first parameter set includes: an RBG size selected between a configuration 1 and a configuration 2 for the PUSCH.

In an embodiment, the first parameter set includes: a beta offset set.

In an embodiment, the first parameter set includes: information about whether to enable pi/2-BPSK modulation with transform precoding.

In an embodiment, the first RRC signaling includes pusch-AggregationFactor.

In an embodiment, the first RRC signaling includes txConfig.

In an embodiment, the first RRC signaling includes dmrs-UplinkForPUSCH-MappingTypeA.

In an embodiment, the first RRC signaling includes dmrs-UplinkForPUSCH-MappingTypeB.

In an embodiment, the first RRC signaling includes pusch-PowerControl.

In an embodiment, the first RRC signaling includes frequencyHopping.

In an embodiment, the first RRC signaling includes frequencyHoppingOffsetLists.

In an embodiment, the first RRC signaling includes resourceAllocation.

In an embodiment, the first RRC signaling includes pusch-TimeDomainAllocationList.

In an embodiment, the first RRC signaling includes mcs-Table.

In an embodiment, the first RRC signaling includes mcs-TableTransformPrecoder.

In an embodiment, the first RRC signaling includes transformPrecoder.

In an embodiment, the first RRC signaling includes codebookSubset.

In an embodiment, the first RRC signaling includes maxRank.

In an embodiment, the first RRC signaling includes rbg-Size.

In an embodiment, the first RRC signaling includes uci-OnPUSCH.

In an embodiment, the first RRC signaling includes tp-pi2BPSK.

In an embodiment, the first RRC signaling is pusch-AggregationFactor.

In an embodiment, the first RRC signaling is txConfig.

In an embodiment, the first RRC signaling is dmrs-UplinkForPUSCH-MappingTypeA.

In an embodiment, the first RRC signaling is dmrs-UplinkForPUSCH-MappingTypeB.

In an embodiment, the first RRC signaling is pusch-PowerControl.

In an embodiment, the first RRC signaling is frequencyHopping.

In an embodiment, the first RRC signaling is frequencyHoppingOffsetLists.

In an embodiment, the first RRC signaling is resourceAllocation.

In an embodiment, the first RRC signaling is pusch-TimeDomainAllocationList.

In an embodiment, the first RRC signaling is mcs-Table.

In an embodiment, the first RRC signaling is mcs-TableTransformPrecoder.

In an embodiment, the first RRC signaling is transformPrecoder.

In an embodiment, the first RRC signaling is codebookSubset.

In an embodiment, the first RRC signaling is maxRank.

In an embodiment, the first RRC signaling is rbg-Size.

In an embodiment, the first RRC signaling is uci-OnPUSCH.

In an embodiment, the first RRC signaling is tp-pi2BPSK.

In an embodiment, the name of the first RRC signaling includes pusch-AggregationFactor.

In an embodiment, the name of the first RRC signaling includes pusch-AggregationFactor.

In an embodiment, the name of the first RRC signaling includes txConfig.

In an embodiment, the name of the first RRC signaling includes dmrs-UplinkForPUSCH-MappingTypeA.

In an embodiment, the name of the first RRC signaling includes dmrs-UplinkForPUSCH-MappingTypeB.

In an embodiment, the name of the first RRC signaling includes pusch-PowerControl.

In an embodiment, the name of the first RRC signaling includes frequencyHopping.

In an embodiment, the name of the first RRC signaling includes frequencyHoppingOffsetLists.

In an embodiment, the name of the first RRC signaling includes resourceAllocation.

In an embodiment, the name of the first RRC signaling includes pusch-TimeDomainAllocationList.

In an embodiment, the name of the first RRC signaling includes mcs-Table.

In an embodiment, the name of the first RRC signaling includes mcs-TableTransformPrecoder.

In an embodiment, the name of the first RRC signaling includes transformPrecoder.

In an embodiment, the name of the first RRC signaling includes codebookSubset.

In an embodiment, the name of the first RRC signaling includes maxRank.

In an embodiment, the name of the first RRC signaling includes rbg-Size.

In an embodiment, the name of the first RRC signaling includes uci-OnPUSCH.

In an embodiment, the name of the first RRC signaling includes tp-pi2BPSK.

In an embodiment, a size of a field is the number of bits included in the field.

In an embodiment, the first parameter set includes: whether the Antenna ports field exists.

In an embodiment, the first parameter set includes: whether to enable PUSCH repetitions counted on the basis of available slots.

In an embodiment, the first parameter set includes: a set of beta offsets configured for multiplexing of a HARQ-ACK on PUSCHs with different priorities.

In an embodiment, the first parameter set includes: DMRS bundling information for the PUSCH.

In an embodiment, the first parameter set includes: whether the DMRS Sequence Initialization field exists.

In an embodiment, the first parameter set includes: a size of the HARQ process number field.

In an embodiment, the first parameter set includes: a pattern for an invalid symbol for a PUSCH transmission type B.

In an embodiment, the first parameter set includes: whether a cyclical mapping pattern or a sequential mapping pattern should be followed when two SRS resource sets are configured for PUSCH transmission and PUSCH transmission occasions are associated with the two SRS resource sets.

In an embodiment, the first parameter set includes: a list of minimum K2 values.

In an embodiment, the first parameter set includes: a size of a Redundancy version field.

In an embodiment, the first parameter set includes: the number of symbols after the last semi-static downlink (DL) symbol that are invalid for a PUSCH repetition type B.

In an embodiment, the first parameter set includes: whether a priority indicator field exists.

In an embodiment, the first parameter set includes: whether to follow a behavior for a PUSCH repetition type A or a behavior for a PUSCH repetition type B.

In an embodiment, the first parameter set includes: whether a second TPC field exists.

In an embodiment, the first parameter set includes: an RV offset configured for a starting RV for the first repetition (first actual repetition in a PUSCH repetition type B) towards the second SRS resource set for the PUSCH.

In an embodiment, the first parameter set includes: a list of combinations of cyclic prefix extension, a channel access priority class (CAPC), and an uplink (UL) channel access type.

In an embodiment, the first parameter set includes: a UL full power transmission mode.

In an embodiment, the first parameter set includes: a scheduling granularity applicable to a starting point indication and a length indication for a resource allocation type 1.

In an embodiment, at least one parameter in the first parameter set is used for indicating whether the Antenna ports field exists.

In an embodiment, at least one parameter in the first parameter set is used for indicating whether to enable PUSCH repetitions counted on the basis of available slots.

In an embodiment, at least one parameter in the first parameter set is used for indicating a set of beta offsets configured for multiplexing of a HARQ-ACK on PUSCHs with different priorities.

In an embodiment, at least one parameter in the first parameter set is used for indicating DMRS bundling information for the PUSCH.

In an embodiment, at least one parameter in the first parameter set is used for indicating whether the DMRS Sequence Initialization field exists.

In an embodiment, at least one parameter in the first parameter set is used for indicating a size of the HARQ process number field.

In an embodiment, at least one parameter in the first parameter set is used for indicating a pattern for an invalid symbol for a PUSCH transmission type B.

In an embodiment, at least one parameter in the first parameter set is used for indicating: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the first parameter set is used for indicating a list of minimum K2 values.

In an embodiment, at least one parameter in the first parameter set is used for indicating a size of a Redundancy version field.

In an embodiment, at least one parameter in the first parameter set is used for indicating the number of symbols after the last semi-static DL symbol that are invalid for a PUSCH repetition type B.

In an embodiment, at least one parameter in the first parameter set is used for indicating whether a priority indicator field exists.

In an embodiment, at least one parameter in the first parameter set is used for indicating whether to follow a behavior for a PUSCH repetition type A or a behavior for a PUSCH repetition type B.

In an embodiment, at least one parameter in the first parameter set is used for indicating whether a second TPC field exists.

In an embodiment, at least one parameter in the first parameter set is used for indicating an RV offset configured for a starting RV for the first repetition (first actual repetition in a PUSCH repetition type B) towards the second SRS resource set for the PUSCH.

In an embodiment, at least one parameter in the first parameter set is used for indicating a list of combinations of cyclic prefix extension, a CAPC, and a UL channel access type.

In an embodiment, at least one parameter in the first parameter set is used for indicating a UL full power transmission mode.

In an embodiment, at least one parameter in the first parameter set is used for indicating a scheduling granularity applicable to a starting point indication and a length indication for a resource allocation type 1.

In an embodiment, at least one parameter in the first parameter set is used for determining whether the Antenna ports field exists.

In an embodiment, at least one parameter in the first parameter set is used for determining whether to enable PUSCH repetitions counted on the basis of available slots.

In an embodiment, at least one parameter in the first parameter set is used for determining a set of beta offsets configured for multiplexing of a HARQ-ACK on PUSCHs with different priorities.

In an embodiment, at least one parameter in the first parameter set is used for determining DMRS bundling information for the PUSCH.

In an embodiment, at least one parameter in the first parameter set is used for determining whether the DMRS Sequence Initialization field exists.

In an embodiment, at least one parameter in the first parameter set is used for determining a size of the HARQ process number field.

In an embodiment, at least one parameter in the first parameter set is used for determining a pattern for an invalid symbol for a PUSCH transmission type B.

In an embodiment, at least one parameter in the first parameter set is used for determining: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the first parameter set is used for determining a list of minimum K2 values.

In an embodiment, at least one parameter in the first parameter set is used for determining a size of a Redundancy version field.

In an embodiment, at least one parameter in the first parameter set is used for determining the number of symbols after the last semi-static DL symbol that are invalid for a PUSCH repetition type B.

In an embodiment, at least one parameter in the first parameter set is used for determining whether a priority indicator field exists.

In an embodiment, at least one parameter in the first parameter set is used for determining whether to follow a behavior for a PUSCH repetition type A or a behavior for a PUSCH repetition type B.

In an embodiment, at least one parameter in the first parameter set is used for determining whether a second TPC field exists.

In an embodiment, at least one parameter in the first parameter set is used for determining an RV offset configured for a starting RV for the first repetition (first actual repetition in a PUSCH repetition type B) towards the second SRS resource set for the PUSCH.

In an embodiment, at least one parameter in the first parameter set is used for determining a list of combinations of cyclic prefix extension, a CAPC, and a UL channel access type.

In an embodiment, at least one parameter in the first parameter set is used for determining a UL full power transmission mode.

In an embodiment, at least one parameter in the first parameter set is used for determining a scheduling granularity applicable to a starting point indication and a length indication for a resource allocation type 1.

In an embodiment, at least one parameter in the first parameter set represents whether the Antenna ports field exists.

In an embodiment, at least one parameter in the first parameter set represents whether to enable PUSCH repetitions counted on the basis of available slots.

In an embodiment, at least one parameter in the first parameter set represents a set of beta offsets configured for multiplexing of a HARQ-ACK on PUSCHs with different priorities.

In an embodiment, at least one parameter in the first parameter set represents DMRS bundling information for the PUSCH.

In an embodiment, at least one parameter in the first parameter set represents whether the DMRS Sequence Initialization field exists.

In an embodiment, at least one parameter in the first parameter set represents a size of the HARQ process number field.

In an embodiment, at least one parameter in the first parameter set represents a pattern for an invalid symbol for a PUSCH transmission type B.

In an embodiment, at least one parameter in the first parameter set represents: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the first parameter set represents a list of minimum K2 values.

In an embodiment, at least one parameter in the first parameter set represents a size of a Redundancy version field.

In an embodiment, at least one parameter in the first parameter set represents the number of symbols after the last semi-static DL symbol that are invalid for a PUSCH repetition type B.

In an embodiment, at least one parameter in the first parameter set represents whether a priority indicator field exists.

In an embodiment, at least one parameter in the first parameter set represents whether to follow a behavior for a PUSCH repetition type A or a behavior for a PUSCH repetition type B.

In an embodiment, at least one parameter in the first parameter set represents whether a second TPC field exists.

In an embodiment, at least one parameter in the first parameter set represents an RV offset configured for a starting RV for the first repetition (first actual repetition in a PUSCH repetition type B) towards the second SRS resource set for the PUSCH.

In an embodiment, at least one parameter in the first parameter set represents a list of combinations of cyclic prefix extension, a CAPC, and a UL channel access type.

In an embodiment, at least one parameter in the first parameter set represents a UL full power transmission mode.

In an embodiment, at least one parameter in the first parameter set represents a scheduling granularity applicable to a starting point indication and a length indication for a resource allocation type 1.

In an embodiment, the name of the first RRC signaling includes minimumSchedulingOffsetK2.

In an embodiment, the name of the first RRC signaling includes ul-AccessConfigList.

In an embodiment, the name of the first RRC signaling includes harq-ProcessNumberSize.

In an embodiment, the name of the first RRC signaling includes dmrs-SequenceInitialization.

In an embodiment, the name of the first RRC signaling includes numberOfBitsForRV.

In an embodiment, the name of the first RRC signaling includes antennaPortsFieldPresence.

In an embodiment, the name of the first RRC signaling includes invalidSymbolPatternIndicator.

In an embodiment, the name of the first RRC signaling includes priorityIndicator.

In an embodiment, the name of the first RRC signaling includes pusch-RepTypeIndicator.

In an embodiment, the name of the first RRC signaling includes resourceAllocationType1Granularity.

In an embodiment, the name of the first RRC signaling includes ul-FullPowerTransmission.

In an embodiment, the name of the first RRC signaling includes numberOfInvalidSymbolsForDL-UL-Switching.

In an embodiment, the name of the first RRC signaling includes betaOffsetsCrossPri0.

In an embodiment, the name of the first RRC signaling includes betaOffsetsCrossPri1.

In an embodiment, the name of the first RRC signaling includes mappingPattern.

In an embodiment, the name of the first RRC signaling includes secondTPCField.

In an embodiment, the name of the first RRC signaling includes sequenceOffsetForRV

In an embodiment, the name of the first RRC signaling includes availableSlotCounting.

In an embodiment, the name of the first RRC signaling includes dmrs-BundlingPUSCH-Config.

In an embodiment, that the first parameter set uses the configuration of the first RRC signaling includes: Each parameter in the first parameter set uses the configuration of the first RRC signaling.

In an embodiment, that the first parameter set uses the configuration of the first RRC signaling includes: The configuration of the first RRC signaling is used for determining the first parameter set.

In an embodiment, that the first parameter set uses the configuration of the first RRC signaling includes: The configuration of the first RRC signaling is used for indicating the first parameter set.

In an embodiment, that the first parameter set uses the configuration of the first RRC signaling includes: The configuration of the first RRC signaling is used for determining each parameter in the first parameter set.

In an embodiment, that the first parameter set uses the configuration of the first RRC signaling includes: The configuration of the first RRC signaling is used for indicating each parameter in the first parameter set.

In an embodiment, that the first parameter set uses the configuration of the first RRC signaling includes: For each parameter in the first parameter set: at least one field in the first RRC signaling is used for determining the parameter, or there is one field, in the first RRC signaling, that is used for determining the parameter.

In an embodiment, that the first parameter set uses the configuration of the first RRC signaling includes: For each parameter in the first parameter set: at least one field in the first RRC signaling is used for indicating the parameter, or there is one field, in the first RRC signaling, that is used for indicating the parameter.

In an embodiment, that at least a part of parameters in the first parameter set do not use the configuration of the first RRC signaling includes: None of parameters in the first parameter set uses the configuration of the first RRC signaling.

In an embodiment, that at least a part of parameters in the first parameter set do not use the configuration of the first RRC signaling includes: The at least a part of parameters in the first parameter set use a configuration of RRC signaling other than the first RRC signaling in the first RRC signaling set, or the at least a part of parameters in the first parameter set are default.

In an embodiment, that at least a part of parameters in the first parameter set do not use the configuration of the first RRC signaling includes: The at least a part of parameters in the first parameter set use a configuration of RRC signaling other than the first RRC signaling in the first RRC signaling set.

In an embodiment, that at least a part of parameters in the first parameter set do not use the configuration of the first RRC signaling includes: The at least a part of parameters in the first parameter set are default.

In an embodiment, that at least a part of parameters in the first parameter set do not use the configuration of the first RRC signaling includes: The first parameter set includes a first parameter subset, and the first parameter subset is default.

In an embodiment, that at least a part of parameters in the first parameter set do not use the configuration of the first RRC signaling includes:
The first RRC signaling set includes second RRC signaling, and the second RRC signaling is not configured for the first cell; and the first parameter set includes a second parameter subset, and the second parameter subset uses a configuration of the second RRC signaling.

In an embodiment, that at least a part of parameters in the first parameter set do not use the configuration of the first RRC signaling includes:
The first RRC signaling set includes a target RRC signaling subset, all pieces of signaling in the target RRC signaling subset are configured for the first cell, and the first RRC signaling is one of the multiple pieces of RRC signaling included in the target RRC signaling subset; and the first parameter set includes a third parameter subset, and the third parameter subset uses a configuration of one piece of RRC signaling other than the first RRC signaling in the target RRC signaling subset.

In an embodiment, that at least a part of parameters in the first parameter set do not use the configuration of the first RRC signaling includes:
The first parameter set includes a third parameter subset, and the third parameter subset satisfies one of the following: {the first RRC signaling set includes a target RRC signaling subset, all pieces of signaling in the target RRC signaling subset are configured for the first cell, the first RRC signaling is one of the multiple pieces of RRC signaling included in the target RRC signaling subset, and the third parameter subset uses a configuration of one piece of RRC signaling other than the first RRC signaling in the target RRC signaling subset; or the third parameter subset is default}.

In an embodiment, "at least a part of parameters in the first parameter set do not use the configuration of the first RRC signaling when the number of cells included in the at least one cell is greater than 1" includes:
When the number of cells included in the at least one cell is greater than 1: the at least a part of parameters in the first parameter set do not use the configuration of the first RRC signaling only when the first cell is not a first reference cell, where the first reference cell is a cell other than the first cell in the at least one cell, and the first DCI is used for determining the first reference cell; the first reference cell is configured by using higher layer signaling; or the first reference cell is default.

In an embodiment, when the number of cells included in the at least one cell is greater than 1: the at least a part of parameters in the first parameter set do not use the configuration of the first RRC signaling only when the first cell is not a first reference cell, where the first reference cell is a cell other than the first cell in the at least one cell, and the first DCI is used for determining the first reference cell; the first reference cell is configured by using higher layer signaling; or the first reference cell is default.

In an embodiment, when the number of cells included in the at least one cell is greater than 1: the first parameter set uses the configuration of the first RRC signaling when the first cell is the first reference cell.

In an embodiment, the higher layer signaling includes RRC signaling.

In an embodiment, the higher layer signaling includes Medium Access Control control element (MAC CE) signaling.

In an embodiment, when the number of cells included in the at least one cell is greater than 1: at least one parameter in the first parameter set uses the configuration of the first RRC signaling.

In an embodiment, when the number of cells included in the at least one cell is greater than 1: none of parameters in the first parameter set uses the configuration of the first RRC signaling.

In an embodiment, the first RRC signaling is PUSCH-Config.

In an embodiment, the first RRC signaling includes PUSCH-Config.

In an embodiment, the first RRC signaling includes configuration information for the PUSCH.

In an embodiment, the first RRC signaling is PUSCH-ConfigCommon or PUSCH-ServingCellConfig.

In an embodiment, the first RRC signaling is PUSCH-ConfigCommon.

In an embodiment, the first RRC signaling is PUSCH-ServingCellConfig.

In an embodiment, the first RRC signaling includes at least one of PUSCH-ConfigCommon and PUSCH-ServingCellConfig.

In an embodiment, at least one parameter in the first parameter set represents the maximum number of CBGs of each TB.

In an embodiment, at least one parameter in the first parameter set represents whether to enable CBG-based transmission.

In an embodiment, at least one parameter in the first parameter set represents the maximum number of multiple-input multiple-output (MIMO) layers for the PUSCH in all UL bandwidth parts (BWPs) corresponding to the cell.

In an embodiment, at least one parameter in the first parameter set represents the number of HARQ processes used on the PUSCH of the cell.

In an embodiment, at least one parameter in the first parameter set represents whether to enable a configuration of an advanced processing time capability 2 for the PUSCH.

In an embodiment, at least one parameter in the first parameter set represents whether to enable limited buffer rate-matching (LBRM).

In an embodiment, at least one parameter in the first parameter set represents a HARQ mode for a HARQ process ID.

In an embodiment, at least one parameter in the first parameter set represents whether to enable group hopping for RMRS transmission with transform precoding.

In an embodiment, at least one parameter in the first parameter set represents a power offset between transmission of a msg3 and a random access channel (RACH) preamble.

In an embodiment, at least one parameter in the first parameter set represents a P0 value of a PUSCH with a grant (other than a msg3).

In an embodiment, at least one parameter in the first parameter set is used for determining the maximum number of CBGs of each TB.

In an embodiment, at least one parameter in the first parameter set is used for determining whether to enable CBG-based transmission.

In an embodiment, at least one parameter in the first parameter set is used for determining the maximum number of MIMO layers for the PUSCH in all UL BWPs corresponding to the cell.

In an embodiment, at least one parameter in the first parameter set is used for determining the number of HARQ processes used on the PUSCH of the cell.

In an embodiment, at least one parameter in the first parameter set is used for determining whether to enable a configuration of an advanced processing time capability 2 for the PUSCH.

In an embodiment, at least one parameter in the first parameter set is used for determining whether to enable LBRM.

In an embodiment, at least one parameter in the first parameter set is used for determining a HARQ mode for a HARQ process ID.

In an embodiment, at least one parameter in the first parameter set is used for determining whether to enable group hopping for RMRS transmission with transform precoding.

In an embodiment, at least one parameter in the first parameter set is used for determining a power offset between transmission of a msg3 and a RACH preamble.

In an embodiment, at least one parameter in the first parameter set is used for determining a P0 value of a PUSCH with a grant (other than a msg3).

In an embodiment, at least one parameter in the first parameter set is used for indicating the maximum number of CBGs of each TB.

In an embodiment, at least one parameter in the first parameter set is used for indicating whether to enable CBG-based transmission.

In an embodiment, at least one parameter in the first parameter set is used for indicating the maximum number of MIMO layers for the PUSCH in all UL BWPs corresponding to the cell.

In an embodiment, at least one parameter in the first parameter set is used for indicating the number of HARQ processes used on the PUSCH of the cell.

In an embodiment, at least one parameter in the first parameter set is used for indicating whether to enable a configuration of an advanced processing time capability 2 for the PUSCH.

In an embodiment, at least one parameter in the first parameter set is used for indicating whether to enable LBRM.

In an embodiment, at least one parameter in the first parameter set is used for indicating a HARQ mode for a HARQ process ID.

In an embodiment, at least one parameter in the first parameter set is used for indicating whether to enable group hopping for RMRS transmission with transform precoding.

In an embodiment, at least one parameter in the first parameter set is used for indicating a power offset between transmission of a msg3 and a RACH preamble.

In an embodiment, at least one parameter in the first parameter set is used for indicating a P0 value of a PUSCH with a grant (other than a msg3).

In an embodiment, the first parameter set includes: the maximum number of CBGs of each TB.

In an embodiment, the first parameter set includes: whether to enable CBG-based transmission.

In an embodiment, the first parameter set includes: the maximum number of MIMO layers for the PUSCH in all UL BWPs corresponding to the cell.

In an embodiment, the first parameter set includes: the number of HARQ processes used on the PUSCH of the cell.

In an embodiment, the first parameter set includes: whether to enable a configuration of an advanced processing time capability 2 for the PUSCH.

In an embodiment, the first parameter set includes: whether to enable LBRM.

In an embodiment, the first parameter set includes: a HARQ mode for a HARQ process ID.

In an embodiment, the first parameter set includes: whether to enable group hopping for RMRS transmission with transform precoding.

In an embodiment, the first parameter set includes: a power offset between transmission of a msg3 and a RACH preamble.

In an embodiment, the first parameter set includes: a P0 value of a PUSCH with a grant (other than a msg3).

In an embodiment, the first RRC signaling is codeBlockGroupTransmission.

In an embodiment, the first RRC signaling is rateMatching.

In an embodiment, the first RRC signaling is xOverhead.

In an embodiment, the first RRC signaling is maxMIMO-Layers.

In an embodiment, the first RRC signaling is processingType2Enabled.

In an embodiment, the first RRC signaling is nrofHARQ-ProcessesForPUSCH-r17.

In an embodiment, the first RRC signaling is uplinkHARQ-mode-r17.

In an embodiment, the first RRC signaling is groupHoppingEnabledTransformPrecoding.

In an embodiment, the first RRC signaling is msg3-DeltaPreamble.

In an embodiment, the first RRC signaling is p0-NominalWithGrant.

In an embodiment, the name of the first RRC signaling includes codeBlockGroupTransmission.

In an embodiment, the name of the first RRC signaling includes rateMatching.

In an embodiment, the name of the first RRC signaling includes xOverhead.

In an embodiment, the name of the first RRC signaling includes maxMIMO-Layers.

In an embodiment, the name of the first RRC signaling includes processingType2Enabled.

In an embodiment, the name of the first RRC signaling includes nrofHARQ-ProcessesForPUSCH.

In an embodiment, the name of the first RRC signaling includes uplinkHARQ-mode.

In an embodiment, the name of the first RRC signaling includes groupHoppingEnabledTransformPrecoding.

In an embodiment, the name of the first RRC signaling includes msg3-DeltaPreamble.

In an embodiment, the name of the first RRC signaling includes p0-NominalWithGrant.

In an embodiment, one parameter in the first parameter set is a parameter indicated by one piece of RRC signaling or is default.

In an embodiment, one parameter in the first parameter set is a parameter indicated by one piece of RRC signaling.

In an embodiment, the first cell is a cell with a largest cell index in the at least one cell.

In an embodiment, the first cell is a cell with a smallest cell index in the at least one cell.

In an embodiment, the first cell is a cell with a largest cell identifier (ID) in the at least one cell.

In an embodiment, the first cell is a cell with a smallest cell ID in the at least one cell.

### Embodiment 2

Embodiment 2 illustrates a diagram of a network architecture according to this application, as shown in FIG. 2.

FIG. 2 is a diagram of a network architecture 200 of a 5G NR system, a long-term evolution (LTE) system, and a long-term evolution advanced (LTE-A) system. The 5G NR or LTE network architecture 200 may be referred to as an evolved packet system (EPS) 200 or another suitable term. The EPS 200 may include one or more user equipments (UEs) 201, a next generation radio access network (NG-RAN) 202, an evolved packet core (EPC)/5G-core network (5G-CN) 210, a home subscriber server (HSS) 220, and an Internet service 230. The EPS may be interconnected with other access networks, but these entities/interfaces are not presented for brevity. As shown in the figure, the EPS provides a packet-switched service. However, a person skilled in the art easily understands that various concepts presented throughout this application may be extended to a network providing a circuit-switched service or another cellular network. The NG-RAN includes an NR NodeB (gNB) 203 and another gNB 204. The gNB 203 provides user-plane and control-plane protocol termination towards the UE 201. The gNB 203 may be connected to the another gNB 204 through an Xn interface (for example, backhaul). The gNB 203 may also be referred to as a base station, a base transceiver station, a radio base station, a radio transceiver, a transceiver function, a basic service set (BSS), an extended service set (ESS), a transmission reception point (TRP), or another suitable term. The gNB 203 provides an access point to the EPC/5G-CN 210 for the UE 201. Examples of the UE 201 include a cellular phone, a smartphone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrowband Internet of Things device, a machine type communication device, a land vehicle, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The gNB 203 is connected to the EPC/5G-CN 210 through an S1/NG interface. The EPC/5G-CN 210 includes a mobility management entity (MME)/authentication management field (AMF)/user plane function (UPF) 211, another MM/AMF/UPF 214, a service gateway (S-GW) 212, and a packet data network gateway (P-GW) 213. The MME/AMF/UPF 211 is a control node for processing signaling between the UE 201 and the EPC/5G-CN 210. Generally, the MME/AMF/UPF 211 provides bearer and connection management. All user Internet Protocol (IP) packets are delivered through the S-GW 212, and the S-GW 212 is connected to the P-GW 213. The P-GW 213 provides UE IP address assignment and other functions. The P-GW 213 is connected to the Internet service 230. The Internet service 230 includes Internet Protocol services corresponding to an operator, and may specifically include an Internet service, an intranet service, an IP multimedia subsystem (IMS) service, and a packet-switched streaming service.

In an embodiment, the UE 201 corresponds to the first node in this application.

In an embodiment, the UE 201 is a device that supports scheduling PUSCHs on multiple cells by using one piece of DCI.

In an embodiment, the UE 201 corresponds to the second node in this application.

In an embodiment, the gNB 203 corresponds to the first node in this application.

In an embodiment, the gNB 203 corresponds to the second node in this application.

In an embodiment, the UE 201 corresponds to the first node in this application, and the gNB 203 corresponds to the second node in this application.

In an embodiment, the gNB 203 is a macrocellular base station.

In an embodiment, the gNB 203 is a micro-cell base station.

In an embodiment, the gNB 203 is a picocell base station.

In an embodiment, the gNB 203 is a femtocell.

In an embodiment, the gNB 203 is a base station device that supports a large delay difference.

In an embodiment, the gNB 203 is a flight platform device.

In an embodiment, the gNB 203 is a satellite device.

In an embodiment, the first node and the second node in this application both correspond to the UE 201. For example, the first node and the second node perform V2X communication with each other.

### Embodiment 3

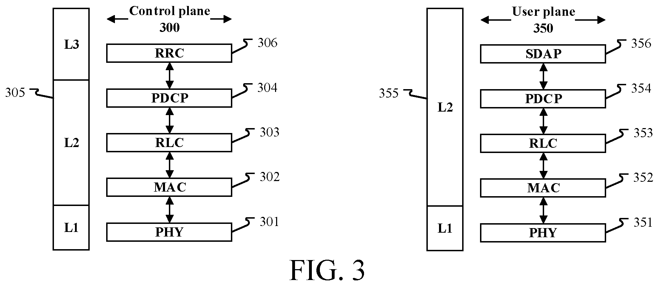

Embodiment 3 illustrates a diagram of an embodiment of radio protocol architectures for a user plane and a control plane according to this application, as shown in FIG. 3. FIG. 3 is a diagram for describing the embodiment of the radio protocol architectures for the user plane 350 and the control plane 300. FIG. 3 shows the radio protocol architecture for the control plane 300 between a first communication node device (a UE, a gNB, or an RSU in V2X) and a second communication node device (a gNB, a UE, or an RSU in V2X) or between two UEs by using three layers: a layer (L1) 1, a layer 2 (L2), and a layer 3 (L3). The L1 is a lowest layer and implements various physical layer (PHY) signal processing functions. The L1 is referred to as a PHY 301 in this specification. The L2 305 is above the PHY 301, and is responsible for links between the first communication node device and the second communication node device and between the two UEs through the PHY 301. The L2 305 includes a Medium Access Control (MAC) sublayer 302, a Radio Link Control (RLC) sublayer 303, and a Packet Data Convergence Protocol (PDCP) sublayer 304, and these sublayers are terminated at the second communication node device. The PDCP sublayer 304 provides multiplexing between different radio bearers and a logical channel. The PDCP sublayer 304 further provides security by encrypting a data packet, and provides cross-regional movement support for the first communication node device between second communication node devices. The RLC sublayer 303 provides segmentation and reassembly of an upper-layer data packet, retransmission of a lost data packet, and reordering of data packets to compensate for unordered reception caused by HARQ. The MAC sublayer 302 provides multiplexing between a logic channel and a transport channel. The MAC sublayer 302 is further responsible for allocating, between first communication node devices, various radio resources (for example, resource blocks) on a cell. The MAC sublayer 302 is further responsible for a HARQ operation. A Radio Resource Control (RRC) sublayer 306 in the L3 in the control plane 300 is responsible for obtaining a radio resource (namely, a radio bearer) and configuring a lower layer by using RRC signaling between the second communication node device and the first communication node device. The radio protocol architecture for the user plane 350 includes an L1 and an L2. A physical layer 351, a PDCP sublayer 354 in the L2 355, an RLC sublayer 353 in the L2 355, and a MAC sublayer 352 in the L2 355 in the radio protocol architecture for the first communication node device and the second communication node device in the user plane 350 are basically the same as corresponding layers and sublayers in the control plane 300. However, the PDCP sublayer 354 further provides header compression for an upper layer data packet to reduce radio transmission overheads. The L2 355 in the user plane 350 further includes a Service Data Adaptation Protocol (SDAP) sublayer 356. The SDAP sublayer 356 is responsible for mapping between a QoS flow and a data radio bearer (DRB), to support diversity of services. Although not shown in the figure, the first communication node device may have several upper layers above the L2 355, including a network layer (for example, an IP layer) terminated at a P-GW on a network side and an application layer terminated at the other end (for example, a remote UE or a server) of a connection.

In an embodiment, the radio protocol architecture in FIG. 3 is applicable to the first node in this application.

In an embodiment, the radio protocol architecture in FIG. 3 is applicable to the second node in this application.

In an embodiment, RRC signaling in the first RRC signaling set in this application is generated at the RRC sublayer 306.

In an embodiment, the first DCI in this application is generated at the PHY 301.

In an embodiment, the PUSCH in this application is generated at the PHY 301.

In an embodiment, the PUSCH in this application is generated at the PHY 351.

### Embodiment 4

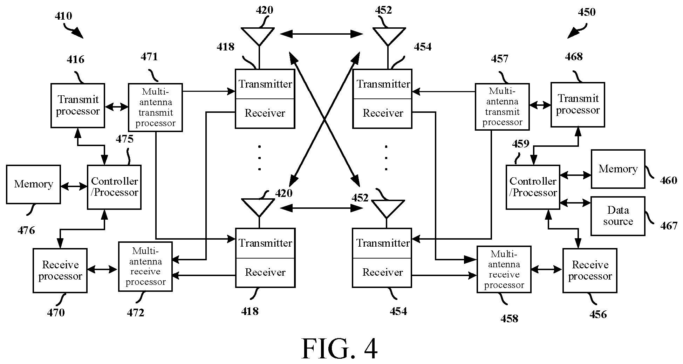

Embodiment 4 illustrates a diagram of a first communication device and a second communication device according to this application, as shown in FIG. 4. FIG. 4 is a block diagram of the first communication device 410 and the second communication device 450 that communicate with each other in an access network.

The first communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

The second communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

During transmission from the first communication device 410 to the second communication device 450, at the first communication device 410, an upper layer data packet from a core network is provided to the controller/processor 475. The controller/processor 475 implements L2 functionality. During the transmission from the first communication device 410 to the first communication device 450, the controller/processor 475 provides header compression, encryption, packet segmentation and reordering, multiplexing between a logical channel and a transport channel, and radio resource allocation to the second communication device 450 based on various priority measures. The controller/processor 475 is further responsible for retransmission of a lost packet and signaling oriented to the second communication device 450. The transmit processor 416 and the multi-antenna transmit processor 471 implement various signal processing functions for an L1 (namely, a physical layer). The transmit processor 416 implements encoding and interleaving to promote forward error correction (FEC) at the second communication device 450 and signal cluster mapping to be performed based on various modulation schemes (for example, binary phase shift keying (BPSK), orthogonal phase shift keying (QPSK), M-phase shift keying (M-PSK), and M-orthogonal amplitude modulation (M-QAM)). The multi-antenna transmit processor 471 performs digital spatial precoding on encoded and modulated symbols, to generate one or more spatial streams, where the precoding includes codebook-based precoding, non-codebook-based precoding, and beamforming processing. Then, the transmit processor 416 maps each spatial stream to a subcarrier, multiplexes the subcarrier with a reference signal (for example, a pilot) in time domain and/or frequency domain, and performs an inverse fast Fourier transform (IFFT) to generate a physical channel carrying a time domain multi-carrier symbol stream. Subsequently, the multi-antenna transmit processor 471 performs a transmit analog precoding/beamforming operation on the time domain multi-carrier symbol stream. Each transmitter 418 converts, into a radio frequency stream, a baseband multi-carrier symbol stream provided by the multi-antenna transmit processor 471, and then provides the radio frequency stream to different antennas 420.

During the transmission from the first communication device 410 to the second communication device 450, at the second communication device 450, each receiver 454 receives a signal through an antenna 452 corresponding to the receiver. Each receiver 454 recovers information modulated onto a radio frequency carrier, converts a radio frequency stream into a baseband multi-carrier symbol stream, and provides the baseband multi-carrier symbol stream to the receive processor 456. The receive processor 456 and the multi-antenna receive processor 458 implement various signal processing functions for an L1. The multi-antenna receive processor 458 performs a receive analog precoding/beamforming operation on the baseband multi-carrier symbol stream from the receiver 454. The receive processor 456 converts, from time domain to frequency domain through a fast Fourier transform (FFT), the baseband multi-carrier symbol stream on which the receive analog precoding/beamforming operation has been performed. In frequency domain, a physical layer data signal and a reference signal are demultiplexed by the receive processor 456, where the reference signal is used for channel estimation, and any spatial stream destined for the second communication device 450 is recovered in the multi-antenna receive processor 458 through multi-antenna detection on the data signal. A symbol in each spatial stream is demodulated and recovered in the receive processor 456, and a soft decision is generated. Subsequently, the receive processor 456 decodes and deinterleaves the soft decision to recover upper layer data and a control signal on a physical channel that are transmitted by the first communication device 410. Then, the upper layer data and the control signal are provided to the controller/processor 459. The controller/processor 459 implements L2 functions. The controller/processor 459 may be associated with the memory 460 that stores program code and data. The memory 460 may be referred to as a computer-readable medium. During the transmission from the first communication device 410 to the second communication device 450, the controller/processor 459 provides demultiplexing between a transport channel and a logical channel, packet reassembly, decryption, header decompression, and control signal processing, to recover the upper layer data packet from the core network. Next, the upper layer data packet is provided to all protocol layers above an L2. Various control signals may also be provided to an L3 for L3 processing.

During transmission from the second communication device 450 to the first communication device 410, at the second communication device 450, the data source 467 provides an upper layer data packet to the controller/processor 459. The data source 467 represents all the protocol layers above the L2. The controller/processor 459 implements header compression, encryption, packet segmentation and reordering, and multiplexing between a logical channel and a transport channel based on radio resource allocation, to implement L2 functions for a user plane and a control plane. This is similar to the sending function at the first communication device 410 during the transmission from the first communication device 410 to the second communication device 450. The controller/processor 459 is further responsible for retransmission of a lost packet and signaling oriented to the first communication device 410. The transmit processor 468 performs modulation mapping and channel coding. The multi-antenna transmit processor 457 performs digital multi-antenna spatial precoding and beamforming, where the precoding includes codebook-based precoding and non-codebook-based precoding. Subsequently, the transmit processor 468 modulates a generated spatial stream into a multi-carrier/single-carrier symbol stream, and the multi-carrier/single-carrier symbol stream is provided by the transmitter 454 to different antennas 452 after an analog precoding/beamforming operation is performed in the multi-antenna transmit processor 457. Each transmitter 454 first converts, into a radio frequency symbol stream, a baseband symbol stream provided by the multi-antenna transmit processor 457, and then provides the radio frequency symbol stream to the antenna 452.

During the transmission from the second communication device 450 to the first communication device 410, a function at the first communication device 410 is similar to the described receiving function at the second communication device 450 during the transmission from the first communication device 410 to the second communication device 450. Each receiver 418 receives a radio frequency signal through an antenna 420 corresponding to the receiver, converts the received radio frequency signal into a baseband signal, and provides the baseband signal to the multi-antenna receive processor 472 and the receive processor 470. The receive processor 470 and the multi-antenna receive processor 472 jointly implement a function at the L1. The controller/processor 475 implements an L2 function. The controller/processor 475 may be associated with the memory 476 that stores program code and data. The memory 476 may be referred to as a computer-readable medium. During the transmission from the second communication device 450 to the first communication device 410, the controller/processor 475 provides demultiplexing between a transport channel and a logical channel, packet reassembly, decryption, header decompression, and control signal processing, to recover the upper layer data packet from the UE 450. The upper layer data packet from the controller/processor 475 may be provided to the core network.

In an embodiment, the first node in this application includes the second communication device 450, and the second node in this application includes the first communication device 410.

In a sub-embodiment of the foregoing embodiment, the first node is a UE, and the second node is a UE.

In a sub-embodiment of the foregoing embodiment, the first node is a UE, and the second node is a relay node.

In a sub-embodiment of the foregoing embodiment, the first node is a relay node, and the second node is a UE.

In a sub-embodiment of the foregoing embodiment, the first node is a UE, and the second node is a base station device.

In a sub-embodiment of the foregoing embodiment, the first node is a relay node, and the second node is a base station device.

In a sub-embodiment of the foregoing embodiment, the second node is a UE, and the first node is a base station device.

In a sub-embodiment of the foregoing embodiment, the second node is a relay node, and the first node is a base station device.

In a sub-embodiment of the foregoing embodiment, the second communication device 450 includes: at least one controller/processor. The at least one controller/processor is responsible for a HARQ operation.

In a sub-embodiment of the foregoing embodiment, the first communication device 410 includes: at least one controller/processor. The at least one controller/processor is responsible for a HARQ operation.

In a sub-embodiment of the foregoing embodiment, the first communication device 410 includes: at least one controller/processor. The at least one controller/processor is responsible for performing error detection by using an acknowledgment (ACK) and/or negative acknowledgment (NACK) protocol to support a HARQ operation.

In an embodiment, the second communication device 450 includes: at least one processor and at least one memory, where the at least one memory includes computer program code. The at least one memory and the computer program code are configured to be jointly used with the at least one processor. An apparatus in the second communication device 450 at least receives a first RRC signaling set, where the first RRC signaling set includes first RRC signaling, and the first RRC signaling is configured for a first cell; receives first DCI, where the first DCI is used for scheduling a PUSCH on at least one cell, and the first cell is one of the at least one cell; and sends the PUSCH on each of the at least one cell, where a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In a sub-embodiment of the foregoing embodiment, the second communication device 450 corresponds to the first node in this application.

In an embodiment, the second communication device 450 includes: a memory storing a computer-readable instruction program, where actions are generated when the computer-readable instruction program is executed by at least one processor, and the actions include: receiving a first RRC signaling set, where the first RRC signaling set includes first RRC signaling, and the first RRC signaling is configured for a first cell; receiving first DCI, where the first DCI is used for scheduling a PUSCH on at least one cell, and the first cell is one of the at least one cell; and sending the PUSCH on each of the at least one cell, where a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In a sub-embodiment of the foregoing embodiment, the second communication device 450 corresponds to the first node in this application.

In an embodiment, the first communication device 410 includes: at least one processor and at least one memory, where the at least one memory includes computer program code. The at least one memory and the computer program code are configured to be jointly used with the at least one processor. An apparatus in the first communication device 410 at least sends a first RRC signaling set, where the first RRC signaling set includes first RRC signaling, and the first RRC signaling is configured for a first cell; sends first DCI, where the first DCI is used for scheduling a PUSCH on at least one cell, and the first cell is one of the at least one cell; and receives the PUSCH on each of the at least one cell, where a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In a sub-embodiment of the foregoing embodiment, the first communication device 410 corresponds to the second node in this application.

In an embodiment, the first communication device 410 includes: a memory storing a computer-readable instruction program, where actions are generated when the computer-readable instruction program is executed by at least one processor, and the actions include: sending a first RRC signaling set, where the first RRC signaling set includes first RRC signaling, and the first RRC signaling is configured for a first cell; sending first DCI, where the first DCI is used for scheduling a PUSCH on at least one cell, and the first cell is one of the at least one cell; and receiving the PUSCH on each of the at least one cell, where a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In a sub-embodiment of the foregoing embodiment, the first communication device 410 corresponds to the second node in this application.

In an embodiment, at least one of {the antenna 452, the receiver 454, the multi-antenna receive processor 458, the receive processor 456, the controller/processor 459, the memory 460, and the data source 467} is configured to receive the first RRC signaling set in this application.

In an embodiment, at least one of {the antenna 420, the transmitter 418, the multi-antenna transmit processor 471, the transmit processor 416, the controller/processor 475, and the memory 476} is configured to send the first RRC signaling set in this application.

In an embodiment, at least one of {the antenna 452, the receiver 454, the multi-antenna receive processor 458, the receive processor 456, the controller/processor 459, the memory 460, and the data source 467} is configured to receive the first DCI in this application.

In an embodiment, at least one of {the antenna 420, the transmitter 418, the multi-antenna transmit processor 471, the transmit processor 416, the controller/processor 475, and the memory 476} is configured to send the first DCI in this application.

In an embodiment, at least one of {the antenna 452, the transmitter 454, the multi-antenna transmit processor 458, the transmit processor 468, the controller/processor 459, the memory 460, and the data source 467} is configured to send a PUSCH on each of the at least one cell in this application.

In an embodiment, at least one of {the antenna 420, the receiver 418, the multi-antenna receive processor 472, the receive processor 470, the controller/processor 475, and the memory 476} is configured to receive a PUSCH on each of the at least one cell in this application.

### Embodiment 5

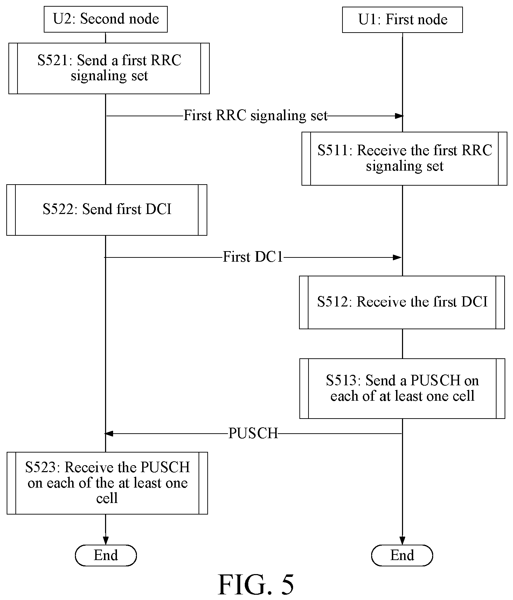

Embodiment 5 illustrates a flowchart of signal transmission according to an embodiment of this application, as shown in FIG. 5. In FIG. 5, a first node U1 and a second node U2 communicate with each other through an air interface.

The first node U1 receives a first RRC signaling set in step S511, receives first DCI in step S512, and sends a PUSCH on each of at least one cell in step S513.

The second node U2 sends the first RRC signaling set in step S521, sends the first DCI in S522, and receives the PUSCH on each of the at least one cell in step S523.

In Embodiment 5, the first RRC signaling set includes first RRC signaling, and the first RRC signaling is configured for a first cell. The first DCI is used for scheduling the PUSCH on the at least one cell, and the first cell is one of the at least one cell. A first field set in the first DCI is applied to the at least one cell. The indication of the first field set in the first DCI depends on a first parameter set. Whether the first parameter set uses a configuration of the first RRC signaling is related to the number of cells included in the at least one cell. The first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1. The first RRC signaling is PUSCH-Config, PUSCH-ConfigCommon, or PUSCH-ServingCellConfig.

In a sub-embodiment of Embodiment 5, when the number of cells included in the at least one cell is greater than 1, the first parameter set includes a first parameter subset, the first parameter subset is default, and at least one parameter other than the first parameter subset in the first parameter set uses the configuration of the first RRC signaling.

In a sub-embodiment of Embodiment 5, when the number of cells included in the at least one cell is greater than 1, the first RRC signaling set includes second RRC signaling, the second RRC signaling is configured for a first reference cell, the first reference cell is a cell other than the first cell in the at least one cell, the first parameter set includes a second parameter subset, the second parameter subset uses a configuration of the second RRC signaling, and at least one parameter other than the second parameter subset in the first parameter set uses the configuration of the first RRC signaling.

In a sub-embodiment of Embodiment 5, when the number of cells included in the at least one cell is greater than 1, the first RRC signaling set includes a target RRC signaling subset, all pieces of signaling in the target RRC signaling subset are configured for the first cell, the first RRC signaling is one of the multiple pieces of RRC signaling included in the target RRC signaling subset, the first parameter set includes a third parameter subset, the third parameter subset uses a configuration of one piece of RRC signaling other than the first RRC signaling in the target RRC signaling subset, and at least one parameter other than the third parameter subset in the first parameter set uses the configuration of the first RRC signaling.

In a sub-embodiment of Embodiment 5, when the number of cells included in the at least one cell is greater than 1, the first RRC signaling set includes second RRC signaling, the second RRC signaling is configured for a first reference cell, the first reference cell is a cell other than the first cell in the at least one cell, the first parameter set includes a second parameter subset, the second parameter subset uses a configuration of the second RRC signaling, and at least one parameter other than the second parameter subset in the first parameter set is default.

In a sub-embodiment of Embodiment 5, when the number of cells included in the at least one cell is greater than 1, the first RRC signaling set includes a target RRC signaling subset, all pieces of signaling in the target RRC signaling subset are configured for the first cell, the first RRC signaling is one of the multiple pieces of RRC signaling included in the target RRC signaling subset, the first parameter set includes a third parameter subset, the third parameter subset uses a configuration of one piece of RRC signaling other than the first RRC signaling in the target RRC signaling subset, and at least one parameter other than the third parameter subset in the first parameter set is default.

In a sub-embodiment of Embodiment 5, when the number of cells included in the at least one cell is greater than 1, the first parameter set includes a first parameter subset, and the first parameter subset is default.

In a sub-embodiment of Embodiment 5, when the number of cells included in the at least one cell is greater than 1, the first RRC signaling set includes second RRC signaling, the second RRC signaling is configured for a first reference cell, the first reference cell is a cell other than the first cell in the at least one cell, the first parameter set includes a second parameter subset, and the second parameter subset uses a configuration of the second RRC signaling.

In a sub-embodiment of Embodiment 5, when the number of cells included in the at least one cell is greater than 1, the first RRC signaling set includes a target RRC signaling subset, all pieces of signaling in the target RRC signaling subset are configured for the first cell, the first RRC signaling is one of the multiple pieces of RRC signaling included in the target RRC signaling subset, the first parameter set includes a third parameter subset, and the third parameter subset uses a configuration of one piece of RRC signaling other than the first RRC signaling in the target RRC signaling subset.

In a sub-embodiment of Embodiment 5, when the number of cells included in the at least one cell is greater than 1, the indication of a second field set in the first DCI depends on a second parameter set, the first RRC signaling set includes multiple pieces of RRC signaling, the first RRC signaling is one of the multiple pieces of RRC signaling, the multiple pieces of RRC signaling are respectively configured for the at least one cell, the second parameter set uses a configuration of at least one of the multiple pieces of RRC signaling, and configurations of the multiple pieces of RRC signaling for the second parameter set are expected to be the same.

In an embodiment, the first node U1 is the first node in this application.

In an embodiment, the second node U2 is the second node in this application.

In an embodiment, the first node U1 is a UE.

In an embodiment, the first node U1 is a base station.

In an embodiment, the second node U2 is a base station.

In an embodiment, the second node U2 is a UE.

In an embodiment, the air interface between the second node U2 and the first node U1 is a Uu interface.

In an embodiment, the air interface between the second node U2 and the first node U1 includes a cellular link.

In an embodiment, the air interface between the second node U2 and the first node U1 is a PCS interface.

In an embodiment, the air interface between the second node U2 and the first node U1 includes a sidelink.

In an embodiment, the air interface between the second node U2 and the first node U1 includes a wireless interface between a base station device and a UE.

In an embodiment, the air interface between the second node U2 and the first node U1 includes a wireless interface between a satellite device and a UE.

In an embodiment, the air interface between the second node U2 and the first node U1 includes a wireless interface between UEs.

In an embodiment, a problem to be resolved in this application includes: how to determine whether the first parameter set uses the configuration of the first RRC signaling.

In an embodiment, a problem to be resolved in this application includes: how to determine, based on the number of cells included in the at least one cell, whether the first parameter set uses the configuration of the first RRC signaling.

In an embodiment, a problem to be resolved in this application includes: how to enhance scheduling of PUSCHs on multiple cells.

In an embodiment, a problem to be resolved in this application includes: how to improve scheduling flexibility when multiple types of DCI that can be used for scheduling different numbers of cells are configured.

In an embodiment, a problem to be resolved in this application includes: how to reduce signaling overheads for DCI.

In an embodiment, a problem to be resolved in this application includes: how to improve performance of eMBB.

In an embodiment, a problem to be resolved in this application includes: how to improve performance of URLLC.

In an embodiment, a problem to be resolved in this application includes: how to improve performance of Internet of Vehicles.

In an embodiment, a problem to be resolved in this application includes: how to improve performance of an MBS.

In an embodiment, a problem to be resolved in this application includes: how to improve performance of XR.

In an embodiment, a problem to be resolved in this application includes: how to improve performance of an NTN.

In an embodiment, a problem to be resolved in this application includes: how to improve base station configuration flexibility.

### Embodiment 6

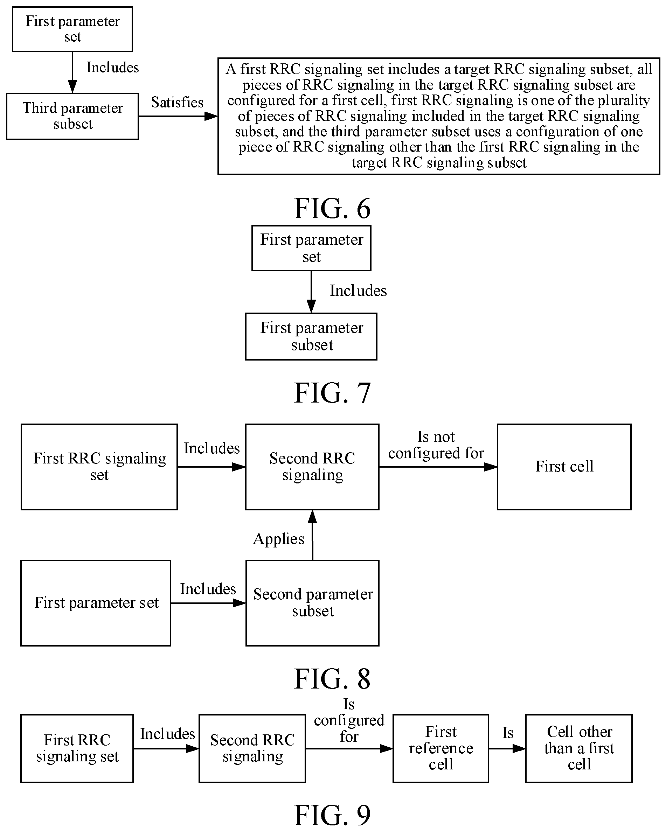

Embodiment 6 illustrates a diagram of a third parameter subset according to an embodiment of this application, as shown in FIG. 6.

In Embodiment 6, the number of cells included in the at least one cell is greater than 1. The first RRC signaling set includes a target RRC signaling subset, all pieces of signaling in the target RRC signaling subset are configured for the first cell, and the first RRC signaling is one of the multiple pieces of RRC signaling included in the target RRC signaling subset. The first parameter set includes a third parameter subset, and the third parameter subset uses a configuration of one piece of RRC signaling other than the first RRC signaling in the target RRC signaling subset.

In an embodiment, the number of pieces of RRC signaling in the target RRC signaling subset is equal to 2.

In an embodiment, the number of pieces of RRC signaling in the target RRC signaling subset is greater than 2.

In an embodiment, the target RRC signaling subset is the first RRC signaling set.

In an embodiment, the target RRC signaling subset is a proper subset of the first RRC signaling set.

In an embodiment, the number of cells included in the at least one cell is greater than 1. The first parameter set includes a third parameter subset, and the third parameter subset satisfies one of the following: {the first RRC signaling set includes a target RRC signaling subset, all pieces of RRC signaling in the target RRC signaling subset are configured for the first cell, the first RRC signaling is one of the multiple pieces of RRC signaling included in the target RRC signaling subset, and the third parameter subset uses a configuration of one piece of RRC signaling other than the first RRC signaling in the target RRC signaling subset; or the third parameter subset is default}.

In an embodiment, that the third parameter subset is default includes: Each parameter in the third parameter subset is default.

In an embodiment, that the third parameter subset is default includes: Each parameter in the third parameter subset is set to a default configuration state.

In an embodiment, that the third parameter subset is default includes: Each parameter in the third parameter subset is set to a default value.

In an embodiment, the third parameter subset includes only one parameter.

In an embodiment, the third parameter subset includes multiple parameters.

In an embodiment, the name of each piece of RRC signaling in the target RRC signaling subset includes pusch-AggregationFactor.

In an embodiment, the name of each piece of RRC signaling in the target RRC signaling subset includes txConfig.

In an embodiment, the name of each piece of RRC signaling in the target RRC signaling subset includes dmrs-UplinkForPUSCH-MappingTypeA.

In an embodiment, the name of each piece of RRC signaling in the target RRC signaling subset includes dmrs-UplinkForPUSCH-MappingTypeB.

In an embodiment, the name of each piece of RRC signaling in the target RRC signaling subset includes pusch-PowerControl.

In an embodiment, the name of each piece of RRC signaling in the target RRC signaling subset includes frequencyHopping.

In an embodiment, the name of each piece of RRC signaling in the target RRC signaling subset includes frequencyHoppingOffsetLists.

In an embodiment, the name of each piece of RRC signaling in the target RRC signaling subset includes resourceAllocation.

In an embodiment, the name of each piece of RRC signaling in the target RRC signaling subset includes pusch-TimeDomainAllocationList.

In an embodiment, the name of each piece of RRC signaling in the target RRC signaling subset includes mcs-Table.

In an embodiment, the name of each piece of RRC signaling in the target RRC signaling subset includes mcs-TableTransformPrecoder.

In an embodiment, the name of each piece of RRC signaling in the target RRC signaling subset includes transformPrecoder.

In an embodiment, the name of each piece of RRC signaling in the target RRC signaling subset includes codebookSubset.

In an embodiment, the name of each piece of RRC signaling in the target RRC signaling subset includes maxRank.

In an embodiment, the name of each piece of RRC signaling in the target RRC signaling subset includes rbg-Size.

In an embodiment, the name of each piece of RRC signaling in the target RRC signaling subset includes uci-OnPUSCH.

In an embodiment, the name of each piece of RRC signaling in the target RRC signaling subset includes tp-pi2BPSK.

In an embodiment, the name of each piece of RRC signaling in the target RRC signaling subset includes minimumSchedulingOffsetK2.

In an embodiment, the name of each piece of RRC signaling in the target RRC signaling subset includes ul-AccessConfigList.

In an embodiment, the name of each piece of RRC signaling in the target RRC signaling subset includes harq-ProcessNumberSize.

In an embodiment, the name of each piece of RRC signaling in the target RRC signaling subset includes dmrs-SequenceInitialization.

In an embodiment, the name of each piece of RRC signaling in the target RRC signaling subset includes numberOfBitsForRV.

In an embodiment, the name of each piece of RRC signaling in the target RRC signaling subset includes antennaPortsFieldPresence.

In an embodiment, the name of each piece of RRC signaling in the target RRC signaling subset includes invalidSymbolPatternIndicator.

In an embodiment, the name of each piece of RRC signaling in the target RRC signaling subset includes priorityIndicator.

In an embodiment, the name of each piece of RRC signaling in the target RRC signaling subset includes pusch-RepTypeIndicator.

In an embodiment, the name of each piece of RRC signaling in the target RRC signaling subset includes resourceAllocationType1 Granularity.

In an embodiment, the name of each piece of RRC signaling in the target RRC signaling subset includes ul-FullPowerTransmission.

In an embodiment, the name of each piece of RRC signaling in the target RRC signaling subset includes numberOfInvalidSymbolsForDL-UL-Switching.

In an embodiment, the name of each piece of RRC signaling in the target RRC signaling subset includes betaOffsetsCrossPri0.

In an embodiment, the name of each piece of RRC signaling in the target RRC signaling subset includes betaOffsetsCrossPri1.

In an embodiment, the name of each piece of RRC signaling in the target RRC signaling subset includes mappingPattern.

In an embodiment, the name of each piece of RRC signaling in the target RRC signaling subset includes secondTPCField.

In an embodiment, the name of each piece of RRC signaling in the target RRC signaling subset includes sequenceOffsetForRV.

In an embodiment, the name of each piece of RRC signaling in the target RRC signaling subset includes availableSlotCounting.

In an embodiment, the name of each piece of RRC signaling in the target RRC signaling subset includes dmrs-BundlingPUSCH-Config.

In an embodiment, the name of the piece of RRC signaling other than the first RRC signaling in the target RRC signaling subset includes -r18.

In an embodiment, the name of the piece of RRC signaling other than the first RRC signaling in the target RRC signaling subset includes -r19.

In an embodiment, the name of the piece of RRC signaling other than the first RRC signaling in the target RRC signaling subset includes -r20.

In an embodiment, at least one parameter in the third parameter subset represents the number of repetitions for data.

In an embodiment, at least one parameter in the third parameter subset represents a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the third parameter subset represents a DMRS configuration for PUSCH transmission using a PUSCH mapping type A.

In an embodiment, at least one parameter in the third parameter subset represents a DMRS configuration for PUSCH transmission using a PUSCH mapping type B.

In an embodiment, at least one parameter in the third parameter subset represents related information of power control for a PUSCH.

In an embodiment, at least one parameter in the third parameter subset represents a frequency hopping mode.

**In** an embodiment, at least one parameter in the third parameter subset represents a set of frequency hopping offset(s).

**In** an embodiment, at least one parameter in the third parameter subset represents a resource allocation type.

**In** an embodiment, at least one parameter in the third parameter subset represents a frequency domain resource allocation type.

**In** an embodiment, at least one parameter in the third parameter subset represents a list of time domain allocations for timing of UL assignment to UL data.

**In** an embodiment, at least one parameter in the third parameter subset represents an MCS table used for a PUSCH when there is no transformer precoder.

In an embodiment, at least one parameter in the third parameter subset represents an MCS table used for a PUSCH when there is a transformer precoder.

In an embodiment, at least one parameter in the third parameter subset represents whether to enable transform precoding.

In an embodiment, at least one parameter in the third parameter subset represents a particular selection of a transformer precoder for a PUSCH.

In an embodiment, at least one parameter in the third parameter subset represents a subset of PMIs addressed by TPMIs.

In an embodiment, at least one parameter in the third parameter subset represents a subset of PMIs addressed by TRIs.

In an embodiment, at least one parameter in the third parameter subset represents an RBG size selected between a configuration 1 and a configuration 2 for a PUSCH.

In an embodiment, at least one parameter in the third parameter subset represents a beta offset set.

In an embodiment, at least one parameter in the third parameter subset represents whether to enable pi/2-BPSK modulation with transform precoding.

In an embodiment, at least one parameter in the third parameter subset is used for determining the number of repetitions for data.

In an embodiment, at least one parameter in the third parameter subset is used for determining a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the third parameter subset is used for determining a DMRS configuration for PUSCH transmission using a PUSCH mapping type A.

In an embodiment, at least one parameter in the third parameter subset is used for determining a DMRS configuration for PUSCH transmission using a PUSCH mapping type B.

In an embodiment, at least one parameter in the third parameter subset is used for determining power control for a PUSCH.

In an embodiment, at least one parameter in the third parameter subset is used for determining a frequency hopping mode.

In an embodiment, at least one parameter in the third parameter subset is used for determining a set of frequency hopping offset(s).

In an embodiment, at least one parameter in the third parameter subset is used for determining a resource allocation type.

In an embodiment, at least one parameter in the third parameter subset is used for determining a frequency domain resource allocation type.

In an embodiment, at least one parameter in the third parameter subset is used for determining a list of time domain allocations for timing of UL assignment to UL data.

In an embodiment, at least one parameter in the third parameter subset is used for determining an MCS table used for a PUSCH when there is no transformer precoder.

In an embodiment, at least one parameter in the third parameter subset is used for determining an MCS table used for a PUSCH when there is a transformer precoder.

In an embodiment, at least one parameter in the third parameter subset is used for determining whether to enable transform precoding.

In an embodiment, at least one parameter in the third parameter subset is used for determining a particular selection of a transformer precoder for a PUSCH.

In an embodiment, at least one parameter in the third parameter subset is used for determining a subset of PMIs addressed by TPMIs.

In an embodiment, at least one parameter in the third parameter subset is used for determining a subset of PMIs addressed by TRIs.

In an embodiment, at least one parameter in the third parameter subset is used for determining an RBG size selected between a configuration 1 and a configuration 2 for a PUSCH.

In an embodiment, at least one parameter in the third parameter subset is used for determining a beta offset set.

In an embodiment, at least one parameter in the third parameter subset is used for determining whether to enable pi/2-BPSK modulation with transform precoding.

In an embodiment, at least one parameter in the third parameter subset is used for indicating the number of repetitions for data.

In an embodiment, at least one parameter in the third parameter subset is used for indicating a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the third parameter subset is used for indicating a DMRS configuration for PUSCH transmission using a PUSCH mapping type A.

In an embodiment, at least one parameter in the third parameter subset is used for indicating a DMRS configuration for PUSCH transmission using a PUSCH mapping type B.

In an embodiment, at least one parameter in the third parameter subset is used for indicating power control for a PUSCH.

In an embodiment, at least one parameter in the third parameter subset is used for indicating a frequency hopping mode.

In an embodiment, at least one parameter in the third parameter subset is used for indicating a set of frequency hopping offset(s).

In an embodiment, at least one parameter in the third parameter subset is used for indicating a resource allocation type.

In an embodiment, at least one parameter in the third parameter subset is used for indicating a frequency domain resource allocation type.

In an embodiment, at least one parameter in the third parameter subset is used for indicating a list of time domain allocations for timing of UL assignment to UL data.

In an embodiment, at least one parameter in the third parameter subset is used for indicating an MCS table used for a PUSCH when there is no transformer precoder.

In an embodiment, at least one parameter in the third parameter subset is used for indicating an MCS table used for a PUSCH when there is a transformer precoder.

In an embodiment, at least one parameter in the third parameter subset is used for indicating whether to enable transform precoding.

In an embodiment, at least one parameter in the third parameter subset is used for indicating a particular selection of a transformer precoder for a PUSCH.

In an embodiment, at least one parameter in the third parameter subset is used for indicating a subset of PMIs addressed by TPMIs.

In an embodiment, at least one parameter in the third parameter subset is used for indicating a subset of PMIs addressed by TRIs.

In an embodiment, at least one parameter in the third parameter subset is used for indicating an RBG size selected between a configuration 1 and a configuration 2 for a PUSCH.

In an embodiment, at least one parameter in the third parameter subset is used for indicating a beta offset set.

In an embodiment, at least one parameter in the third parameter subset is used for indicating whether to enable pi/2-BPSK modulation with transform precoding.

In an embodiment, the third parameter subset includes: the number of repetitions for data.

In an embodiment, the third parameter subset includes: a transmission scheme for a PUSCH.

In an embodiment, the transmission scheme is one of codebook-based transmission, non-codebook-based transmission, and single-antenna-port transmission.

In an embodiment, the third parameter subset includes: a DMRS configuration for PUSCH transmission using a PUSCH mapping type A.

In an embodiment, the third parameter subset includes: a DMRS configuration for PUSCH transmission using a PUSCH mapping type B.

In an embodiment, the third parameter subset includes: related information of power control for a PUSCH.

In an embodiment, the third parameter subset includes: a frequency hopping mode.

In an embodiment, the third parameter subset includes: a set of frequency hopping offset(s).

In an embodiment, the third parameter subset includes: a resource allocation type.

In an embodiment, the third parameter subset includes: a frequency domain resource allocation type.

In an embodiment, the third parameter subset includes: a list of time domain allocations for timing of UL assignment to UL data.

In an embodiment, the third parameter subset includes: an MCS table used for a PUSCH when there is no transformer precoder.

In an embodiment, the third parameter subset includes: an MCS table used for a PUSCH when there is a transformer precoder.

In an embodiment, the third parameter subset includes: information about whether to enable transform precoding.

In an embodiment, the third parameter subset includes: a particular selection of a transformer precoder for a PUSCH.

In an embodiment, the third parameter subset includes: a subset of PMIs addressed by TPMIs.

In an embodiment, the third parameter subset includes: a subset of PMIs addressed by TRIs.

In an embodiment, the third parameter subset includes: an RBG size selected between a configuration 1 and a configuration 2 for a PUSCH.

In an embodiment, the third parameter subset includes: a beta offset set.

In an embodiment, the third parameter subset includes: information about whether to enable pi/2-BPSK modulation with transform precoding.

In an embodiment, the third parameter subset includes: whether an Antenna ports field exists.

In an embodiment, the third parameter subset includes: whether to enable PUSCH repetitions counted on the basis of available slots.

In an embodiment, the third parameter subset includes: a set of beta offsets configured for multiplexing of a HARQ-ACK on PUSCHs with different priorities.

In an embodiment, the third parameter subset includes: DMRS bundling information for a PUSCH.

In an embodiment, the third parameter subset includes: whether a DMRS Sequence Initialization field exists.

In an embodiment, the third parameter subset includes: a size of a HARQ process number field.

In an embodiment, the third parameter subset includes: a pattern for an invalid symbol for a PUSCH transmission type B.

In an embodiment, the third parameter subset includes: whether a cyclical mapping pattern or a sequential mapping pattern should be followed when two SRS resource sets are configured for PUSCH transmission and PUSCH transmission occasions are associated with the two SRS resource sets.

In an embodiment, the third parameter subset includes: a list of minimum K2 values.

In an embodiment, the third parameter subset includes: a size of a Redundancy version field.

In an embodiment, the third parameter subset includes: the number of symbols after the last semi-static DL symbol that are invalid for a PUSCH repetition type B.

In an embodiment, the third parameter subset includes: whether a priority indicator field exists.

In an embodiment, the third parameter subset includes: whether to follow a behavior for a PUSCH repetition type A or a behavior for a PUSCH repetition type B.

In an embodiment, the third parameter subset includes: whether a second TPC field exists.

In an embodiment, the third parameter subset includes: an RV offset configured for a starting RV for the first repetition (first actual repetition in a PUSCH repetition type B) towards the second SRS resource set for a PUSCH.

In an embodiment, the third parameter subset includes: a list of combinations of cyclic prefix extension, a CAPC, and a UL channel access type.

In an embodiment, the third parameter subset includes: a UL full power transmission mode.

In an embodiment, the third parameter subset includes: a scheduling granularity applicable to a starting point indication and a length indication for a resource allocation type 1.

In an embodiment, at least one parameter in the third parameter subset is used for indicating whether an Antenna ports field exists.

In an embodiment, at least one parameter in the third parameter subset is used for indicating whether to enable PUSCH repetitions counted on the basis of available slots.

In an embodiment, at least one parameter in the third parameter subset is used for indicating a set of beta offsets configured for multiplexing of a HARQ-ACK on PUSCHs with different priorities.

In an embodiment, at least one parameter in the third parameter subset is used for indicating DMRS bundling information for a PUSCH.

In an embodiment, at least one parameter in the third parameter subset is used for indicating whether a DMRS Sequence Initialization field exists.

In an embodiment, at least one parameter in the third parameter subset is used for indicating a size of a HARQ process number field.

In an embodiment, at least one parameter in the third parameter subset is used for indicating a pattern for an invalid symbol for a PUSCH transmission type B.

In an embodiment, at least one parameter in the third parameter subset is used for indicating: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the third parameter subset is used for indicating a list of minimum K2 values.

In an embodiment, at least one parameter in the third parameter subset is used for indicating a size of a Redundancy version field.

In an embodiment, at least one parameter in the third parameter subset is used for indicating the number of symbols after the last semi-static DL symbol that are invalid for a PUSCH repetition type B.

In an embodiment, at least one parameter in the third parameter subset is used for indicating whether a priority indicator field exists.

In an embodiment, at least one parameter in the third parameter subset is used for indicating whether to follow a behavior for a PUSCH repetition type A or a behavior for a PUSCH repetition type B.

In an embodiment, at least one parameter in the third parameter subset is used for indicating whether a second TPC field exists.

In an embodiment, at least one parameter in the third parameter subset is used for indicating an RV offset configured for a starting RV for the first repetition (first actual repetition in a PUSCH repetition type B) towards the second SRS resource set for a PUSCH.

In an embodiment, at least one parameter in the third parameter subset is used for indicating a list of combinations of cyclic prefix extension, a CAPC, and a UL channel access type.

In an embodiment, at least one parameter in the third parameter subset is used for indicating a UL full power transmission mode.

In an embodiment, at least one parameter in the third parameter subset is used for indicating a scheduling granularity applicable to a starting point indication and a length indication for a resource allocation type 1.

In an embodiment, at least one parameter in the third parameter subset is used for determining whether an Antenna ports field exists.

In an embodiment, at least one parameter in the third parameter subset is used for determining whether to enable PUSCH repetitions counted on the basis of available slots.

In an embodiment, at least one parameter in the third parameter subset is used for determining a set of beta offsets configured for multiplexing of a HARQ-ACK on PUSCHs with different priorities.

In an embodiment, at least one parameter in the third parameter subset is used for determining DMRS bundling information for a PUSCH.

In an embodiment, at least one parameter in the third parameter subset is used for determining whether a DMRS Sequence Initialization field exists.

In an embodiment, at least one parameter in the third parameter subset is used for determining a size of a HARQ process number field.

In an embodiment, at least one parameter in the third parameter subset is used for determining a pattern for an invalid symbol for a PUSCH transmission type B.

In an embodiment, at least one parameter in the third parameter subset is used for determining: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the third parameter subset is used for determining a list of minimum K2 values.

In an embodiment, at least one parameter in the third parameter subset is used for determining a size of a Redundancy version field.

In an embodiment, at least one parameter in the third parameter subset is used for determining the number of symbols after the last semi-static DL symbol that are invalid for a PUSCH repetition type B.

In an embodiment, at least one parameter in the third parameter subset is used for determining whether a priority indicator field exists.

In an embodiment, at least one parameter in the third parameter subset is used for determining whether to follow a behavior for a PUSCH repetition type A or a behavior for a PUSCH repetition type B.

In an embodiment, at least one parameter in the third parameter subset is used for determining whether a second TPC field exists.

In an embodiment, at least one parameter in the third parameter subset is used for determining an RV offset configured for a starting RV for the first repetition (first actual repetition in a PUSCH repetition type B) towards the second SRS resource set for a PUSCH.

In an embodiment, at least one parameter in the third parameter subset is used for determining a list of combinations of cyclic prefix extension, a CAPC, and a UL channel access type.

In an embodiment, at least one parameter in the third parameter subset is used for determining a UL full power transmission mode.

In an embodiment, at least one parameter in the third parameter subset is used for determining a scheduling granularity applicable to a starting point indication and a length indication for a resource allocation type 1.

In an embodiment, at least one parameter in the third parameter subset represents whether an Antenna ports field exists.

In an embodiment, at least one parameter in the third parameter subset represents whether to enable PUSCH repetitions counted on the basis of available slots.

In an embodiment, at least one parameter in the third parameter subset represents a set of beta offsets configured for multiplexing of a HARQ-ACK on PUSCHs with different priorities.

In an embodiment, at least one parameter in the third parameter subset represents DMRS bundling information for a PUSCH.

In an embodiment, at least one parameter in the third parameter subset represents whether a DMRS Sequence Initialization field exists.

In an embodiment, at least one parameter in the third parameter subset represents a size of a HARQ process number field.

In an embodiment, at least one parameter in the third parameter subset represents a pattern for an invalid symbol for a PUSCH transmission type B.

In an embodiment, at least one parameter in the third parameter subset represents: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the third parameter subset represents a list of minimum K2 values.

In an embodiment, at least one parameter in the third parameter subset represents a size of a Redundancy version field.

In an embodiment, at least one parameter in the third parameter subset represents the number of symbols after the last semi-static DL symbol that are invalid for a PUSCH repetition type B.

In an embodiment, at least one parameter in the third parameter subset represents whether a priority indicator field exists.

In an embodiment, at least one parameter in the third parameter subset represents whether to follow a behavior for a PUSCH repetition type A or a behavior for a PUSCH repetition type B.

In an embodiment, at least one parameter in the third parameter subset represents whether a second TPC field exists.

In an embodiment, at least one parameter in the third parameter subset represents an RV offset configured for a starting RV for the first repetition (first actual repetition in a PUSCH repetition type B) towards the second SRS resource set for a PUSCH.

In an embodiment, at least one parameter in the third parameter subset represents a list of combinations of cyclic prefix extension, a CAPC, and a UL channel access type.

In an embodiment, at least one parameter in the third parameter subset represents a UL full power transmission mode.

In an embodiment, at least one parameter in the third parameter subset represents a scheduling granularity applicable to a starting point indication and a length indication for a resource allocation type 1.

In an embodiment, there is no intersection set between the third parameter subset and the first parameter subset.

In an embodiment, there is no intersection set between the third parameter subset and the second parameter subset.

In an embodiment, at least one parameter in the third parameter subset represents the maximum number of CBGs of each TB.

In an embodiment, at least one parameter in the third parameter subset represents whether to enable CBG-based transmission.

In an embodiment, at least one parameter in the third parameter subset represents the maximum number of MIMO layers for a PUSCH in all UL BWPs corresponding to a cell.

In an embodiment, at least one parameter in the third parameter subset represents the number of HARQ processes used on a PUSCH of a cell.

In an embodiment, at least one parameter in the third parameter subset represents whether to enable a configuration of an advanced processing time capability 2 for a PUSCH.

In an embodiment, at least one parameter in the third parameter subset represents whether to enable LBRM.

In an embodiment, at least one parameter in the third parameter subset represents a HARQ mode for a HARQ process ID.

In an embodiment, at least one parameter in the third parameter subset represents whether to enable group hopping for RMRS transmission with transform precoding.

In an embodiment, at least one parameter in the third parameter subset represents a power offset between transmission of a msg3 and a RACH preamble.

In an embodiment, at least one parameter in the third parameter subset represents a P0 value of a PUSCH with a grant (other than a msg3).

In an embodiment, at least one parameter in the third parameter subset is used for determining the maximum number of CBGs of each TB.

In an embodiment, at least one parameter in the third parameter subset is used for determining whether to enable CBG-based transmission.

In an embodiment, at least one parameter in the third parameter subset is used for determining the maximum number of MIMO layers for a PUSCH in all UL BWPs corresponding to a cell.

In an embodiment, at least one parameter in the third parameter subset is used for determining the number of HARQ processes used on a PUSCH of a cell.

In an embodiment, at least one parameter in the third parameter subset is used for determining whether to enable a configuration of an advanced processing time capability 2 for a PUSCH.

In an embodiment, at least one parameter in the third parameter subset is used for determining whether to enable LBRM.

In an embodiment, at least one parameter in the third parameter subset is used for determining a HARQ mode for a HARQ process ID.

In an embodiment, at least one parameter in the third parameter subset is used for determining whether to enable group hopping for RMRS transmission with transform precoding.

In an embodiment, at least one parameter in the third parameter subset is used for determining a power offset between transmission of a msg3 and a RACH preamble.

In an embodiment, at least one parameter in the third parameter subset is used for determining a P0 value of a PUSCH with a grant (other than a msg3).

In an embodiment, at least one parameter in the third parameter subset is used for indicating the maximum number of CBGs of each TB.

In an embodiment, at least one parameter in the third parameter subset is used for indicating whether to enable CBG-based transmission.

In an embodiment, at least one parameter in the third parameter subset is used for indicating the maximum number of MIMO layers for a PUSCH in all UL BWPs corresponding to a cell.

In an embodiment, at least one parameter in the third parameter subset is used for indicating the number of HARQ processes used on a PUSCH of a cell.

In an embodiment, at least one parameter in the third parameter subset is used for indicating whether to enable a configuration of an advanced processing time capability 2 for a PUSCH.

In an embodiment, at least one parameter in the third parameter subset is used for indicating whether to enable LBRM

In an embodiment, at least one parameter in the third parameter subset is used for indicating a HARQ mode for a HARQ process ID.

In an embodiment, at least one parameter in the third parameter subset is used for indicating whether to enable group hopping for RMRS transmission with transform precoding.

In an embodiment, at least one parameter in the third parameter subset is used for indicating a power offset between transmission of a msg3 and a RACH preamble.

In an embodiment, at least one parameter in the third parameter subset is used for indicating a P0 value of a PUSCH with a grant (other than a msg3).

In an embodiment, the third parameter subset includes: the maximum number of CBGs of each TB.

In an embodiment, the third parameter subset includes: whether to enable CBG-based transmission.

In an embodiment, the third parameter subset includes: the maximum number of MIMO layers for a PUSCH in all UL BWPs corresponding to a cell.

In an embodiment, the third parameter subset includes: the number of HARQ processes used on a PUSCH of a cell.

In an embodiment, the third parameter subset includes: whether to enable a configuration of an advanced processing time capability 2 for a PUSCH.

In an embodiment, the third parameter subset includes: whether to enable LBRM.

In an embodiment, the third parameter subset includes: a HARQ mode for a HARQ process ID.

In an embodiment, the third parameter subset includes: whether to enable group hopping for RMRS transmission with transform precoding.

In an embodiment, the third parameter subset includes: a power offset between transmission of a msg3 and a RACH preamble.

In an embodiment, the third parameter subset includes: a P0 value of a PUSCH with a grant (other than a msg3).

In an embodiment, the name of each piece of RRC signaling in the target RRC signaling subset includes codeBlockGroupTransmission.

In an embodiment, the name of each piece of RRC signaling in the target RRC signaling subset includes rateMatching.

In an embodiment, the name of each piece of RRC signaling in the target RRC signaling subset includes xOverhead.

In an embodiment, the name of each piece of RRC signaling in the target RRC signaling subset includes maxMIMO-Layers.

In an embodiment, the name of each piece of RRC signaling in the target RRC signaling subset includes processingType2Enabled.

In an embodiment, the name of each piece of RRC signaling in the target RRC signaling subset includes nrofHARQ-ProcessesForPUSCH.

In an embodiment, the name of each piece of RRC signaling in the target RRC signaling subset includes uplinkHARQ-mode.

In an embodiment, the name of each piece of RRC signaling in the target RRC signaling subset includes groupHoppingEnabledTransformPrecoding.

In an embodiment, the name of each piece of RRC signaling in the target RRC signaling subset includes msg3-DeltaPreamble.

In an embodiment, the name of each piece of RRC signaling in the target RRC signaling subset includes p0-NominalWithGrant.

### Embodiment 7

Embodiment 7 illustrates a diagram of a relationship between a first parameter set and a first parameter subset according to an embodiment of this application, as shown in FIG. 7.

In Embodiment 7, the number of cells included in the at least one cell is greater than 1. The first parameter set includes a first parameter subset, and the first parameter subset is default.

In an embodiment, that the first parameter subset is default includes: Each parameter in the first parameter subset is default.

In an embodiment, that the first parameter subset is default includes: Each parameter in the first parameter subset is set to a default configuration state.

In an embodiment, that the first parameter subset is default includes: Each parameter in the first parameter subset is set to a default value.

In an embodiment, the first parameter subset includes only one parameter.

In an embodiment, the first parameter subset includes multiple parameters.

In an embodiment, at least one parameter in the first parameter subset is used for determining that the number of repetitions for data is 1.

In an embodiment, at least one parameter in the first parameter subset is used for determining that a resource allocation type is resourceAllocationType0.

In an embodiment, at least one parameter in the first parameter subset is used for determining that a resource allocation type is resourceAllocationType1.

In an embodiment, at least one parameter in the first parameter subset is used for determining not to configure frequency hopping.

In an embodiment, at least one parameter in the first parameter subset is used for determining not to enable transform precoding.

In an embodiment, at least one parameter in the first parameter subset is used for determining to enable transform precoding.

In an embodiment, at least one parameter in the first parameter subset is used for determining to use **a** configuration 1 for an RBG size for a PUSCH.

In an embodiment, at least one parameter in the first parameter subset is used for determining to use a configuration 2 for an RBG size for a PUSCH.

In an embodiment, at least one parameter in the first parameter subset is used for determining to enable pi/2-BPSK modulation with transform precoding.

In an embodiment, at least one parameter in the first parameter subset is used for determining not to enable pi/2-BPSK modulation with transform precoding.

In an embodiment, at least one parameter in the first parameter subset is used for determining to use a codebook-based transmission scheme.

In an embodiment, at least one parameter in the first parameter subset is used for determining to use a non-codebook-based transmission scheme.

In an embodiment, at least one parameter in the first parameter subset is used for determining to perform single-antenna-port PUSCH transmission.

In an embodiment, at least one parameter in the first parameter subset is used for determining that a scheduling granularity is one PRB.

In an embodiment, at least one parameter in the first parameter subset is used for determining to use a value 64QAM.

In an embodiment, at least one parameter in the first parameter subset is used for determining that no symbol is explicitly defined for DL-to-UL switching.

In an embodiment, at least one parameter in the first parameter subset is used for determining to use a value of msg3-transformPrecoder.

In an embodiment, at least one parameter in the first parameter subset is used for determining that a priority indicator field is not included in one DCI format.

In an embodiment, at least one parameter in the first parameter subset is used for determining that one field is not included in one DCI format.

In an embodiment, at least one parameter in the first parameter subset represents that the number of repetitions for data is 1.

In an embodiment, at least one parameter in the first parameter subset represents that a resource allocation type is resourceAllocationType0.

In an embodiment, at least one parameter in the first parameter subset represents that a resource allocation type is resourceAllocationType1.

In an embodiment, at least one parameter in the first parameter subset represents not configuring frequency hopping.

In an embodiment, at least one parameter in the first parameter subset represents not enabling transform precoding.

In an embodiment, at least one parameter in the first parameter subset represents enabling transform precoding.

In an embodiment, at least one parameter in the first parameter subset represents using a configuration 1 for an RBG size for a PUSCH.

In an embodiment, at least one parameter in the first parameter subset represents using a configuration 2 for an RBG size for a PUSCH.

In an embodiment, at least one parameter in the first parameter subset represents enabling pi/2-BPSK modulation with transform precoding.

In an embodiment, at least one parameter in the first parameter subset represents not enabling pi/2-BPSK modulation with transform precoding.

In an embodiment, at least one parameter in the first parameter subset represents using a codebook-based transmission scheme.

In an embodiment, at least one parameter in the first parameter subset represents using a non-codebook-based transmission scheme.

In an embodiment, at least one parameter in the first parameter subset represents performing single-antenna-port PUSCH transmission.

In an embodiment, at least one parameter in the first parameter subset represents that a scheduling granularity is one PRB.

In an embodiment, at least one parameter in the first parameter subset represents using a value 64QAM.

In an embodiment, at least one parameter in the first parameter subset represents that no symbol is explicitly defined for DL-to-UL switching.

In an embodiment, at least one parameter in the first parameter subset represents using a value of msg3-transformPrecoder.

In an embodiment, at least one parameter in the first parameter subset represents that a priority indicator field is not included in one DCI format.

In an embodiment, at least one parameter in the first parameter subset represents that one field is not included in one DCI format.

In an embodiment, at least one parameter in the first parameter subset is used for indicating that the number of repetitions for data is 1.

In an embodiment, at least one parameter in the first parameter subset is used for indicating that a resource allocation type is resourceAllocationType0.

In an embodiment, at least one parameter in the first parameter subset is used for indicating that a resource allocation type is resourceAllocationType1.

In an embodiment, at least one parameter in the first parameter subset is used for indicating not to configure frequency hopping.

In an embodiment, at least one parameter in the first parameter subset is used for indicating not to enable transform precoding.

In an embodiment, at least one parameter in the first parameter subset is used for indicating to enable transform precoding.

In an embodiment, at least one parameter in the first parameter subset is used for indicating to use a configuration 1 for an RBG size for a PUSCH.

In an embodiment, at least one parameter in the first parameter subset is used for indicating to use a configuration 2 for an RBG size for a PUSCH.

In an embodiment, at least one parameter in the first parameter subset is used for indicating to enable pi/2-BPSK modulation with transform precoding.

In an embodiment, at least one parameter in the first parameter subset is used for indicating not to enable pi/2-BPSK modulation with transform precoding.

In an embodiment, at least one parameter in the first parameter subset is used for indicating to use a codebook-based transmission scheme.

In an embodiment, at least one parameter in the first parameter subset is used for indicating to use a non-codebook-based transmission scheme.

In an embodiment, at least one parameter in the first parameter subset is used for indicating to perform single-antenna-port PUSCH transmission.

In an embodiment, at least one parameter in the first parameter subset is used for indicating that a scheduling granularity is one PRB.

In an embodiment, at least one parameter in the first parameter subset is used for indicating to use a value 64QAM.

In an embodiment, at least one parameter in the first parameter subset is used for indicating that no symbol is explicitly defined for DL-to-UL switching.

In an embodiment, at least one parameter in the first parameter subset is used for indicating to use a value of msg3-transformPrecoder.

In an embodiment, at least one parameter in the first parameter subset is used for indicating that a priority indicator field is not included in one DCI format.

In an embodiment, at least one parameter in the first parameter subset is used for indicating that one field is not included in one DCI format.

In an embodiment, the first parameter subset includes: that the number of repetitions for data is 1.

In an embodiment, the first parameter subset includes: that a resource allocation type is resourceAllocationType0.

In an embodiment, the first parameter subset includes: that a resource allocation type is resourceAllocationType1.

In an embodiment, the first parameter subset includes: not configuring frequency hopping.

In an embodiment, the first parameter subset includes: not enabling transform precoding.

In an embodiment, the first parameter subset includes: enabling transform precoding.

In an embodiment, the first parameter subset includes: using a configuration 1 for an RBG size for a PUSCH.

In an embodiment, the first parameter subset includes: using a configuration 2 for an RBG size for a PUSCH.

In an embodiment, the first parameter subset includes: enabling pi/2-BPSK modulation with transform precoding.

In an embodiment, the first parameter subset includes: not enabling pi/2-BPSK modulation with transform precoding.

In an embodiment, the first parameter subset includes: a codebook-based transmission scheme.

In an embodiment, the first parameter subset includes: a non-codebook-based transmission scheme.

In an embodiment, the first parameter subset includes: single-antenna-port PUSCH transmission.

In an embodiment, the first parameter subset includes: that a scheduling granularity is one PRB.

In an embodiment, the first parameter subset includes: a value 64QAM.

In an embodiment, the first parameter subset includes: that no symbol is explicitly defined for DL-to-UL switching.

In an embodiment, the first parameter subset includes: a value of msg3-transformPrecoder.

In an embodiment, the first parameter subset includes: that a priority indicator field is not included in one DCI format.

In an embodiment, the first parameter subset includes: that one field is not included in one DCI format.

In an embodiment, at least one parameter in the first parameter subset represents the number of repetitions for data.

In an embodiment, at least one parameter in the first parameter subset represents a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the first parameter subset represents a DMRS configuration for PUSCH transmission using a PUSCH mapping type A.

In an embodiment, at least one parameter in the first parameter subset represents a DMRS configuration for PUSCH transmission using a PUSCH mapping type B.

In an embodiment, at least one parameter in the first parameter subset represents related information of power control for a PUSCH.

In an embodiment, at least one parameter in the first parameter subset represents a frequency hopping mode.

In an embodiment, at least one parameter in the first parameter subset represents a set of frequency hopping offset(s).

In an embodiment, at least one parameter in the first parameter subset represents a resource allocation type.

In an embodiment, at least one parameter in the first parameter subset represents a frequency domain resource allocation type.

In an embodiment, at least one parameter in the first parameter subset represents a list of time domain allocations for timing of UL assignment to UL data.

In an embodiment, at least one parameter in the first parameter subset represents an MCS table used for a PUSCH when there is no transformer precoder.

In an embodiment, at least one parameter in the first parameter subset represents an MCS table used for a PUSCH when there is a transformer precoder.

In an embodiment, at least one parameter in the first parameter subset represents whether to enable transform precoding.

In an embodiment, at least one parameter in the first parameter subset represents a particular selection of a transformer precoder for a PUSCH.

In an embodiment, at least one parameter in the first parameter subset represents a subset of PMIs addressed by TPMIs.

In an embodiment, at least one parameter in the first parameter subset represents a subset of PMIs addressed by TRIs.

In an embodiment, at least one parameter in the first parameter subset represents an RBG size selected between a configuration 1 and a configuration 2 for a PUSCH.

In an embodiment, at least one parameter in the first parameter subset represents a beta offset set.

In an embodiment, at least one parameter in the first parameter subset represents whether to enable pi/2-BPSK modulation with transform precoding.

In an embodiment, at least one parameter in the first parameter subset is used for determining the number of repetitions for data.

In an embodiment, at least one parameter in the first parameter subset is used for determining a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the first parameter subset is used for determining a DMRS configuration for PUSCH transmission using a PUSCH mapping type A.

In an embodiment, at least one parameter in the first parameter subset is used for determining a DMRS configuration for PUSCH transmission using a PUSCH mapping type B.

In an embodiment, at least one parameter in the first parameter subset is used for determining power control for a PUSCH.

In an embodiment, at least one parameter in the first parameter subset is used for determining a frequency hopping mode.

In an embodiment, at least one parameter in the first parameter subset is used for determining a set of frequency hopping offset(s).

In an embodiment, at least one parameter in the first parameter subset is used for determining a resource allocation type.

In an embodiment, at least one parameter in the first parameter subset is used for determining a frequency domain resource allocation type.

In an embodiment, at least one parameter in the first parameter subset is used for determining a list of time domain allocations for timing of UL assignment to UL data.

In an embodiment, at least one parameter in the first parameter subset is used for determining an MCS table used for a PUSCH when there is no transformer precoder.

In an embodiment, at least one parameter in the first parameter subset is used for determining an MCS table used for a PUSCH when there is a transformer precoder.

In an embodiment, at least one parameter in the first parameter subset is used for determining whether to enable transform precoding.

In an embodiment, at least one parameter in the first parameter subset is used for determining a particular selection of a transformer precoder for a PUSCH.

In an embodiment, at least one parameter in the first parameter subset is used for determining a subset of PMIs addressed by TPMIs.

In an embodiment, at least one parameter in the first parameter subset is used for determining a subset of PMIs addressed by TRIs.

In an embodiment, at least one parameter in the first parameter subset is used for determining an RBG size selected between a configuration 1 and a configuration 2 for a PUSCH.

In an embodiment, at least one parameter in the first parameter subset is used for determining a beta offset set.

In an embodiment, at least one parameter in the first parameter subset is used for determining whether to enable pi/2-BPSK modulation with transform precoding.

In an embodiment, at least one parameter in the first parameter subset is used for indicating the number of repetitions for data.

In an embodiment, at least one parameter in the first parameter subset is used for indicating a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the first parameter subset is used for indicating a DMRS configuration for PUSCH transmission using a PUSCH mapping type A.

In an embodiment, at least one parameter in the first parameter subset is used for indicating a DMRS configuration for PUSCH transmission using a PUSCH mapping type B.

In an embodiment, at least one parameter in the first parameter subset is used for indicating power control for a PUSCH.

In an embodiment, at least one parameter in the first parameter subset is used for indicating a frequency hopping mode.

In an embodiment, at least one parameter in the first parameter subset is used for indicating a set of frequency hopping offset(s).

In an embodiment, at least one parameter in the first parameter subset is used for indicating a resource allocation type.

In an embodiment, at least one parameter in the first parameter subset is used for indicating a frequency domain resource allocation type.

In an embodiment, at least one parameter in the first parameter subset is used for indicating a list of time domain allocations for timing of UL assignment to UL data.

In an embodiment, at least one parameter in the first parameter subset is used for indicating an MCS table used for a PUSCH when there is no transformer precoder.

In an embodiment, at least one parameter in the first parameter subset is used for indicating an MCS table used for a PUSCH when there is a transformer precoder.

In an embodiment, at least one parameter in the first parameter subset is used for indicating whether to enable transform precoding.

In an embodiment, at least one parameter in the first parameter subset is used for indicating a particular selection of a transformer precoder for a PUSCH.

In an embodiment, at least one parameter in the first parameter subset is used for indicating a subset of PMIs addressed by TPMIs.

In an embodiment, at least one parameter in the first parameter subset is used for indicating a subset of PMIs addressed by TRIs.

In an embodiment, at least one parameter in the first parameter subset is used for indicating an RBG size selected between a configuration 1 and a configuration 2 for a PUSCH.

In an embodiment, at least one parameter in the first parameter subset is used for indicating a beta offset set.

In an embodiment, at least one parameter in the first parameter subset is used for indicating whether to enable pi/2-BPSK modulation with transform precoding.

In an embodiment, the first parameter subset includes: the number of repetitions for data.

In an embodiment, the first parameter subset includes: a transmission scheme for a PUSCH.

In an embodiment, the transmission scheme is one of codebook-based transmission, non-codebook-based transmission, and single-antenna-port transmission.

In an embodiment, the first parameter subset includes: a DMRS configuration for PUSCH transmission using a PUSCH mapping type A.

In an embodiment, the first parameter subset includes: a DMRS configuration for PUSCH transmission using a PUSCH mapping type B.

In an embodiment, the first parameter subset includes: related information of power control for a PUSCH.

In an embodiment, the first parameter subset includes: a frequency hopping mode.

In an embodiment, the first parameter subset includes: a set of frequency hopping offset(s).

In an embodiment, the first parameter subset includes: a resource allocation type.

In an embodiment, the first parameter subset includes: a frequency domain resource allocation type.

In an embodiment, the first parameter subset includes: a list of time domain allocations for timing of UL assignment to UL data.

In an embodiment, the first parameter subset includes: an MCS table used for a PUSCH when there is no transformer precoder.

In an embodiment, the first parameter subset includes: an MCS table used for a PUSCH when there is a transformer precoder.

In an embodiment, the first parameter subset includes: information about whether to enable transform precoding.

In an embodiment, the first parameter subset includes: a particular selection of a transformer precoder for a PUSCH.

In an embodiment, the first parameter subset includes: a subset of PMIs addressed by TPMIs.

In an embodiment, the first parameter subset includes: a subset of PMIs addressed by TRIs.

In an embodiment, the first parameter subset includes: an RBG size selected between a configuration 1 and a configuration 2 for a PUSCH.

In an embodiment, the first parameter subset includes: a beta offset set.

In an embodiment, the first parameter subset includes: information about whether to enable pi/2-BPSK modulation with transform precoding.

In an embodiment, the first parameter subset includes: whether an Antenna ports field exists.

In an embodiment, the first parameter subset includes: whether to enable PUSCH repetitions counted on the basis of available slots.

In an embodiment, the first parameter subset includes: a set of beta offsets configured for multiplexing of a HARQ-ACK on PUSCHs with different priorities.

In an embodiment, the first parameter subset includes: DMRS bundling information for a PUSCH.

In an embodiment, the first parameter subset includes: whether a DMRS Sequence Initialization field exists.

In an embodiment, the first parameter subset includes: a size of a HARQ process number field.

In an embodiment, the first parameter subset includes: a pattern for an invalid symbol for a PUSCH transmission type B.

In an embodiment, the first parameter subset includes: whether a cyclical mapping pattern or a sequential mapping pattern should be followed when two SRS resource sets are configured for PUSCH transmission and PUSCH transmission occasions are associated with the two SRS resource sets.

In an embodiment, the first parameter subset includes: a list of minimum K2 values.

In an embodiment, the first parameter subset includes: a size of a Redundancy version field.

In an embodiment, the first parameter subset includes: the number of symbols after the last semi-static DL symbol that are invalid for a PUSCH repetition type B.

In an embodiment, the first parameter subset includes: whether a priority indicator field exists.

In an embodiment, the first parameter subset includes: whether to follow a behavior for a PUSCH repetition type A or a behavior for a PUSCH repetition type B.

In an embodiment, the first parameter subset includes: whether a second TPC field exists.

In an embodiment, the first parameter subset includes: an RV offset configured for a starting RV for the first repetition (first actual repetition in a PUSCH repetition type B) towards the second SRS resource set for a PUSCH.

In an embodiment, the first parameter subset includes: a list of combinations of cyclic prefix extension, a CAPC, and a UL channel access type.

In an embodiment, the first parameter subset includes: a UL full power transmission mode.

In an embodiment, the first parameter subset includes: a scheduling granularity applicable to a starting point indication and a length indication for a resource allocation type 1.

In an embodiment, at least one parameter in the first parameter subset is used for indicating whether an Antenna ports field exists.

In an embodiment, at least one parameter in the first parameter subset is used for indicating whether to enable PUSCH repetitions counted on the basis of available slots.

In an embodiment, at least one parameter in the first parameter subset is used for indicating a set of beta offsets configured for multiplexing of a HARQ-ACK on PUSCHs with different priorities.

In an embodiment, at least one parameter in the first parameter subset is used for indicating DMRS bundling information for a PUSCH.

In an embodiment, at least one parameter in the first parameter subset is used for indicating whether a DMRS Sequence Initialization field exists.

In an embodiment, at least one parameter in the first parameter subset is used for indicating a size of a HARQ process number field.

In an embodiment, at least one parameter in the first parameter subset is used for indicating a pattern for an invalid symbol for a PUSCH transmission type B.

In an embodiment, at least one parameter in the first parameter subset is used for indicating: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the first parameter subset is used for indicating a list of minimum K2 values.

In an embodiment, at least one parameter in the first parameter subset is used for indicating a size of a Redundancy version field.

In an embodiment, at least one parameter in the first parameter subset is used for indicating the number of symbols after the last semi-static DL symbol that are invalid for a PUSCH repetition type B.

In an embodiment, at least one parameter in the first parameter subset is used for indicating whether a priority indicator field exists.

In an embodiment, at least one parameter in the first parameter subset is used for indicating whether to follow a behavior for a PUSCH repetition type A or a behavior for a PUSCH repetition type B.

In an embodiment, at least one parameter in the first parameter subset is used for indicating whether a second TPC field exists.

In an embodiment, at least one parameter in the first parameter subset is used for indicating an RV offset configured for a starting RV for the first repetition (first actual repetition in a PUSCH repetition type B) towards the second SRS resource set for a PUSCH.

In an embodiment, at least one parameter in the first parameter subset is used for indicating a list of combinations of cyclic prefix extension, a CAPC, and a UL channel access type.

In an embodiment, at least one parameter in the first parameter subset is used for indicating a UL full power transmission mode.

In an embodiment, at least one parameter in the first parameter subset is used for indicating a scheduling granularity applicable to a starting point indication and a length indication for a resource allocation type 1.

In an embodiment, at least one parameter in the first parameter subset is used for determining whether an Antenna ports field exists.

In an embodiment, at least one parameter in the first parameter subset is used for determining whether to enable PUSCH repetitions counted on the basis of available slots.

In an embodiment, at least one parameter in the first parameter subset is used for determining a set of beta offsets configured for multiplexing of a HARQ-ACK on PUSCHs with different priorities.

In an embodiment, at least one parameter in the first parameter subset is used for determining DMRS bundling information for a PUSCH.

In an embodiment, at least one parameter in the first parameter subset is used for determining whether a DMRS Sequence Initialization field exists.

In an embodiment, at least one parameter in the first parameter subset is used for determining a size of a HARQ process number field.

In an embodiment, at least one parameter in the first parameter subset is used for determining a pattern for an invalid symbol for a PUSCH transmission type B.

In an embodiment, at least one parameter in the first parameter subset is used for determining: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the first parameter subset is used for determining a list of minimum K2 values.

In an embodiment, at least one parameter in the first parameter subset is used for determining a size of a Redundancy version field.

In an embodiment, at least one parameter in the first parameter subset is used for determining the number of symbols after the last semi-static DL symbol that are invalid for a PUSCH repetition type B.

In an embodiment, at least one parameter in the first parameter subset is used for determining whether a priority indicator field exists.

In an embodiment, at least one parameter in the first parameter subset is used for determining whether to follow a behavior for a PUSCH repetition type A or a behavior for a PUSCH repetition type B.

In an embodiment, at least one parameter in the first parameter subset is used for determining whether a second TPC field exists.

In an embodiment, at least one parameter in the first parameter subset is used for determining an RV offset configured for a starting RV for the first repetition (first actual repetition in a PUSCH repetition type B) towards the second SRS resource set for a PUSCH.

In an embodiment, at least one parameter in the first parameter subset is used for determining a list of combinations of cyclic prefix extension, a CAPC, and a UL channel access type.

In an embodiment, at least one parameter in the first parameter subset is used for determining a UL full power transmission mode.

In an embodiment, at least one parameter in the first parameter subset is used for determining a scheduling granularity applicable to a starting point indication and a length indication for a resource allocation type 1.

In an embodiment, at least one parameter in the first parameter subset represents whether an Antenna ports field exists.

In an embodiment, at least one parameter in the first parameter subset represents whether to enable PUSCH repetitions counted on the basis of available slots.

In an embodiment, at least one parameter in the first parameter subset represents a set of beta offsets configured for multiplexing of a HARQ-ACK on PUSCHs with different priorities.

In an embodiment, at least one parameter in the first parameter subset represents DMRS bundling information for a PUSCH.

In an embodiment, at least one parameter in the first parameter subset represents whether a DMRS Sequence Initialization field exists.

In an embodiment, at least one parameter in the first parameter subset represents a size of a HARQ process number field.

In an embodiment, at least one parameter in the first parameter subset represents a pattern for an invalid symbol for a PUSCH transmission type B.

In an embodiment, at least one parameter in the first parameter subset represents: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the first parameter subset represents a list of minimum K2 values.

In an embodiment, at least one parameter in the first parameter subset represents a size of a Redundancy version field.

In an embodiment, at least one parameter in the first parameter subset represents the number of symbols after the last semi-static DL symbol that are invalid for a PUSCH repetition type B.

In an embodiment, at least one parameter in the first parameter subset represents whether a priority indicator field exists.

In an embodiment, at least one parameter in the first parameter subset represents whether to follow a behavior for a PUSCH repetition type A or a behavior for a PUSCH repetition type B.

In an embodiment, at least one parameter in the first parameter subset represents whether a second TPC field exists.

In an embodiment, at least one parameter in the first parameter subset represents an RV offset configured for a starting RV for the first repetition (first actual repetition in a PUSCH repetition type B) towards the second SRS resource set for a PUSCH.

In an embodiment, at least one parameter in the first parameter subset represents a list of combinations of cyclic prefix extension, a CAPC, and a UL channel access type.

In an embodiment, at least one parameter in the first parameter subset represents a UL full power transmission mode.

In an embodiment, at least one parameter in the first parameter subset represents a scheduling granularity applicable to a starting point indication and a length indication for a resource allocation type 1.

In an embodiment, at least one parameter in the first parameter subset represents the maximum number of CBGs of each TB.

In an embodiment, at least one parameter in the first parameter subset represents whether to enable CBG-based transmission.

In an embodiment, at least one parameter in the first parameter subset represents the maximum number of MIMO layers for a PUSCH in all UL BWPs corresponding to a cell.

In an embodiment, at least one parameter in the first parameter subset represents the number of HARQ processes used on a PUSCH of a cell.

In an embodiment, at least one parameter in the first parameter subset represents whether to enable a configuration of an advanced processing time capability 2 for a PUSCH.

In an embodiment, at least one parameter in the first parameter subset represents whether to enable LBRM.

In an embodiment, at least one parameter in the first parameter subset represents a HARQ mode for a HARQ process ID.

In an embodiment, at least one parameter in the first parameter subset represents whether to enable group hopping for RMRS transmission with transform precoding.

In an embodiment, at least one parameter in the first parameter subset represents a power offset between transmission of a msg3 and a RACH preamble.

In an embodiment, at least one parameter in the first parameter subset represents a P0 value of a PUSCH with a grant (other than a msg3).

In an embodiment, at least one parameter in the first parameter subset is used for determining the maximum number of CBGs of each TB.

In an embodiment, at least one parameter in the first parameter subset is used for determining whether to enable CBG-based transmission.

In an embodiment, at least one parameter in the first parameter subset is used for determining the maximum number of MIMO layers for a PUSCH in all UL BWPs corresponding to a cell.

In an embodiment, at least one parameter in the first parameter subset is used for determining the number of HARQ processes used on a PUSCH of a cell.

In an embodiment, at least one parameter in the first parameter subset is used for determining whether to enable a configuration of an advanced processing time capability 2 for a PUSCH.

In an embodiment, at least one parameter in the first parameter subset is used for determining whether to enable LBRM.

In an embodiment, at least one parameter in the first parameter subset is used for determining a HARQ mode for a HARQ process ID.

In an embodiment, at least one parameter in the first parameter subset is used for determining whether to enable group hopping for RMRS transmission with transform precoding.

In an embodiment, at least one parameter in the first parameter subset is used for determining a power offset between transmission of a msg3 and a RACH preamble.

In an embodiment, at least one parameter in the first parameter subset is used for determining a P0 value of a PUSCH with a grant (other than a msg3).

In an embodiment, at least one parameter in the first parameter subset is used for indicating the maximum number of CBGs of each TB.

In an embodiment, at least one parameter in the first parameter subset is used for indicating whether to enable CBG-based transmission.

In an embodiment, at least one parameter in the first parameter subset is used for indicating the maximum number of MIMO layers for a PUSCH in all UL BWPs corresponding to a cell.

In an embodiment, at least one parameter in the first parameter subset is used for indicating the number of HARQ processes used on a PUSCH of a cell.

In an embodiment, at least one parameter in the first parameter subset is used for indicating whether to enable a configuration of an advanced processing time capability 2 for a PUSCH.

In an embodiment, at least one parameter in the first parameter subset is used for indicating whether to enable LBRM.

In an embodiment, at least one parameter in the first parameter subset is used for indicating a HARQ mode for a HARQ process ID.

In an embodiment, at least one parameter in the first parameter subset is used for indicating whether to enable group hopping for RMRS transmission with transform precoding.

In an embodiment, at least one parameter in the first parameter subset is used for indicating a power offset between transmission of a msg3 and a RACH preamble.

In an embodiment, at least one parameter in the first parameter subset is used for indicating a P0 value of a PUSCH with a grant (other than a msg3).

In an embodiment, the first parameter subset includes: the maximum number of CBGs of each TB.

In an embodiment, the first parameter subset includes: whether to enable CBG-based transmission.

In an embodiment, the first parameter subset includes: the maximum number of MIMO layers for a PUSCH in all UL BWPs corresponding to a cell.

In an embodiment, the first parameter subset includes: the number of HARQ processes used on a PUSCH of a cell.

In an embodiment, the first parameter subset includes: whether to enable a configuration of an advanced processing time capability 2 for a PUSCH.

In an embodiment, the first parameter subset includes: whether to enable LBRM.

In an embodiment, the first parameter subset includes: a HARQ mode for a HARQ process ID.

In an embodiment, the first parameter subset includes: whether to enable group hopping for RMRS transmission with transform precoding.

In an embodiment, the first parameter subset includes: a power offset between transmission of a msg3 and a RACH preamble.

In an embodiment, the first parameter subset includes: a P0 value of a PUSCH with a grant (other than a msg3).

In an embodiment, at least one parameter in the first parameter subset represents enabling CBG-based transmission.

In an embodiment, at least one parameter in the first parameter subset represents not enabling CBG-based transmission.

In an embodiment, at least one parameter in the first parameter subset represents that the number of HARQ processes used on a PUSCH of a cell is 16.

In an embodiment, at least one parameter in the first parameter subset represents enabling a configuration of an advanced processing time capability 2 for a PUSCH.

In an embodiment, at least one parameter in the first parameter subset represents not enabling a configuration of an advanced processing time capability 2 for a PUSCH.

In an embodiment, at least one parameter in the first parameter subset represents enabling LBRM.

In an embodiment, at least one parameter in the first parameter subset represents not enabling LBRM.

In an embodiment, at least one parameter in the first parameter subset represents whether to enable LBRM.

In an embodiment, at least one parameter in the first parameter subset represents enabling group hopping for RMRS transmission with transform precoding.

In an embodiment, at least one parameter in the first parameter subset represents not enabling group hopping for RMRS transmission with transform precoding.

In an embodiment, at least one parameter in the first parameter subset is used for determining to enable CBG-based transmission.

In an embodiment, at least one parameter in the first parameter subset is used for determining not to enable CBG-based transmission.

In an embodiment, at least one parameter in the first parameter subset is used for determining that the number of HARQ processes used on a PUSCH of a cell is 16.

In an embodiment, at least one parameter in the first parameter subset is used for determining to enable a configuration of an advanced processing time capability 2 for a PUSCH.

In an embodiment, at least one parameter in the first parameter subset is used for determining not to enable a configuration of an advanced processing time capability 2 for a PUSCH.

In an embodiment, at least one parameter in the first parameter subset is used for determining to enable LBRM.

In an embodiment, at least one parameter in the first parameter subset is used for determining not to enable LBRM.

In an embodiment, at least one parameter in the first parameter subset is used for determining whether to enable LBRM.

In an embodiment, at least one parameter in the first parameter subset is used for determining to enable group hopping for RMRS transmission with transform precoding.

In an embodiment, at least one parameter in the first parameter subset is used for determining not to enable group hopping for RMRS transmission with transform precoding.

In an embodiment, at least one parameter in the first parameter subset is used for indicating to enable CBG-based transmission.

In an embodiment, at least one parameter in the first parameter subset is used for indicating not to enable CBG-based transmission.

In an embodiment, at least one parameter in the first parameter subset is used for indicating that the number of HARQ processes used on a PUSCH of a cell is 16.

In an embodiment, at least one parameter in the first parameter subset is used for indicating to enable a configuration of an advanced processing time capability 2 for a PUSCH.

In an embodiment, at least one parameter in the first parameter subset is used for indicating not to enable a configuration of an advanced processing time capability 2 for a PUSCH.

In an embodiment, at least one parameter in the first parameter subset is used for indicating to enable LBRM.

In an embodiment, at least one parameter in the first parameter subset is used for indicating not to enable LBRM.

In an embodiment, at least one parameter in the first parameter subset is used for indicating whether to enable LBRM.

In an embodiment, at least one parameter in the first parameter subset is used for indicating to enable group hopping for RMRS transmission with transform precoding.

In an embodiment, at least one parameter in the first parameter subset is used for indicating not to enable group hopping for RMRS transmission with transform precoding.

In an embodiment, the first parameter subset includes: enabling CBG-based transmission.

In an embodiment, the first parameter subset includes: not enabling CBG-based transmission.

In an embodiment, the first parameter subset includes: that the number of HARQ processes used on a PUSCH of a cell is 16.

In an embodiment, the first parameter subset includes: enabling a configuration of an advanced processing time capability 2 for a PUSCH.

In an embodiment, the first parameter subset includes: not enabling a configuration of an advanced processing time capability 2 for a PUSCH.

In an embodiment, the first parameter subset includes: enabling LBRM.

In an embodiment, the first parameter subset includes: not enabling LBRM.

In an embodiment, the first parameter subset includes: whether to enable LBRM.

In an embodiment, the first parameter subset includes: enabling group hopping for RMRS transmission with transform precoding.

In an embodiment, the first parameter subset includes: not enabling group hopping for RMRS transmission with transform precoding.

### Embodiment 8

Embodiment 8 illustrates a diagram of a relationship between a first RRC signaling set, second RRC signaling, a first cell, a first parameter set, and a second parameter subset according to an embodiment of this application, as shown in FIG. 8.

In Embodiment 8, the number of cells included in the at least one cell is greater than 1. The first RRC signaling set includes second RRC signaling, and the second RRC signaling is not configured for the first cell. The first parameter set includes a second parameter subset, and the second parameter subset uses a configuration of the second RRC signaling.

In an embodiment, the second RRC signaling is configured for a cell other than the first cell.

In an embodiment, the second RRC signaling includes at least one IE.

In an embodiment, the second RRC signaling includes at least one field in at least one IE.

In an embodiment, the second RRC signaling includes at least a part of ServingCellConfig.

In an embodiment, the second RRC signaling includes at least a part of BWP-Uplink.

In an embodiment, the second RRC signaling includes at least a part of BWP-UplinkCommon.

In an embodiment, the second RRC signaling includes at least a part of BWP-UplinkDedicated.

In an embodiment, the second RRC signaling includes at least a part of PUSCH-Config.

In an embodiment, the second RRC signaling includes at least a part of PUSCH-ConfigCommon.

In an embodiment, the second RRC signaling includes at least a part of PUSCH-ServingCellConfig.

In an embodiment, the second RRC signaling includes pusch-AggregationFactor.

In an embodiment, the second RRC signaling includes txConfig.

In an embodiment, the second RRC signaling includes dmrs-UplinkForPUSCH-MappingTypeA.

In an embodiment, the second RRC signaling includes dmrs-UplinkForPUSCH-MappingTypeB.

In an embodiment, the second RRC signaling includes pusch-PowerControl.

In an embodiment, the second RRC signaling includes frequencyHopping.

In an embodiment, the second RRC signaling includes frequencyHoppingOffsetLists.

In an embodiment, the second RRC signaling includes resourceAllocation.

In an embodiment, the second RRC signaling includes pusch-TimeDomainAllocationList.

In an embodiment, the second RRC signaling includes mcs-Table.

In an embodiment, the second RRC signaling includes mcs-TableTransformPrecoder.

In an embodiment, the second RRC signaling includes transformPrecoder.

In an embodiment, the second RRC signaling includes codebookSubset.

In an embodiment, the second RRC signaling includes maxRank.

In an embodiment, the second RRC signaling includes rbg-Size.

In an embodiment, the second RRC signaling includes uci-OnPUSCH.

In an embodiment, the second RRC signaling includes tp-pi2BPSK.

In an embodiment, the second RRC signaling is pusch-AggregationFactor.

In an embodiment, the second RRC signaling is txConfig.

In an embodiment, the second RRC signaling is dmrs-UplinkForPUSCH-MappingTypeA.

In an embodiment, the second RRC signaling is dmrs-UplinkForPUSCH-MappingTypeB.

In an embodiment, the second RRC signaling is pusch-PowerControl.

In an embodiment, the second RRC signaling is frequencyHopping.

In an embodiment, the second RRC signaling is frequencyHoppingOffsetLists.

In an embodiment, the second RRC signaling is resourceAllocation.

In an embodiment, the second RRC signaling is pusch-TimeDomainAllocationList.

In an embodiment, the second RRC signaling is mcs-Table.

In an embodiment, the second RRC signaling is mcs-TableTransformPrecoder.

In an embodiment, the second RRC signaling is transformPrecoder.

In an embodiment, the second RRC signaling is codebookSubset.

In an embodiment, the second RRC signaling is maxRank.

In an embodiment, the second RRC signaling is rbg-Size.

In an embodiment, the second RRC signaling is uci-OnPUSCH.

In an embodiment, the second RRC signaling is tp-pi2BPSK.

In an embodiment, the name of the second RRC signaling includes pusch-AggregationFactor.

In an embodiment, the name of the second RRC signaling includes pusch-AggregationFactor.

In an embodiment, the name of the second RRC signaling includes txConfig.

In an embodiment, the name of the second RRC signaling includes dmrs-UplinkForPUSCH-MappingTypeA.

In an embodiment, the name of the second RRC signaling includes dmrs-UplinkForPUSCH-MappingTypeB.

In an embodiment, the name of the second RRC signaling includes pusch-PowerControl.

In an embodiment, the name of the second RRC signaling includes frequencyHopping.

In an embodiment, the name of the second RRC signaling includes frequencyHoppingOffsetLists.

In an embodiment, the name of the second RRC signaling includes resourceAllocation.

In an embodiment, the name of the second RRC signaling includes pusch-TimeDomainAllocationList.

In an embodiment, the name of the second RRC signaling includes mcs-Table.

In an embodiment, the name of the second RRC signaling includes mcs-TableTransformPrecoder.

In an embodiment, the name of the second RRC signaling includes transformPrecoder.

In an embodiment, the name of the second RRC signaling includes codebookSubset.

In an embodiment, the name of the second RRC signaling includes maxRank.

In an embodiment, the name of the second RRC signaling includes rbg-Size.

In an embodiment, the name of the second RRC signaling includes uci-OnPUSCH.

In an embodiment, the name of the second RRC signaling includes tp-pi2BPSK.

In an embodiment, the name of the second RRC signaling includes minimumSchedulingOffsetK2.

In an embodiment, the name of the second RRC signaling includes ul-AccessConfigList.

In an embodiment, the name of the second RRC signaling includes harq-ProcessNumberSize.

In an embodiment, the name of the second RRC signaling includes dmrs-SequenceInitialization.

In an embodiment, the name of the second RRC signaling includes numberOfBitsForRV

In an embodiment, the name of the second RRC signaling includes antennaPortsFieldPresence.

In an embodiment, the name of the second RRC signaling includes invalidSymbolPatternIndicator.

In an embodiment, the name of the second RRC signaling includes priorityIndicator.

In an embodiment, the name of the second RRC signaling includes pusch-RepTypeIndicator.

In an embodiment, the name of the second RRC signaling includes resourceAllocationType1 Granularity.

In an embodiment, the name of the second RRC signaling includes ul-FullPowerTransmission.

In an embodiment, the name of the second RRC signaling includes numberOfInvalidSymbolsForDL-UL-Switching.

In an embodiment, the name of the second RRC signaling includes betaOffsetsCrossPri0.

In an embodiment, the name of the second RRC signaling includes betaOffsetsCrossPri1.

In an embodiment, the name of the second RRC signaling includes mappingPattern.

In an embodiment, the name of the second RRC signaling includes secondTPCField.

In an embodiment, the name of the second RRC signaling includes sequenceOffsetForRV.

In an embodiment, the name of the second RRC signaling includes availableSlotCounting.

In an embodiment, the name of the second RRC signaling includes dmrs-BundlingPUSCH-Config.

In an embodiment, the name of the second RRC signaling includes -r18.

In an embodiment, the name of the second RRC signaling includes -r19.

In an embodiment, the name of the second RRC signaling includes -r20.

In an embodiment, the second RRC signaling is PUSCH-ConfigCommon.

In an embodiment, the second RRC signaling is PUSCH-ServingCellConfig.

In an embodiment, the second RRC signaling includes at least one of PUSCH-ConfigCommon and PUSCH-ServingCellConfig.

In an embodiment, the second RRC signaling is PUSCH-Config.

In an embodiment, the second RRC signaling includes PUSCH-Config.

In an embodiment, the second RRC signaling includes configuration information for a PUSCH.

In an embodiment, the second parameter subset includes only one parameter.

In an embodiment, the second parameter subset includes multiple parameters.

In an embodiment, at least one parameter in the second parameter subset represents the number of repetitions for data.

In an embodiment, at least one parameter in the second parameter subset represents a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the second parameter subset represents a DMRS configuration for PUSCH transmission using a PUSCH mapping type A.

In an embodiment, at least one parameter in the second parameter subset represents a DMRS configuration for PUSCH transmission using a PUSCH mapping type B.

In an embodiment, at least one parameter in the second parameter subset represents related information of power control for a PUSCH.

In an embodiment, at least one parameter in the second parameter subset represents a frequency hopping mode.

In an embodiment, at least one parameter in the second parameter subset represents a set of frequency hopping offset(s).

In an embodiment, at least one parameter in the second parameter subset represents a resource allocation type.

In an embodiment, at least one parameter in the second parameter subset represents a frequency domain resource allocation type.

In an embodiment, at least one parameter in the second parameter subset represents a list of time domain allocations for timing of UL assignment to UL data.

In an embodiment, at least one parameter in the second parameter subset represents an MCS table used for a PUSCH when there is no transformer precoder.

In an embodiment, at least one parameter in the second parameter subset represents an MCS table used for a PUSCH when there is a transformer precoder.

In an embodiment, at least one parameter in the second parameter subset represents whether to enable transform precoding.

In an embodiment, at least one parameter in the second parameter subset represents a particular selection of a transformer precoder for a PUSCH.

In an embodiment, at least one parameter in the second parameter subset represents a subset of PMIs addressed by TPMIs.

In an embodiment, at least one parameter in the second parameter subset represents a subset of PMIs addressed by TRIs.

In an embodiment, at least one parameter in the second parameter subset represents an RBG size selected between a configuration 1 and a configuration 2 for a PUSCH.

In an embodiment, at least one parameter in the second parameter subset represents a beta offset set.

In an embodiment, at least one parameter in the second parameter subset represents whether to enable pi/2-BPSK modulation with transform precoding.

In an embodiment, at least one parameter in the second parameter subset is used for determining the number of repetitions for data.

In an embodiment, at least one parameter in the second parameter subset is used for determining a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the second parameter subset is used for determining a DMRS configuration for PUSCH transmission using a PUSCH mapping type A.

In an embodiment, at least one parameter in the second parameter subset is used for determining a DMRS configuration for PUSCH transmission using a PUSCH mapping type B.

In an embodiment, at least one parameter in the second parameter subset is used for determining power control for a PUSCH.

In an embodiment, at least one parameter in the second parameter subset is used for determining a frequency hopping mode.

In an embodiment, at least one parameter in the second parameter subset is used for determining a set of frequency hopping offset(s).

In an embodiment, at least one parameter in the second parameter subset is used for determining a resource allocation type.

In an embodiment, at least one parameter in the second parameter subset is used for determining a frequency domain resource allocation type.

In an embodiment, at least one parameter in the second parameter subset is used for determining a list of time domain allocations for timing of UL assignment to UL data.

In an embodiment, at least one parameter in the second parameter subset is used for determining an MCS table used for a PUSCH when there is no transformer precoder.

In an embodiment, at least one parameter in the second parameter subset is used for determining an MCS table used for a PUSCH when there is a transformer precoder.

In an embodiment, at least one parameter in the second parameter subset is used for determining whether to enable transform precoding.

In an embodiment, at least one parameter in the second parameter subset is used for determining a particular selection of a transformer precoder for a PUSCH.

In an embodiment, at least one parameter in the second parameter subset is used for determining a subset of PMIs addressed by TPMIs.

In an embodiment, at least one parameter in the second parameter subset is used for determining a subset of PMIs addressed by TRIs.

In an embodiment, at least one parameter in the second parameter subset is used for determining an RBG size selected between a configuration 1 and a configuration 2 for a PUSCH.

In an embodiment, at least one parameter in the second parameter subset is used for determining a beta offset set.

In an embodiment, at least one parameter in the second parameter subset is used for determining whether to enable pi/2-BPSK modulation with transform precoding.

In an embodiment, at least one parameter in the second parameter subset is used for indicating the number of repetitions for data.

In an embodiment, at least one parameter in the second parameter subset is used for indicating a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the second parameter subset is used for indicating a DMRS configuration for PUSCH transmission using a PUSCH mapping type A.

In an embodiment, at least one parameter in the second parameter subset is used for indicating a DMRS configuration for PUSCH transmission using a PUSCH mapping type B.

In an embodiment, at least one parameter in the second parameter subset is used for indicating power control for a PUSCH.

In an embodiment, at least one parameter in the second parameter subset is used for indicating a frequency hopping mode.

In an embodiment, at least one parameter in the second parameter subset is used for indicating a set of frequency hopping offset(s).

In an embodiment, at least one parameter in the second parameter subset is used for indicating a resource allocation type.

In an embodiment, at least one parameter in the second parameter subset is used for indicating a frequency domain resource allocation type.

In an embodiment, at least one parameter in the second parameter subset is used for indicating a list of time domain allocations for timing of UL assignment to UL data.

In an embodiment, at least one parameter in the second parameter subset is used for indicating an MCS table used for a PUSCH when there is no transformer precoder.

In an embodiment, at least one parameter in the second parameter subset is used for indicating an MCS table used for a PUSCH when there is a transformer precoder.

In an embodiment, at least one parameter in the second parameter subset is used for indicating whether to enable transform precoding.

In an embodiment, at least one parameter in the second parameter subset is used for indicating a particular selection of a transformer precoder for a PUSCH.

In an embodiment, at least one parameter in the second parameter subset is used for indicating a subset of PMIs addressed by TPMIs.

In an embodiment, at least one parameter in the second parameter subset is used for indicating a subset of PMIs addressed by TRIs.

In an embodiment, at least one parameter in the second parameter subset is used for indicating an RBG size selected between a configuration 1 and a configuration 2 for a PUSCH.

In an embodiment, at least one parameter in the second parameter subset is used for indicating a beta offset set.

In an embodiment, at least one parameter in the second parameter subset is used for indicating whether to enable pi/2-BPSK modulation with transform precoding.

In an embodiment, the second parameter subset includes: the number of repetitions for data.

In an embodiment, the second parameter subset includes: a transmission scheme for a PUSCH.

In an embodiment, the transmission scheme is one of codebook-based transmission, non-codebook-based transmission, and single-antenna-port transmission.

In an embodiment, the second parameter subset includes: a DMRS configuration for PUSCH transmission using a PUSCH mapping type A.

In an embodiment, the second parameter subset includes: a DMRS configuration for PUSCH transmission using a PUSCH mapping type B.

In an embodiment, the second parameter subset includes: related information of power control for a PUSCH.

In an embodiment, the second parameter subset includes: a frequency hopping mode.

In an embodiment, the second parameter subset includes: a set of frequency hopping offset(s).

In an embodiment, the second parameter subset includes: a resource allocation type.

In an embodiment, the second parameter subset includes: a frequency domain resource allocation type.

In an embodiment, the second parameter subset includes: a list of time domain allocations for timing of UL assignment to UL data.

In an embodiment, the second parameter subset includes: an MCS table used for a PUSCH when there is no transformer precoder.

In an embodiment, the second parameter subset includes: an MCS table used for a PUSCH when there is a transformer precoder.

In an embodiment, the second parameter subset includes: information about whether to enable transform precoding.

In an embodiment, the second parameter subset includes: a particular selection of a transformer precoder for a PUSCH.

In an embodiment, the second parameter subset includes: a subset of PMIs addressed by TPMIs.

In an embodiment, the second parameter subset includes: a subset of PMIs addressed by TRIs.

In an embodiment, the second parameter subset includes: an RBG size selected between a configuration 1 and a configuration 2 for a PUSCH.

In an embodiment, the second parameter subset includes: a beta offset set.

In an embodiment, the second parameter subset includes: information about whether to enable pi/2-BPSK modulation with transform precoding.

In an embodiment, the second parameter subset includes: whether an Antenna ports field exists.

In an embodiment, the second parameter subset includes: whether to enable PUSCH repetitions counted on the basis of available slots.

In an embodiment, the second parameter subset includes: a set of beta offsets configured for multiplexing of a HARQ-ACK on PUSCHs with different priorities.

In an embodiment, the second parameter subset includes: DMRS bundling information for a PUSCH.

In an embodiment, the second parameter subset includes: whether a DMRS Sequence Initialization field exists.

In an embodiment, the second parameter subset includes: a size of a HARQ process number field.

In an embodiment, the second parameter subset includes: a pattern for an invalid symbol for a PUSCH transmission type B.

In an embodiment, the second parameter subset includes: whether a cyclical mapping pattern or a sequential mapping pattern should be followed when two SRS resource sets are configured for PUSCH transmission and PUSCH transmission occasions are associated with the two SRS resource sets.

In an embodiment, the second parameter subset includes: a list of minimum K2 values.

In an embodiment, the second parameter subset includes: a size of a Redundancy version field.

In an embodiment, the second parameter subset includes: the number of symbols after the last semi-static DL symbol that are invalid for a PUSCH repetition type B.

In an embodiment, the second parameter subset includes: whether a priority indicator field exists.

In an embodiment, the second parameter subset includes: whether to follow a behavior for a PUSCH repetition type A or a behavior for a PUSCH repetition type B.

In an embodiment, the second parameter subset includes: whether a second TPC field exists.

In an embodiment, the second parameter subset includes: an RV offset configured for a starting RV for the first repetition (first actual repetition in a PUSCH repetition type B) towards the second SRS resource set for a PUSCH.

In an embodiment, the second parameter subset includes: a list of combinations of cyclic prefix extension, a CAPC, and a UL channel access type.

In an embodiment, the second parameter subset includes: a UL full power transmission mode.

In an embodiment, the second parameter subset includes: a scheduling granularity applicable to a starting point indication and a length indication for a resource allocation type 1.

In an embodiment, at least one parameter in the second parameter subset is used for indicating whether an Antenna ports field exists.

In an embodiment, at least one parameter in the second parameter subset is used for indicating whether to enable PUSCH repetitions counted on the basis of available slots.

In an embodiment, at least one parameter in the second parameter subset is used for indicating a set of beta offsets configured for multiplexing of a HARQ-ACK on PUSCHs with different priorities.

In an embodiment, at least one parameter in the second parameter subset is used for indicating DMRS bundling information for a PUSCH.

In an embodiment, at least one parameter in the second parameter subset is used for indicating whether a DMRS Sequence Initialization field exists.

In an embodiment, at least one parameter in the second parameter subset is used for indicating a size of a HARQ process number field.

In an embodiment, at least one parameter in the second parameter subset is used for indicating a pattern for an invalid symbol for a PUSCH transmission type B.

In an embodiment, at least one parameter in the second parameter subset is used for indicating: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the second parameter subset is used for indicating a list of minimum K2 values.

In an embodiment, at least one parameter in the second parameter subset is used for indicating a size of a Redundancy version field.

In an embodiment, at least one parameter in the second parameter subset is used for indicating the number of symbols after the last semi-static DL symbol that are invalid for a PUSCH repetition type B.

In an embodiment, at least one parameter in the second parameter subset is used for indicating whether a priority indicator field exists.

In an embodiment, at least one parameter in the second parameter subset is used for indicating whether to follow a behavior for a PUSCH repetition type A or a behavior for a PUSCH repetition type B.

In an embodiment, at least one parameter in the second parameter subset is used for indicating whether a second TPC field exists.

In an embodiment, at least one parameter in the second parameter subset is used for indicating an RV offset configured for a starting RV for the first repetition (first actual repetition in a PUSCH repetition type B) towards the second SRS resource set for a PUSCH.

In an embodiment, at least one parameter in the second parameter subset is used for indicating a list of combinations of cyclic prefix extension, a CAPC, and a UL channel access type.

In an embodiment, at least one parameter in the second parameter subset is used for indicating a UL full power transmission mode.

In an embodiment, at least one parameter in the second parameter subset is used for indicating a scheduling granularity applicable to a starting point indication and a length indication for a resource allocation type 1.

In an embodiment, at least one parameter in the second parameter subset is used for determining whether an Antenna ports field exists.

In an embodiment, at least one parameter in the second parameter subset is used for determining whether to enable PUSCH repetitions counted on the basis of available slots.

In an embodiment, at least one parameter in the second parameter subset is used for determining a set of beta offsets configured for multiplexing of a HARQ-ACK on PUSCHs with different priorities.

In an embodiment, at least one parameter in the second parameter subset is used for determining DMRS bundling information for a PUSCH.

In an embodiment, at least one parameter in the second parameter subset is used for determining whether a DMRS Sequence Initialization field exists.

In an embodiment, at least one parameter in the second parameter subset is used for determining a size of a HARQ process number field.

In an embodiment, at least one parameter in the second parameter subset is used for determining a pattern for an invalid symbol for a PUSCH transmission type B.

In an embodiment, at least one parameter in the second parameter subset is used for determining: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the second parameter subset is used for determining a list of minimum K2 values.

In an embodiment, at least one parameter in the second parameter subset is used for determining a size of a Redundancy version field.

In an embodiment, at least one parameter in the second parameter subset is used for determining the number of symbols after the last semi-static DL symbol that are invalid for a PUSCH repetition type B.

In an embodiment, at least one parameter in the second parameter subset is used for determining whether a priority indicator field exists.

In an embodiment, at least one parameter in the second parameter subset is used for determining whether to follow a behavior for a PUSCH repetition type A or a behavior for a PUSCH repetition type B.

In an embodiment, at least one parameter in the second parameter subset is used for determining whether a second TPC field exists.

In an embodiment, at least one parameter in the second parameter subset is used for determining an RV offset configured for a starting RV for the first repetition (first actual repetition in a PUSCH repetition type B) towards the second SRS resource set for a PUSCH.

In an embodiment, at least one parameter in the second parameter subset is used for determining a list of combinations of cyclic prefix extension, a CAPC, and a UL channel access type.

In an embodiment, at least one parameter in the second parameter subset is used for determining a UL full power transmission mode.

In an embodiment, at least one parameter in the second parameter subset is used for determining a scheduling granularity applicable to a starting point indication and a length indication for a resource allocation type 1.

In an embodiment, at least one parameter in the second parameter subset represents whether an Antenna ports field exists.

In an embodiment, at least one parameter in the second parameter subset represents whether to enable PUSCH repetitions counted on the basis of available slots.

In an embodiment, at least one parameter in the second parameter subset represents a set of beta offsets configured for multiplexing of a HARQ-ACK on PUSCHs with different priorities.

In an embodiment, at least one parameter in the second parameter subset represents DMRS bundling information for a PUSCH.

In an embodiment, at least one parameter in the second parameter subset represents whether a DMRS Sequence Initialization field exists.

In an embodiment, at least one parameter in the second parameter subset represents a size of a HARQ process number field.

In an embodiment, at least one parameter in the second parameter subset represents a pattern for an invalid symbol for a PUSCH transmission type B.

In an embodiment, at least one parameter in the second parameter subset represents: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the second parameter subset represents a list of minimum K2 values.

In an embodiment, at least one parameter in the second parameter subset represents a size of a Redundancy version field.

In an embodiment, at least one parameter in the second parameter subset represents the number of symbols after the last semi-static DL symbol that are invalid for a PUSCH repetition type B.

In an embodiment, at least one parameter in the second parameter subset represents whether a priority indicator field exists.

In an embodiment, at least one parameter in the second parameter subset represents whether to follow a behavior for a PUSCH repetition type A or a behavior for a PUSCH repetition type B.

In an embodiment, at least one parameter in the second parameter subset represents whether a second TPC field exists.

In an embodiment, at least one parameter in the second parameter subset represents an RV offset configured for a starting RV for the first repetition (first actual repetition in a PUSCH repetition type B) towards the second SRS resource set for a PUSCH.

In an embodiment, at least one parameter in the second parameter subset represents a list of combinations of cyclic prefix extension, a CAPC, and a UL channel access type.

In an embodiment, at least one parameter in the second parameter subset represents a UL full power transmission mode.

In an embodiment, at least one parameter in the second parameter subset represents a scheduling granularity applicable to a starting point indication and a length indication for a resource allocation type 1.

In an embodiment, one subset of the first parameter set is the first parameter set or a proper subset of the first parameter set.

In an embodiment, one subset of the second parameter set is the first parameter set or a proper subset of the first parameter set.

In an embodiment, a subset of the third parameter set is the first parameter set or a proper subset of the first parameter set.

In an embodiment, in this application, that one subset of the first parameter set uses a configuration of one piece of RRC signaling includes the following meaning: Each parameter in the subset of the first parameter set uses the configuration of the piece of RRC signaling.

In an embodiment, in this application, that one subset of the first parameter set uses a configuration of one piece of RRC signaling includes the following meaning: The configuration of the piece of RRC signaling is used for determining the subset of the first parameter set.

In an embodiment, in this application, that one subset of the first parameter set uses a configuration of one piece of RRC signaling includes the following meaning: The configuration of the piece of RRC signaling is used for indicating the subset of the first parameter set.

In an embodiment, in this application, that one subset of the first parameter set uses a configuration of one piece of RRC signaling includes the following meaning: The configuration of the piece of RRC signaling is used for determining each parameter in the subset of the first parameter set.

In an embodiment, in this application, that one subset of the first parameter set uses a configuration of one piece of RRC signaling includes the following meaning: The configuration of the piece of RRC signaling is used for indicating each parameter in the subset of the first parameter set.

In an embodiment, in this application, that one subset of the first parameter set uses a configuration of one piece of RRC signaling includes the following meaning: For each parameter in the subset of the first parameter set, at least one field in the piece of RRC signaling is used for determining the parameter, or there is one field, in the piece of RRC signaling, that is used for determining the parameter.

In an embodiment, in this application, that one subset of the first parameter set uses a configuration of one piece of RRC signaling includes the following meaning: For each parameter in the subset of the first parameter set, at least one field in the piece of RRC signaling is used for indicating the parameter, or there is one field, in the piece of RRC signaling, that is used for indicating the parameter.

In an embodiment, there is no intersection set between the second parameter subset and the first parameter subset.

In an embodiment, at least one parameter in the second parameter subset represents the maximum number of CBGs of each TB.

In an embodiment, at least one parameter in the second parameter subset represents whether to enable CBG-based transmission.

In an embodiment, at least one parameter in the second parameter subset represents the maximum number of MIMO layers for a PUSCH in all UL BWPs corresponding to a cell.

In an embodiment, at least one parameter in the second parameter subset represents the number of HARQ processes used on a PUSCH of a cell.

In an embodiment, at least one parameter in the second parameter subset represents whether to enable a configuration of an advanced processing time capability 2 for a PUSCH.

In an embodiment, at least one parameter in the second parameter subset represents whether to enable LBRM.

In an embodiment, at least one parameter in the second parameter subset represents a HARQ mode for a HARQ process ID.

In an embodiment, at least one parameter in the second parameter subset represents whether to enable group hopping for RMRS transmission with transform precoding.

In an embodiment, at least one parameter in the second parameter subset represents a power offset between transmission of a msg3 and a RACH preamble.

In an embodiment, at least one parameter in the second parameter subset represents a P0 value of a PUSCH with a grant (other than a msg3).

In an embodiment, at least one parameter in the second parameter subset is used for determining the maximum number of CBGs of each TB.

In an embodiment, at least one parameter in the second parameter subset is used for determining whether to enable CBG-based transmission.

In an embodiment, at least one parameter in the second parameter subset is used for determining the maximum number of MIMO layers for a PUSCH in all UL BWPs corresponding to a cell.

In an embodiment, at least one parameter in the second parameter subset is used for determining the number of HARQ processes used on a PUSCH of a cell.

In an embodiment, at least one parameter in the second parameter subset is used for determining whether to enable a configuration of an advanced processing time capability 2 for a PUSCH.

In an embodiment, at least one parameter in the second parameter subset is used for determining whether to enable LBRM.

In an embodiment, at least one parameter in the second parameter subset is used for determining a HARQ mode for a HARQ process ID.

In an embodiment, at least one parameter in the second parameter subset is used for determining whether to enable group hopping for RMRS transmission with transform precoding.

In an embodiment, at least one parameter in the second parameter subset is used for determining a power offset between transmission of a msg3 and a RACH preamble.

In an embodiment, at least one parameter in the second parameter subset is used for determining a P0 value of a PUSCH with a grant (other than a msg3).

In an embodiment, at least one parameter in the second parameter subset is used for indicating the maximum number of CBGs of each TB.

In an embodiment, at least one parameter in the second parameter subset is used for indicating whether to enable CBG-based transmission.

In an embodiment, at least one parameter in the second parameter subset is used for indicating the maximum number of MIMO layers for a PUSCH in all UL BWPs corresponding to a cell.

In an embodiment, at least one parameter in the second parameter subset is used for indicating the number of HARQ processes used on a PUSCH of a cell.

In an embodiment, at least one parameter in the second parameter subset is used for indicating whether to enable a configuration of an advanced processing time capability 2 for a PUSCH.

In an embodiment, at least one parameter in the second parameter subset is used for indicating whether to enable LBRM.

In an embodiment, at least one parameter in the second parameter subset is used for indicating a HARQ mode for a HARQ process ID.

In an embodiment, at least one parameter in the second parameter subset is used for indicating whether to enable group hopping for RMRS transmission with transform precoding.

In an embodiment, at least one parameter in the second parameter subset is used for indicating a power offset between transmission of a msg3 and a RACH preamble.

In an embodiment, at least one parameter in the second parameter subset is used for indicating a P0 value of a PUSCH with a grant (other than a msg3).

In an embodiment, the second parameter subset includes: the maximum number of CBGs of each TB.

In an embodiment, the second parameter subset includes: whether to enable CBG-based transmission.

In an embodiment, the second parameter subset includes: the maximum number of MIMO layers for a PUSCH in all UL BWPs corresponding to a cell.

In an embodiment, the second parameter subset includes: the number of HARQ processes used on a PUSCH of a cell.

In an embodiment, the second parameter subset includes: whether to enable a configuration of an advanced processing time capability 2 for a PUSCH.

In an embodiment, the second parameter subset includes: whether to enable LBRM.

In an embodiment, the second parameter subset includes: a HARQ mode for a HARQ process ID.

In an embodiment, the second parameter subset includes: whether to enable group hopping for RMRS transmission with transform precoding.

In an embodiment, the second parameter subset includes: a power offset between transmission of a msg3 and a RACH preamble.

In an embodiment, the second parameter subset includes: a P0 value of a PUSCH with a grant (other than a msg3).

In an embodiment, the second RRC signaling is codeBlockGroupTransmission.

In an embodiment, the second RRC signaling is rateMatching.

In an embodiment, the second RRC signaling is xOverhead.

In an embodiment, the second RRC signaling is maxMIMO-Layers.

In an embodiment, the second RRC signaling is processingType2Enabled.

In an embodiment, the second RRC signaling is nrofHARQ-ProcessesForPUSCH-r17.

In an embodiment, the second RRC signaling is uplinkHARQ-mode-r17.

In an embodiment, the second RRC signaling is groupHoppingEnabledTransformPrecoding.

In an embodiment, the second RRC signaling is msg3-DeltaPreamble.

In an embodiment, the second RRC signaling is p0-NominalWithGrant.

In an embodiment, the name of the second RRC signaling includes codeBlockGroupTransmission.

In an embodiment, the name of the second RRC signaling includes rateMatching.

In an embodiment, the name of the second RRC signaling includes xOverhead.

In an embodiment, the name of the second RRC signaling includes maxMIMO-Layers.

In an embodiment, the name of the second RRC signaling includes processingType2Enabled.

In an embodiment, the name of the second RRC signaling includes nrofHARQ-ProcessesForPUSCH.

In an embodiment, the name of the second RRC signaling includes uplinkHARQ-mode.

In an embodiment, the name of the second RRC signaling includes groupHoppingEnabledTransformPrecoding.

In an embodiment, the name of the second RRC signaling includes msg3-DeltaPreamble.

In an embodiment, the name of the second RRC signaling includes p0-NominalWithGrant.

### Embodiment 9

Embodiment 9 illustrates a diagram of a relationship between a first RRC signaling set, second RRC signaling, a first reference cell, and a first cell according to an embodiment of this application, as shown in FIG. 9.

In Embodiment 9, the number of cells included in the at least one cell is greater than 1. The first RRC signaling set includes second RRC signaling, the second RRC signaling is configured for a first reference cell, and the first reference cell is a cell other than the first cell.

In an embodiment, the first reference cell is a cell other than the first cell in the at least one cell.

In an embodiment, the first DCI is used for determining the first reference cell.

In an embodiment, the first DCI is used for indicating the first reference cell.

In an embodiment, a second field in the first DCI is used for determining the first reference cell.

In an embodiment, a second field in the first DCI is used for indicating the first reference cell.

In an embodiment, the second field in the first DCI includes at least one bit.

In an embodiment, the second field in the first DCI includes two bits.

In an embodiment, the second field in the first DCI includes three bits.

In an embodiment, the second field in the first DCI includes four bits.

In an embodiment, the second field in the first DCI includes five bits.

In an embodiment, a size of the second field in the first DCI is configurable.

In an embodiment, the second field in the first DCI is used for indicating a scheduled cell.

In an embodiment, the second field in the first DCI is used for determining the at least one cell, and the first reference cell is one of the at least one cell.

In an embodiment, the second field in the first DCI is used for indicating the at least one cell, and the first reference cell is one of the at least one cell.

In an embodiment, the second field in the first DCI is a Carrier indicator field.

In an embodiment, the name of the second field in the first DCI includes Carrier.

In an embodiment, the name of the second field in the first DCI includes Cell.

In an embodiment, the name of the second field in the first DCI includes ServingCell.

In an embodiment, the first reference cell is configured by using higher layer signaling.

In an embodiment, the first reference cell is default.

In an embodiment, the first reference cell is a primary cell (PCell).

In an embodiment, the first reference cell is a primary secondary cell (PSCell).

In an embodiment, the first reference cell is a secondary cell (SCell).

In an embodiment, the first reference cell is one of the at least one cell, and a cell index of the first reference cell is the smallest in the at least one cell.

In an embodiment, the first reference cell is one of the at least one cell, and a cell index of the first reference cell is the largest in the at least one cell.

In an embodiment, the first reference cell is one of the at least one cell, and a short identity that is used for identifying a serving cell and that corresponds to the first reference cell is the smallest in the at least one cell.

In an embodiment, the first reference cell is one of the at least one cell, and a short identity that is used for identifying a serving cell and that corresponds to the first reference cell is the largest in the at least one cell.

### Embodiment 10

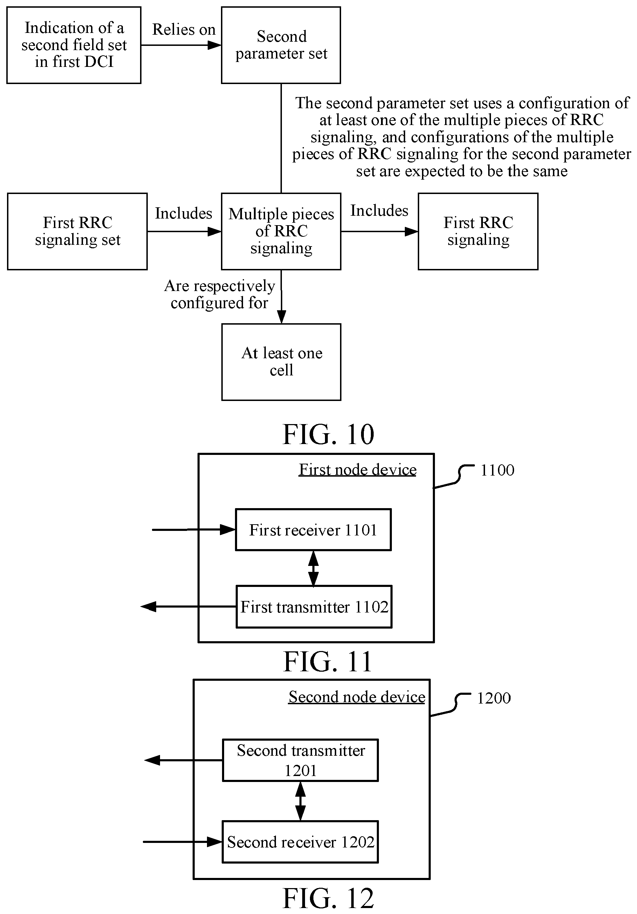

Embodiment 10 illustrates a diagram of a relationship between a first RRC signaling set, multiple pieces of RRC signaling, first RRC signaling, at least one cell, the indication of a second field set in first DCI, and a second parameter set according to an embodiment of this application, as shown in FIG. 10.

In Embodiment 10, the number of cells included in the at least one cell is greater than 1. The indication of a second field set in the first DCI depends on a second parameter set. The first RRC signaling set includes multiple pieces of RRC signaling, and the first RRC signaling is one of the multiple pieces of RRC signaling. The multiple pieces of RRC signaling are respectively configured for the at least one cell. The second parameter set uses a configuration of at least one of the multiple pieces of RRC signaling, and configurations of the multiple pieces of RRC signaling for the second parameter set are expected to be the same.

In an embodiment, the names of the multiple pieces of RRC signaling are the same.

In an embodiment, each of the multiple pieces of RRC signaling includes at least one IE.

In an embodiment, each of the multiple pieces of RRC signaling includes at least one field in at least one IE.

In an embodiment, each of the multiple pieces of RRC signaling includes at least a part of ServingCellConfig.

In an embodiment, each of the multiple pieces of RRC signaling includes at least a part of BWP-Uplink.

In an embodiment, each of the multiple pieces of RRC signaling includes at least a part of BWP-UplinkCommon.

In an embodiment, each of the multiple pieces of RRC signaling includes at least a part of BWP-UplinkDedicated.

In an embodiment, each of the multiple pieces of RRC signaling includes at least a part of PUSCH-Config.

In an embodiment, each of the multiple pieces of RRC signaling includes at least a part of PUSCH-ConfigCommon.

In an embodiment, each of the multiple pieces of RRC signaling includes at least a part of PUSCH-ServingCellConfig.

In an embodiment, each of the multiple pieces of RRC signaling includes pusch-AggregationFactor.

In an embodiment, each of the multiple pieces of RRC signaling includes txConfig.

In an embodiment, each of the multiple pieces of RRC signaling includes dmrs-UplinkForPUSCH-MappingTypeA.

In an embodiment, each of the multiple pieces of RRC signaling includes dmrs-UplinkForPUSCH-MappingTypeB.

In an embodiment, each of the multiple pieces of RRC signaling includes pusch-PowerControl.

In an embodiment, each of the multiple pieces of RRC signaling includes frequencyHopping.

In an embodiment, each of the multiple pieces of RRC signaling includes frequencyHoppingOffsetLists.

In an embodiment, each of the multiple pieces of RRC signaling includes resourceAllocation.

In an embodiment, each of the multiple pieces of RRC signaling includes pusch-TimeDomainAllocationList.

In an embodiment, each of the multiple pieces of RRC signaling includes mcs-Table.

In an embodiment, each of the multiple pieces of RRC signaling includes mcs-TableTransformPrecoder.

In an embodiment, each of the multiple pieces of RRC signaling includes transformPrecoder.

In an embodiment, each of the multiple pieces of RRC signaling includes codebookSubset.

In an embodiment, each of the multiple pieces of RRC signaling includes maxRank.

In an embodiment, each of the multiple pieces of RRC signaling includes rbg-Size.

In an embodiment, each of the multiple pieces of RRC signaling includes uci-OnPUSCH.

In an embodiment, each of the multiple pieces of RRC signaling includes tp-pi2BPSK.

In an embodiment, each of the multiple pieces of RRC signaling is pusch-AggregationFactor.

In an embodiment, each of the multiple pieces of RRC signaling is txConfig.

In an embodiment, each of the multiple pieces of RRC signaling is dmrs-UplinkForPUSCH-MappingTypeA.

In an embodiment, each of the multiple pieces of RRC signaling is dmrs-UplinkForPUSCH-MappingTypeB.

In an embodiment, each of the multiple pieces of RRC signaling is pusch-PowerControl.

In an embodiment, each of the multiple pieces of RRC signaling is frequencyHopping.

In an embodiment, each of the multiple pieces of RRC signaling is frequencyHoppingOffsetLists.

In an embodiment, each of the multiple pieces of RRC signaling is resourceAllocation.

In an embodiment, each of the multiple pieces of RRC signaling is pusch-TimeDomainAllocationList.

In an embodiment, each of the multiple pieces of RRC signaling is mcs-Table.

In an embodiment, each of the multiple pieces of RRC signaling is mcs-TableTransformPrecoder.

In an embodiment, each of the multiple pieces of RRC signaling is transformPrecoder.

In an embodiment, each of the multiple pieces of RRC signaling is codebookSubset.

In an embodiment, each of the multiple pieces of RRC signaling is maxRank.

In an embodiment, each of the multiple pieces of RRC signaling is rbg-Size.

In an embodiment, each of the multiple pieces of RRC signaling is uci-OnPUSCH.

In an embodiment, each of the multiple pieces of RRC signaling is tp-pi2BPSK.

In an embodiment, the name of each of the multiple pieces of RRC signaling includes pusch-AggregationFactor.

In an embodiment, the name of each of the multiple pieces of RRC signaling includes pusch-AggregationFactor.

In an embodiment, the name of each of the multiple pieces of RRC signaling includes txConfig.

In an embodiment, the name of each of the multiple pieces of RRC signaling includes dmrs-UplinkForPUSCH-MappingTypeA.

In an embodiment, the name of each of the multiple pieces of RRC signaling includes dmrs-UplinkForPUSCH-MappingTypeB.

In an embodiment, the name of each of the multiple pieces of RRC signaling includes pusch-PowerControl.

In an embodiment, the name of each of the multiple pieces of RRC signaling includes frequencyHopping.

In an embodiment, the name of each of the multiple pieces of RRC signaling includes frequencyHoppingOffsetLists.

In an embodiment, the name of each of the multiple pieces of RRC signaling includes resourceAllocation.

In an embodiment, the name of each of the multiple pieces of RRC signaling includes pusch-TimeDomainAllocationList.

In an embodiment, the name of each of the multiple pieces of RRC signaling includes mcs-Table.

In an embodiment, the name of each of the multiple pieces of RRC signaling includes mcs-TableTransformPrecoder.

In an embodiment, the name of each of the multiple pieces of RRC signaling includes transformPrecoder.

In an embodiment, the name of each of the multiple pieces of RRC signaling includes codebookSubset.

In an embodiment, the name of each of the multiple pieces of RRC signaling includes maxRank.

In an embodiment, the name of each of the multiple pieces of RRC signaling includes rbg-Size.

In an embodiment, the name of each of the multiple pieces of RRC signaling includes uci-OnPUSCH.

In an embodiment, the name of each of the multiple pieces of RRC signaling includes tp-pi2BPSK.

In an embodiment, the name of each of the multiple pieces of RRC signaling includes minimumSchedulingOffsetK2.

In an embodiment, the name of each of the multiple pieces of RRC signaling includes ul-AccessConfigList.

In an embodiment, the name of each of the multiple pieces of RRC signaling includes harq-ProcessNumberSize.

In an embodiment, the name of each of the multiple pieces of RRC signaling includes dmrs-SequenceInitialization.

In an embodiment, the name of each of the multiple pieces of RRC signaling includes numberOfBitsForRV.

In an embodiment, the name of each of the multiple pieces of RRC signaling includes antennaPortsFieldPresence.

In an embodiment, the name of each of the multiple pieces of RRC signaling includes invalidSymbolPatternIndicator.

In an embodiment, the name of each of the multiple pieces of RRC signaling includes priorityIndicator.

In an embodiment, the name of each of the multiple pieces of RRC signaling includes pusch-RepTypeIndicator.

In an embodiment, the name of each of the multiple pieces of RRC signaling includes resourceAllocationType1Granularity.

In an embodiment, the name of each of the multiple pieces of RRC signaling includes ul-FullPowerTransmission.

In an embodiment, the name of each of the multiple pieces of RRC signaling includes numberOfInvalidSymbolsForDL-UL-Switching.

In an embodiment, the name of each of the multiple pieces of RRC signaling includes betaOffsetsCrossPri0.

In an embodiment, the name of each of the multiple pieces of RRC signaling includes betaOffsetsCrossPri1.

In an embodiment, the name of each of the multiple pieces of RRC signaling includes mappingPattern.

In an embodiment, the name of each of the multiple pieces of RRC signaling includes secondTPCField.

In an embodiment, the name of each of the multiple pieces of RRC signaling includes sequenceOffsetForRV.

In an embodiment, the name of each of the multiple pieces of RRC signaling includes availableSlotCounting.

In an embodiment, the name of each of the multiple pieces of RRC signaling includes dmrs-BundlingPUSCH-Config.

In an embodiment, each of the multiple pieces of RRC signaling is PUSCH-ConfigCommon.

In an embodiment, each of the multiple pieces of RRC signaling is PUSCH-ServingCellConfig.

In an embodiment, each of the multiple pieces of RRC signaling includes at least one of PUSCH-ConfigCommon and PUSCH-ServingCellConfig.

In an embodiment, each of the multiple pieces of RRC signaling is PUSCH-Config.

In an embodiment, each of the multiple pieces of RRC signaling includes PUSCH-Config.

In an embodiment, each of the multiple pieces of RRC signaling includes configuration information for a PUSCH.

In an embodiment, at least one parameter in the second parameter set represents the number of repetitions for data.

In an embodiment, at least one parameter in the second parameter set represents a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the second parameter set represents a DMRS configuration for PUSCH transmission using a PUSCH mapping type A.

In an embodiment, at least one parameter in the second parameter set represents a DMRS configuration for PUSCH transmission using a PUSCH mapping type B.

In an embodiment, at least one parameter in the second parameter set represents related information of power control for a PUSCH.

In an embodiment, at least one parameter in the second parameter set represents a frequency hopping mode.

In an embodiment, at least one parameter in the second parameter set represents a set of frequency hopping offset(s).

In an embodiment, at least one parameter in the second parameter set represents a resource allocation type.

**In** an embodiment, at least one parameter in the second parameter set represents a frequency domain resource allocation type.

**In** an embodiment, at least one parameter in the second parameter set represents a list of time domain allocations for timing of UL assignment to UL data.

**In** an embodiment, at least one parameter in the second parameter set represents an MCS table used for a PUSCH when there is no transformer precoder.

**In** an embodiment, at least one parameter in the second parameter set represents an MCS table used for a PUSCH when there is a transformer precoder.

**In** an embodiment, at least one parameter in the second parameter set represents whether to enable transform precoding.

**In** an embodiment, at least one parameter in the second parameter set represents a particular selection of a transformer precoder for a PUSCH.

**In** an embodiment, at least one parameter in the second parameter set represents a subset of PMIs addressed by TPMIs.

**In** an embodiment, at least one parameter in the second parameter set represents a subset of PMIs addressed by TRIs.

**In** an embodiment, at least one parameter in the second parameter set represents an RBG size selected between a configuration 1 and a configuration 2 for a PUSCH.

**In** an embodiment, at least one parameter in the second parameter set represents a beta offset set.

**In** an embodiment, at least one parameter in the second parameter set represents whether to enable pi/2-BPSK modulation with transform precoding.

**In** an embodiment, at least one parameter in the second parameter set is used for determining the number of repetitions for data.

**In** an embodiment, at least one parameter in the second parameter set is used for determining a transmission scheme for a PUSCH.

**In** an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the second parameter set is used for determining a DMRS configuration for PUSCH transmission using a PUSCH mapping type A.

In an embodiment, at least one parameter in the second parameter set is used for determining a DMRS configuration for PUSCH transmission using a PUSCH mapping type B.

In an embodiment, at least one parameter in the second parameter set is used for determining power control for a PUSCH.

In an embodiment, at least one parameter in the second parameter set is used for determining a frequency hopping mode.

In an embodiment, at least one parameter in the second parameter set is used for determining a set of frequency hopping offset(s).

In an embodiment, at least one parameter in the second parameter set is used for determining a resource allocation type.

In an embodiment, at least one parameter in the second parameter set is used for determining a frequency domain resource allocation type.

In an embodiment, at least one parameter in the second parameter set is used for determining a list of time domain allocations for timing of UL assignment to UL data.

In an embodiment, at least one parameter in the second parameter set is used for determining an MCS table used for a PUSCH when there is no transformer precoder.

In an embodiment, at least one parameter in the second parameter set is used for determining an MCS table used for a PUSCH when there is a transformer precoder.

In an embodiment, at least one parameter in the second parameter set is used for determining whether to enable transform precoding.

In an embodiment, at least one parameter in the second parameter set is used for determining a particular selection of a transformer precoder for a PUSCH.

In an embodiment, at least one parameter in the second parameter set is used for determining a subset of PMIs addressed by TPMIs.

In an embodiment, at least one parameter in the second parameter set is used for determining a subset of PMIs addressed by TRIs.

In an embodiment, at least one parameter in the second parameter set is used for determining an RBG size selected between a configuration 1 and a configuration 2 for a PUSCH.

In an embodiment, at least one parameter in the second parameter set is used for determining a beta offset set.

In an embodiment, at least one parameter in the second parameter set is used for determining whether to enable pi/2-BPSK modulation with transform precoding.

In an embodiment, at least one parameter in the second parameter set is used for indicating the number of repetitions for data.

In an embodiment, at least one parameter in the second parameter set is used for indicating a transmission scheme for a PUSCH.

In an embodiment, the transmission scheme is one of codebook-based transmission, non-codebook-based transmission, and single-antenna-port transmission.

In an embodiment, the transmission scheme is one of codebook-based transmission and non-codebook-based transmission.

In an embodiment, at least one parameter in the second parameter set is used for indicating a DMRS configuration for PUSCH transmission using a PUSCH mapping type A.

In an embodiment, at least one parameter in the second parameter set is used for indicating a DMRS configuration for PUSCH transmission using a PUSCH mapping type B.

In an embodiment, at least one parameter in the second parameter set is used for indicating power control for a PUSCH.

In an embodiment, at least one parameter in the second parameter set is used for indicating a frequency hopping mode.

In an embodiment, at least one parameter in the second parameter set is used for indicating a set of frequency hopping offset(s).

In an embodiment, at least one parameter in the second parameter set is used for indicating a resource allocation type.

In an embodiment, at least one parameter in the second parameter set is used for indicating a frequency domain resource allocation type.

In an embodiment, at least one parameter in the second parameter set is used for indicating a list of time domain allocations for timing of UL assignment to UL data.

In an embodiment, at least one parameter in the second parameter set is used for indicating an MCS table used for a PUSCH when there is no transformer precoder.

In an embodiment, at least one parameter in the second parameter set is used for indicating an MCS table used for a PUSCH when there is a transformer precoder.

In an embodiment, at least one parameter in the second parameter set is used for indicating whether to enable transform precoding.

In an embodiment, at least one parameter in the second parameter set is used for indicating a particular selection of a transformer precoder for a PUSCH.

In an embodiment, at least one parameter in the second parameter set is used for indicating a subset of PMIs addressed by TPMIs.

In an embodiment, at least one parameter in the second parameter set is used for indicating a subset of PMIs addressed by TRIs.

In an embodiment, at least one parameter in the second parameter set is used for indicating an RBG size selected between a configuration 1 and a configuration 2 for a PUSCH.

In an embodiment, at least one parameter in the second parameter set is used for indicating a beta offset set.

In an embodiment, at least one parameter in the second parameter set is used for indicating whether to enable pi/2-BPSK modulation with transform precoding.

In an embodiment, the second parameter set includes: the number of repetitions for data.

In an embodiment, the second parameter set includes: a transmission scheme for a PUSCH.

In an embodiment, the transmission scheme is one of codebook-based transmission, non-codebook-based transmission, and single-antenna-port transmission.

In an embodiment, the second parameter set includes: a DMRS configuration for PUSCH transmission using a PUSCH mapping type A.

In an embodiment, the second parameter set includes: a DMRS configuration for PUSCH transmission using a PUSCH mapping type B.

In an embodiment, the second parameter set includes: related information of power control for a PUSCH.

In an embodiment, the second parameter set includes: a frequency hopping mode.

In an embodiment, the second parameter set includes: a set of frequency hopping offset(s).

In an embodiment, the second parameter set includes: a resource allocation type.

In an embodiment, the second parameter set includes: a frequency domain resource allocation type.

In an embodiment, the second parameter set includes: a list of time domain allocations for timing of UL assignment to UL data.

In an embodiment, the second parameter set includes: an MCS table used for a PUSCH when there is no transformer precoder.

In an embodiment, the second parameter set includes: an MCS table used for a PUSCH when there is a transformer precoder.

In an embodiment, the second parameter set includes: information about whether to enable transform precoding.

In an embodiment, the second parameter set includes: a particular selection of a transformer precoder for a PUSCH.

In an embodiment, the second parameter set includes: a subset of PMIs addressed by TPMIs.

In an embodiment, the second parameter set includes: a subset of PMIs addressed by TRIs.

In an embodiment, the second parameter set includes: an RBG size selected between a configuration 1 and a configuration 2 for a PUSCH.

In an embodiment, the second parameter set includes: a beta offset set.

In an embodiment, the second parameter set includes: information about whether to enable pi/2-BPSK modulation with transform precoding.

In an embodiment, the second parameter set includes: whether an Antenna ports field exists.

In an embodiment, the second parameter set includes: whether to enable PUSCH repetitions counted on the basis of available slots.

In an embodiment, the second parameter set includes: a set of beta offsets configured for multiplexing of a HARQ-ACK on PUSCHs with different priorities.

In an embodiment, the second parameter set includes: DMRS bundling information for a PUSCH.

In an embodiment, the second parameter set includes: whether a DMRS Sequence Initialization field exists.

In an embodiment, the second parameter set includes: a size of a HARQ process number field.

In an embodiment, the second parameter set includes: a pattern for an invalid symbol for a PUSCH transmission type B.

In an embodiment, the second parameter set includes: whether a cyclical mapping pattern or a sequential mapping pattern should be followed when two SRS resource sets are configured for PUSCH transmission and PUSCH transmission occasions are associated with the two SRS resource sets.

In an embodiment, the second parameter set includes: a list of minimum K2 values.

In an embodiment, the second parameter set includes: a size of a Redundancy version field.

In an embodiment, the second parameter set includes: the number of symbols after the last semi-static DL symbol that are invalid for a PUSCH repetition type B.

In an embodiment, the second parameter set includes: whether a priority indicator field exists.

In an embodiment, the second parameter set includes: whether to follow a behavior for a PUSCH repetition type A or a behavior for a PUSCH repetition type B.

In an embodiment, the second parameter set includes: whether a second TPC field exists.

In an embodiment, the second parameter set includes: an RV offset configured for a starting RV for the first repetition (first actual repetition in a PUSCH repetition type B) towards the second SRS resource set for a PUSCH.

In an embodiment, the second parameter set includes: a list of combinations of cyclic prefix extension, a CAPC, and a UL channel access type.

In an embodiment, the second parameter set includes: a UL full power transmission mode.

In an embodiment, the second parameter set includes: a scheduling granularity applicable to a starting point indication and a length indication for a resource allocation type 1.

In an embodiment, at least one parameter in the second parameter set is used for indicating whether an Antenna ports field exists.

In an embodiment, at least one parameter in the second parameter set is used for indicating whether to enable PUSCH repetitions counted on the basis of available slots.

In an embodiment, at least one parameter in the second parameter set is used for indicating a set of beta offsets configured for multiplexing of a HARQ-ACK on PUSCHs with different priorities.

In an embodiment, at least one parameter in the second parameter set is used for indicating DMRS bundling information for a PUSCH.

In an embodiment, at least one parameter in the second parameter set is used for indicating whether a DMRS Sequence Initialization field exists.

In an embodiment, at least one parameter in the second parameter set is used for indicating a size of a HARQ process number field.

In an embodiment, at least one parameter in the second parameter set is used for indicating a pattern for an invalid symbol for a PUSCH transmission type B.

In an embodiment, at least one parameter in the second parameter set is used for indicating: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the second parameter set is used for indicating a list of minimum K2 values.

In an embodiment, at least one parameter in the second parameter set is used for indicating a size of a Redundancy version field.

In an embodiment, at least one parameter in the second parameter set is used for indicating the number of symbols after the last semi-static DL symbol that are invalid for a PUSCH repetition type B.

In an embodiment, at least one parameter in the second parameter set is used for indicating whether a priority indicator field exists.

In an embodiment, at least one parameter in the second parameter set is used for indicating whether to follow a behavior for a PUSCH repetition type A or a behavior for a PUSCH repetition type B.

In an embodiment, at least one parameter in the second parameter set is used for indicating whether a second TPC field exists.

In an embodiment, at least one parameter in the second parameter set is used for indicating an RV offset configured for a starting RV for the first repetition (first actual repetition in a PUSCH repetition type B) towards the second SRS resource set for a PUSCH.

In an embodiment, at least one parameter in the second parameter set is used for indicating a list of combinations of cyclic prefix extension, a CAPC, and a UL channel access type.

In an embodiment, at least one parameter in the second parameter set is used for indicating a UL full power transmission mode.

In an embodiment, at least one parameter in the second parameter set is used for indicating a scheduling granularity applicable to a starting point indication and a length indication for a resource allocation type 1.

In an embodiment, at least one parameter in the second parameter set is used for determining whether an Antenna ports field exists.

In an embodiment, at least one parameter in the second parameter set is used for determining whether to enable PUSCH repetitions counted on the basis of available slots.

In an embodiment, at least one parameter in the second parameter set is used for determining a set of beta offsets configured for multiplexing of a HARQ-ACK on PUSCHs with different priorities.

In an embodiment, at least one parameter in the second parameter set is used for determining DMRS bundling information for a PUSCH.

In an embodiment, at least one parameter in the second parameter set is used for determining whether a DMRS Sequence Initialization field exists.

In an embodiment, at least one parameter in the second parameter set is used for determining a size of a HARQ process number field.

In an embodiment, at least one parameter in the second parameter set is used for determining a pattern for an invalid symbol for a PUSCH transmission type B.

In an embodiment, at least one parameter in the second parameter set is used for determining: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the second parameter set is used for determining a list of minimum K2 values.

In an embodiment, at least one parameter in the second parameter set is used for determining a size of a Redundancy version field.

In an embodiment, at least one parameter in the second parameter set is used for determining the number of symbols after the last semi-static DL symbol that are invalid for a PUSCH repetition type B.

In an embodiment, at least one parameter in the second parameter set is used for determining whether a priority indicator field exists.

In an embodiment, at least one parameter in the second parameter set is used for determining whether to follow a behavior for a PUSCH repetition type A or a behavior for a PUSCH repetition type B.

In an embodiment, at least one parameter in the second parameter set is used for determining whether a second TPC field exists.

In an embodiment, at least one parameter in the second parameter set is used for determining an RV offset configured for a starting RV for the first repetition (first actual repetition in a PUSCH repetition type B) towards the second SRS resource set for a PUSCH.

In an embodiment, at least one parameter in the second parameter set is used for determining a list of combinations of cyclic prefix extension, a CAPC, and a UL channel access type.

In an embodiment, at least one parameter in the second parameter set is used for determining a UL full power transmission mode.

In an embodiment, at least one parameter in the second parameter set is used for determining a scheduling granularity applicable to a starting point indication and a length indication for a resource allocation type 1.

In an embodiment, at least one parameter in the second parameter set represents whether an Antenna ports field exists.

In an embodiment, at least one parameter in the second parameter set represents whether to enable PUSCH repetitions counted on the basis of available slots.

In an embodiment, at least one parameter in the second parameter set represents a set of beta offsets configured for multiplexing of a HARQ-ACK on PUSCHs with different priorities.

In an embodiment, at least one parameter in the second parameter set represents DMRS bundling information for a PUSCH.

In an embodiment, at least one parameter in the second parameter set represents whether a DMRS Sequence Initialization field exists.

In an embodiment, at least one parameter in the second parameter set represents a size of a HARQ process number field.

In an embodiment, at least one parameter in the second parameter set represents a pattern for an invalid symbol for a PUSCH transmission type B.

In an embodiment, at least one parameter in the second parameter set represents: whether a cyclical mapping pattern or a sequential mapping pattern should be followed when two SRS resource sets are configured for PUSCH transmission and PUSCH transmission occasions are associated with the two SRS resource sets.

In an embodiment, at least one parameter in the second parameter set represents a list of minimum K2 values.

In an embodiment, at least one parameter in the second parameter set represents a size of a Redundancy version field.

In an embodiment, at least one parameter in the second parameter set represents the number of symbols after the last semi-static DL symbol that are invalid for a PUSCH repetition type B.

In an embodiment, at least one parameter in the second parameter set represents whether a priority indicator field exists.

In an embodiment, at least one parameter in the second parameter set represents whether to follow a behavior for a PUSCH repetition type A or a behavior for a PUSCH repetition type B.

In an embodiment, at least one parameter in the second parameter set represents whether a second TPC field exists.

In an embodiment, at least one parameter in the second parameter set represents an RV offset configured for a starting RV for the first repetition (first actual repetition in a PUSCH repetition type B) towards the second SRS resource set for a PUSCH.

In an embodiment, at least one parameter in the second parameter set represents a list of combinations of cyclic prefix extension, a CAPC, and a UL channel access type.

In an embodiment, at least one parameter in the second parameter set represents a UL full power transmission mode.

In an embodiment, at least one parameter in the second parameter set represents a scheduling granularity applicable to a starting point indication and a length indication for a resource allocation type 1.

In an embodiment, the number of pieces of RRC signaling included in the multiple pieces of RRC signaling is equal to the number of cells included in the at least one cell, and the multiple pieces of RRC signaling are in a one-to-one correspondence with the at least one cell.

In an embodiment, the second field set in the first DCI includes only one field.

In an embodiment, the second field set in the first DCI includes multiple fields.

In an embodiment, one field in the second field set in the first DCI includes at least one bit.

In an embodiment, one field in the second field set in the first DCI includes a non-negative integer number of bits.

In an embodiment, at least one field included in the second field set in the first DCI belongs to the first field set in the first DCI.

In an embodiment, at least one field included in the second field set in the first DCI does not belong to the first field set in the first DCI.

In an embodiment, no field belongs to both the second field set in the first DCI and the first field set in the first DCI.

In an embodiment, the second field set in the first DCI is the first field set in the first DCI.

In an embodiment, there is no intersection set between the second parameter set and the first parameter set.

In an embodiment, the indication of each field in the second field set in the first DCI depends on at least one parameter in the second parameter set.

In an embodiment, that the indication of a second field set in the first DCI depends on a second parameter set includes: Indication content of at least one field in the second field set in the first DCI depends on at least one parameter in the second parameter set.

In an embodiment, that the indication of a second field set in the first DCI depends on a second parameter set includes: The indication mode of at least one field in the second field set in the first DCI depends on at least one parameter in the second parameter set.

In an embodiment, that the indication of a second field set in the first DCI depends on a second parameter set includes: A size of at least one field in the second field set in the first DCI depends on at least one parameter in the second parameter set.

In an embodiment, that the indication of a second field set in the first DCI depends on a second parameter set includes: A table on which the indication of at least one field in the second field set in the first DCI is based depends on at least one parameter in the second parameter set.

In an embodiment, that the indication of a second field set in the first DCI depends on a second parameter set includes: One field in the second field set in the first DCI indicates one value in one value range, and at least one parameter in the second parameter set is used for configuring the value range.

In an embodiment, that the indication of a second field set in the first DCI depends on a second parameter set includes: Content indicated by one field in the second field set in the first DCI is indicated by one parameter in the second parameter set.

In an embodiment, the second parameter set includes only one parameter.

In an embodiment, the second parameter set includes multiple parameters.

In an embodiment, that the indication of a second field set in the first DCI depends on a second parameter set includes: A meaning of a bit in at least one field in the second field set in the first DCI depends on at least one parameter in the second parameter set.

In an embodiment, that the indication of a second field set in the first DCI depends on a second parameter set includes: Content indicated by a value of at least one field in the second field set in the first DCI depends on at least one parameter in the second parameter set.

In an embodiment, the relying on the second parameter set includes: being indicated by at least one parameter in the second parameter set or being indicated by multiple parameters including at least one parameter in the second parameter set.

In an embodiment, the relying on the second parameter set includes: being determined based on at least one parameter in the second parameter set.

In an embodiment, the relying on the second parameter set includes: being determined based on configuration information represented by at least one parameter in the second parameter set.

In an embodiment, the relying on the second parameter set includes: being determined based on configuration information included in at least one parameter in the second parameter set.

In an embodiment, the relying on the second parameter set includes: being determined based on configuration information indicated by at least one parameter in the second parameter set.

In an embodiment, at least one parameter in the second parameter set represents the maximum number of CBGs of each TB.

In an embodiment, at least one parameter in the second parameter set represents whether to enable CBG-based transmission.

In an embodiment, at least one parameter in the second parameter set represents the maximum number of MIMO layers for a PUSCH in all UL BWPs corresponding to a cell.

In an embodiment, at least one parameter in the second parameter set represents the number of HARQ processes used on a PUSCH of a cell.

In an embodiment, at least one parameter in the second parameter set represents whether to enable a configuration of an advanced processing time capability 2 for a PUSCH.

In an embodiment, at least one parameter in the second parameter set represents whether to enable LBRM.

In an embodiment, at least one parameter in the second parameter set represents a HARQ mode for a HARQ process ID.

In an embodiment, at least one parameter in the second parameter set represents whether to enable group hopping for RMRS transmission with transform precoding.

In an embodiment, at least one parameter in the second parameter set represents a power offset between transmission of a msg3 and a RACH preamble.

In an embodiment, at least one parameter in the second parameter set represents a P0 value of a PUSCH with a grant (other than a msg3).

In an embodiment, at least one parameter in the second parameter set is used for determining the maximum number of CBGs of each TB.

In an embodiment, at least one parameter in the second parameter set is used for determining whether to enable CBG-based transmission.

In an embodiment, at least one parameter in the second parameter set is used for determining the maximum number of MIMO layers for a PUSCH in all UL BWPs corresponding to a cell.

In an embodiment, at least one parameter in the second parameter set is used for determining the number of HARQ processes used on a PUSCH of a cell.

In an embodiment, at least one parameter in the second parameter set is used for determining whether to enable a configuration of an advanced processing time capability 2 for a PUSCH.

In an embodiment, at least one parameter in the second parameter set is used for determining whether to enable LBRM.

In an embodiment, at least one parameter in the second parameter set is used for determining a HARQ mode for a HARQ process ID.

In an embodiment, at least one parameter in the second parameter set is used for determining whether to enable group hopping for RMRS transmission with transform precoding.

In an embodiment, at least one parameter in the second parameter set is used for determining a power offset between transmission of a msg3 and a RACH preamble.

In an embodiment, at least one parameter in the second parameter set is used for determining a P0 value of a PUSCH with a grant (other than a msg3).

In an embodiment, at least one parameter in the second parameter set is used for indicating the maximum number of CBGs of each TB.

In an embodiment, at least one parameter in the second parameter set is used for indicating whether to enable CBG-based transmission.

In an embodiment, at least one parameter in the second parameter set is used for indicating the maximum number of MIMO layers for a PUSCH in all UL BWPs corresponding to a cell.

In an embodiment, at least one parameter in the second parameter set is used for indicating the number of HARQ processes used on a PUSCH of a cell.

In an embodiment, at least one parameter in the second parameter set is used for indicating whether to enable a configuration of an advanced processing time capability 2 for a PUSCH.

In an embodiment, at least one parameter in the second parameter set is used for indicating whether to enable LBRM.

In an embodiment, at least one parameter in the second parameter set is used for indicating a HARQ mode for a HARQ process ID.

In an embodiment, at least one parameter in the second parameter set is used for indicating whether to enable group hopping for RMRS transmission with transform precoding.

In an embodiment, at least one parameter in the second parameter set is used for indicating a power offset between transmission of a msg3 and a RACH preamble.

In an embodiment, at least one parameter in the second parameter set is used for indicating a P0 value of a PUSCH with a grant (other than a msg3).

In an embodiment, the second parameter set includes: the maximum number of CBGs of each TB.

In an embodiment, the second parameter set includes: whether to enable CBG-based transmission.

In an embodiment, the second parameter set includes: the maximum number of MIMO layers for a PUSCH in all UL BWPs corresponding to a cell.

In an embodiment, the second parameter set includes: the number of HARQ processes used on a PUSCH of a cell.

In an embodiment, the second parameter set includes: whether to enable a configuration of an advanced processing time capability 2 for a PUSCH.

In an embodiment, the second parameter set includes: whether to enable LBRM.

In an embodiment, the second parameter set includes: a HARQ mode for a HARQ process ID.

In an embodiment, the second parameter set includes: whether to enable group hopping for RMRS transmission with transform precoding.

In an embodiment, the second parameter set includes: a power offset between transmission of a msg3 and a RACH preamble.

In an embodiment, the second parameter set includes: a P0 value of a PUSCH with a grant (other than a msg3).

In an embodiment, each of the multiple pieces of RRC signaling is codeBlockGroupTransmission.

In an embodiment, each of the multiple pieces of RRC signaling is rateMatching.

In an embodiment, each of the multiple pieces of RRC signaling is xOverhead.

In an embodiment, each of the multiple pieces of RRC signaling is maxMIMO-Layers.

In an embodiment, each of the multiple pieces of RRC signaling is processingType2Enabled.

In an embodiment, each of the multiple pieces of RRC signaling is nrofHARQ-ProcessesForPUSCH-r17.

In an embodiment, each of the multiple pieces of RRC signaling is uplinkHARQ-mode-r17.

In an embodiment, each of the multiple pieces of RRC signaling is groupHoppingEnabledTransformPrecoding.

In an embodiment, each of the multiple pieces of RRC signaling is msg3-DeltaPreamble.

In an embodiment, each of the multiple pieces of RRC signaling is p0-NominalWithGrant.

In an embodiment, the name of each of the multiple pieces of RRC signaling includes codeBlockGroupTransmission.

In an embodiment, the name of each of the multiple pieces of RRC signaling includes rateMatching.

In an embodiment, the name of each of the multiple pieces of RRC signaling includes xOverhead.

In an embodiment, the name of each of the multiple pieces of RRC signaling includes maxMIMO-Layers.

In an embodiment, the name of each of the multiple pieces of RRC signaling includes processingType2Enabled.

In an embodiment, the name of each of the multiple pieces of RRC signaling includes nrofHARQ-ProcessesForPUSCH.

In an embodiment, the name of each of the multiple pieces of RRC signaling includes uplinkHARQ-mode.

In an embodiment, the name of each of the multiple pieces of RRC signaling includes groupHoppingEnabledTransformPrecoding.

In an embodiment, the name of each of the multiple pieces of RRC signaling includes msg3-DeltaPreamble.

In an embodiment, the name of each of the multiple pieces of RRC signaling includes p0-NominalWithGrant.

In an embodiment, the name of each of the multiple pieces of RRC signaling includes -r18.

In an embodiment, the name of each of the multiple pieces of RRC signaling includes -r19.

In an embodiment, the name of each of the multiple pieces of RRC signaling includes -r20.

### Embodiment 11

Embodiment 11 illustrates a structural block diagram of a processing apparatus in a first node device, as shown in FIG. 11. In FIG. 11, the processing apparatus 1100 in the first node device includes a first receiver 1101 and a first transmitter 1102.

In an embodiment, the first node device 1100 is a base station.

In an embodiment, the first node device 1100 is a UE.

In an embodiment, the first node device 1100 is a relay node.

In an embodiment, the first node device 1100 is a vehicle-mounted communication device.

In an embodiment, the first node device 1100 is a UE that supports V2X communication.

In an embodiment, the first node device 1100 is a relay node that supports V2X communication.

In an embodiment, the first node device 1100 is a UE that supports an operation in a highfrequency spectrum.

In an embodiment, the first node device 1100 is a UE that supports an operation in a shared spectrum.

In an embodiment, the first node device 1100 is a UE that supports an XR service.

In an embodiment, the first node device 1100 is a UE that supports scheduling PUSCHs on multiple cells by using one piece of DCI.

In an embodiment, the first receiver 1101 includes at least one of the antenna 452, the receiver 454, the multi-antenna receive processor 458, the receive processor 456, the controller/processor 459, the memory 460, and the data source 467 in FIG. 4 of this application.

In an embodiment, the first receiver 1101 includes at least the first five of the antenna 452, the receiver 454, the multi-antenna receive processor 458, the receive processor 456, the controller/processor 459, the memory 460, and the data source 467 in FIG. 4 of this application.

In an embodiment, the first receiver 1101 includes at least the first four of the antenna 452, the receiver 454, the multi-antenna receive processor 458, the receive processor 456, the controller/processor 459, the memory 460, and the data source 467 in FIG. 4 of this application.

In an embodiment, the first receiver 1101 includes at least the first three of the antenna 452, the receiver 454, the multi-antenna receive processor 458, the receive processor 456, the controller/processor 459, the memory 460, and the data source 467 in FIG. 4 of this application.

In an embodiment, the first receiver 1101 includes at least the first two of the antenna 452, the receiver 454, the multi-antenna receive processor 458, the receive processor 456, the controller/processor 459, the memory 460, and the data source 467 in FIG. 4 of this application.

In an embodiment, the first transmitter 1102 includes at least one of the antenna 452, the transmitter 454, the multi-antenna transmit processor 457, the transmit processor 468, the controller/processor 459, the memory 460, and the data source 467 in FIG. 4 of this application.

In an embodiment, the first transmitter 1102 includes at least the first five of the antenna 452, the transmitter 454, the multi-antenna transmit processor 457, the transmit processor 468, the controller/processor 459, the memory 460, and the data source 467 in FIG. 4 of this application.

In an embodiment, the first transmitter 1102 includes at least the first four of the antenna 452, the transmitter 454, the multi-antenna transmit processor 457, the transmit processor 468, the controller/processor 459, the memory 460, and the data source 467 in FIG. 4 of this application.

In an embodiment, the first transmitter 1102 includes at least the first three of the antenna 452, the transmitter 454, the multi-antenna transmit processor 457, the transmit processor 468, the controller/processor 459, the memory 460, and the data source 467 in FIG. 4 of this application.

In an embodiment, the first transmitter 1102 includes at least the first two of the antenna 452, the transmitter 454, the multi-antenna transmit processor 457, the transmit processor 468, the controller/processor 459, the memory 460, and the data source 467 in FIG. 4 of this application.

In an embodiment, the first receiver 1101 receives a first RRC signaling set, where the first RRC signaling set includes first RRC signaling, and the first RRC signaling is configured for a first cell. The first receiver 1101 receives first DCI, where the first DCI is used for scheduling a PUSCH on at least one cell, and the first cell is one of the at least one cell. The first transmitter 1102 sends the PUSCH on each of the at least one cell, where a first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In an embodiment, the first RRC signaling is PUSCH-Config.

In an embodiment, the first RRC signaling is PUSCH-ConfigCommon.

In an embodiment, the first RRC signaling is PUSCH-ServingCellConfig.

In an embodiment, the number of cells included in the at least one cell is greater than 1. The first parameter set includes a first parameter subset, and the first parameter subset is default.

In an embodiment, the number of cells included in the at least one cell is greater than 1. The first RRC signaling set includes second RRC signaling, and the second RRC signaling is not configured for the first cell. The first parameter set includes a second parameter subset, and the second parameter subset uses a configuration of the second RRC signaling.

In an embodiment, the second RRC signaling is configured for a first reference cell, the first reference cell is a cell other than the first cell in the at least one cell, and a second field in the first DCI is used for determining the first reference cell.

In an embodiment, the number of cells included in the at least one cell is greater than 1. The first RRC signaling set includes a target RRC signaling subset, all pieces of signaling in the target RRC signaling subset are configured for the first cell, and the first RRC signaling is one of the multiple pieces of RRC signaling included in the target RRC signaling subset. The first parameter set includes a third parameter subset, and the third parameter subset uses a configuration of one piece of RRC signaling other than the first RRC signaling in the target RRC signaling subset.

In an embodiment, the number of cells included in the at least one cell is greater than 1. The indication of a second field set in the first DCI depends on a second parameter set. The first RRC signaling set includes multiple pieces of RRC signaling, and the first RRC signaling is one of the multiple pieces of RRC signaling. The multiple pieces of RRC signaling are respectively configured for the at least one cell. The second parameter set uses a configuration of at least one of the multiple pieces of RRC signaling, and configurations of the multiple pieces of RRC signaling for the second parameter set are expected to be the same.

### Embodiment 12

Embodiment 12 illustrates a structural block diagram of a processing apparatus in a second node device, as shown in FIG. 12. In FIG. 12, the processing apparatus 1200 in the second node device includes a second transmitter 1201 and a second receiver 1202.

In an embodiment, the second node device 1200 is a UE.

In an embodiment, the second node device 1200 is a base station.

In an embodiment, the second node device 1200 is a satellite device.

In an embodiment, the second node device 1200 is a relay node.

In an embodiment, the second node device 1200 is a vehicle-mounted communication device.

In an embodiment, the second node device 1200 is a UE that supports V2X communication.

In an embodiment, the second node device 1200 is a device that supports an operation in a highfrequency spectrum.

In an embodiment, the second node device 1200 is a device that supports an operation in a shared spectrum.

In an embodiment, the second node device 1200 is a device that supports an XR service.

In an embodiment, the second node device 1200 is a device that supports scheduling PUSCHs on multiple cells by using one piece of DCI.

In an embodiment, the second node device 1200 is one of a test apparatus, a test device, and a test meter.

In an embodiment, the second transmitter 1201 includes at least one of the antenna 420, the transmitter 418, the multi-antenna transmit processor 471, the transmit processor 416, the controller/processor 475, and the memory 476 in FIG. 4 of this application.

In an embodiment, the second transmitter 1201 includes at least the first five of the antenna 420, the transmitter 418, the multi-antenna transmit processor 471, the transmit processor 416, the controller/processor 475, and the memory 476 in FIG. 4 of this application.

In an embodiment, the second transmitter 1201 includes at least the first four of the antenna 420, the transmitter 418, the multi-antenna transmit processor 471, the transmit processor 416, the controller/processor 475, and the memory 476 in FIG. 4 of this application.

In an embodiment, the second transmitter 1201 includes at least the first three of the antenna 420, the transmitter 418, the multi-antenna transmit processor 471, the transmit processor 416, the controller/processor 475, and the memory 476 in FIG. 4 of this application.

In an embodiment, the second transmitter 1201 includes at least the first two of the antenna 420, the transmitter 418, the multi-antenna transmit processor 471, the transmit processor 416, the controller/processor 475, and the memory 476 in FIG. 4 of this application.

In an embodiment, the second receiver 1202 includes at least one of the antenna 420, the receiver 418, the multi-antenna receive processor 472, the receive processor 470, the controller/processor 475, and the memory 476 in FIG. 4 of this application.

In an embodiment, the second receiver 1202 includes at least the first five of the antenna 420, the receiver 418, the multi-antenna receive processor 472, the receive processor 470, the controller/processor 475, and the memory 476 in FIG. 4 of this application.

In an embodiment, the second receiver 1202 includes at least the first four of the antenna 420, the receiver 418, the multi-antenna receive processor 472, the receive processor 470, the controller/processor 475, and the memory 476 in FIG. 4 of this application.

In an embodiment, the second receiver 1202 includes at least the first three of the antenna 420, the receiver 418, the multi-antenna receive processor 472, the receive processor 470, the controller/processor 475, and the memory 476 in FIG. 4 of this application.

In an embodiment, the second receiver 1202 includes at least the first two of the antenna 420, the receiver 418, the multi-antenna receive processor 472, the receive processor 470, the controller/processor 475, and the memory 476 in FIG. 4 of this application.

In an embodiment, the second transmitter 1201 sends a first RRC signaling set, where the first RRC signaling set includes first RRC signaling, and the first RRC signaling is configured for a first cell. The second transmitter 1201 sends first DCI, where the first DCI is used for scheduling a PUSCH on at least one cell, and the first cell is one of the at least one cell. The second receiver 1202 receives the PUSCH on each of the at least one cell. A first field set in the first DCI is applied to the at least one cell, the indication of the first field set in the first DCI depends on a first parameter set, and whether the first parameter set uses a configuration of the first RRC signaling is related to the number of cells included in the at least one cell; and the first parameter set uses the configuration of the first RRC signaling when the number of cells included in the at least one cell is 1; or at least a part of parameters in the first parameter set do not use the configuration of the first RRC signaling when the number of cells included in the at least one cell is greater than 1.

In an embodiment, the first RRC signaling is PUSCH-Config.

In an embodiment, the first RRC signaling is PUSCH-ConfigCommon.

In an embodiment, the first RRC signaling is PUSCH-ServingCellConfig.

In an embodiment, the number of cells included in the at least one cell is greater than 1. The first parameter set includes a first parameter subset, and the first parameter subset is default.

In an embodiment, the number of cells included in the at least one cell is greater than 1. The first RRC signaling set includes second RRC signaling, and the second RRC signaling is not configured for the first cell. The first parameter set includes a second parameter subset, and the second parameter subset uses a configuration of the second RRC signaling.

In an embodiment, the second RRC signaling is configured for a first reference cell, the first reference cell is a cell other than the first cell in the at least one cell, and a second field in the first DCI is used for determining the first reference cell.

In an embodiment, the number of cells included in the at least one cell is greater than 1. The first RRC signaling set includes a target RRC signaling subset, all pieces of signaling in the target RRC signaling subset are configured for the first cell, and the first RRC signaling is one of the multiple pieces of RRC signaling included in the target RRC signaling subset. The first parameter set includes a third parameter subset, and the third parameter subset uses a configuration of one piece of RRC signaling other than the first RRC signaling in the target RRC signaling subset.

In an embodiment, the number of cells included in the at least one cell is greater than 1. The indication of a second field set in the first DCI depends on a second parameter set. The first RRC signaling set includes multiple pieces of RRC signaling, and the first RRC signaling is one of the multiple pieces of RRC signaling. The multiple pieces of RRC signaling are respectively configured for the at least one cell. The second parameter set uses a configuration of at least one of the multiple pieces of RRC signaling, and configurations of the multiple pieces of RRC signaling for the second parameter set are expected to be the same.

A person of ordinary skill in the art can understand that, all or some of the steps in the foregoing methods may be completed by a program instructing related hardware. The program may be stored in a computer-readable storage medium, for example, a read-only memory, a hard disk, or an optical disk. Optionally, all or some of the steps in the foregoing embodiments may alternatively be implemented by using one or more integrated circuits. Correspondingly, each module unit in the foregoing embodiments may be implemented in a form of hardware, or may be implemented in a form of a software functional module. This application is not limited to any particular form of a combination of software and hardware. The first node device in this application includes, but is not limited to, a mobile phone, a tablet computer, a notebook computer, an Internet adapter, a low-power-consumption device, an eMTC device, an NB-loT device, a vehicle-mounted communication device, an aircraft, an airplane, an unmanned aerial vehicle, a remote control plane, or other wireless communication devices. The second node device in this application includes, but is not limited to, a mobile phone, a tablet computer, a notebook computer, an Internet adapter, a low-power-consumption device, an eMTC device, an NB-loT device, a vehicle-mounted communication device, an aircraft, an airplane, an unmanned aerial vehicle, a remote control plane, or other wireless communication devices. The user equipment, the LTE, or the terminal in this application includes, but is not limited to, a mobile phone, a tablet computer, a notebook computer, an Internet adapter, a low-power-consumption device, an eMTC device, an NB-loT device, a vehicle-mounted communication device, an aircraft, an airplane, an unmanned aerial vehicle, a remote control plane, or other wireless communication devices. The base station device, the base station, or the network side device in this application includes, but is not limited to, a macrocellular base station, a microcellular base station, a femtocell, a relay base station, an eNB, a gNB, a TRP, a GNSS, a relay satellite, a satellite base station, an air base station, a test apparatus, a test device, a test meter, or the like.

A person skilled in the art should understand that the present invention may be implemented in other specified forms without departing from the core or basic features thereof. Therefore, the currently disclosed embodiments should be considered as descriptive rather than restrictive in any case. The scope of the present invention is determined based on the appended claims rather than the foregoing descriptions, and all modifications within equivalent meanings and areas thereof are considered to be included therein.

## Claims

1. A first node for wireless communication, comprising:
a first receiver, configured to: receive a first RRC signaling set, wherein the first RRC signaling set comprises first RRC signaling, and the first RRC signaling is configured for a first cell; and receive first DCI, wherein the first DCI is used for scheduling a PUSCH on at least one cell, and the first cell is one of the at least one cell; and
a first transmitter, configured to send the PUSCH on each of the at least one cell, wherein
a first field set in the first DCI is applied to the at least one cell, the indication of the first field set in the first DCI depends on a first parameter set, and whether the first parameter set uses a configuration of the first RRC signaling is related to the number of cells comprised in the at least one cell; and the first parameter set uses the configuration of the first RRC signaling when the number of cells comprised in the at least one cell is 1; or at least a part of parameters in the first parameter set do not use the configuration of the first RRC signaling when the number of cells comprised in the at least one cell is greater than 1.

2. The first node according to claim 1, wherein the first RRC signaling is PUSCH-Config.

3. The first node according to claim 1, wherein the first RRC signaling is PUSCH-ConfigCommon or PUSCH-ServingCellConfig.

4. The first node according to any one of claims 1 to 3, wherein the number of cells comprised in the at least one cell is greater than 1; and the first parameter set comprises a first parameter subset, and the first parameter subset is default.

5. The first node according to any one of claims 1 to 4, wherein the number of cells comprised in the at least one cell is greater than 1; the first RRC signaling set comprises second RRC signaling, and the second RRC signaling is not configured for the first cell; and the first parameter set comprises a second parameter subset, and the second parameter subset uses a configuration of the second RRC signaling.

6. The first node according to claim 5, wherein the second RRC signaling is configured for a first reference cell, the first reference cell is a cell other than the first cell in the at least one cell, and a second field in the first DCI is used for determining the first reference cell.

7. The first node according to any one of claims 1 to 6, wherein the number of cells comprised in the at least one cell is greater than 1; the first RRC signaling set comprises a target RRC signaling subset, all pieces of signaling in the target RRC signaling subset are configured for the first cell, and the first RRC signaling is one of the multiple pieces of RRC signaling comprised in the target RRC signaling subset; and the first parameter set comprises a third parameter subset, and the third parameter subset uses a configuration of one piece of RRC signaling other than the first RRC signaling in the target RRC signaling subset; or
the number of cells comprised in the at least one cell is greater than 1; the indication of a second field set in the first DCI depends on a second parameter set; the first RRC signaling set comprises multiple pieces of RRC signaling, and the first RRC signaling is one of the multiple pieces of RRC signaling; the multiple pieces of RRC signaling are respectively configured for the at least one cell; and the second parameter set uses a configuration of at least one of the multiple pieces of RRC signaling, and configurations of the multiple pieces of RRC signaling for the second parameter set are expected to be the same.

8. A second node for wireless communication, comprising:
a second transmitter, configured to: send a first RRC signaling set, wherein the first RRC signaling set comprises first RRC signaling, and the first RRC signaling is configured for a first cell; and send first DCI, wherein the first DCI is used for scheduling a PUSCH on at least one cell, and the first cell is one of the at least one cell; and
a second receiver, configured to receive the PUSCH on each of the at least one cell, wherein
a first field set in the first DCI is applied to the at least one cell, the indication of the first field set in the first DCI depends on a first parameter set, and whether the first parameter set uses a configuration of the first RRC signaling is related to the number of cells comprised in the at least one cell; and the first parameter set uses the configuration of the first RRC signaling when the number of cells comprised in the at least one cell is 1; or at least a part of parameters in the first parameter set do not use the configuration of the first RRC signaling when the number of cells comprised in the at least one cell is greater than 1.

9. A method used in a first node for wireless communication, comprising:
receiving a first RRC signaling set, wherein the first RRC signaling set comprises first RRC signaling, and the first RRC signaling is configured for a first cell; and receiving first DCI, wherein the first DCI is used for scheduling a PUSCH on at least one cell, and the first cell is one of the at least one cell; and
sending the PUSCH on each of the at least one cell, wherein
a first field set in the first DCI is applied to the at least one cell, the indication of the first field set in the first DCI depends on a first parameter set, and whether the first parameter set uses a configuration of the first RRC signaling is related to the number of cells comprised in the at least one cell; and the first parameter set uses the configuration of the first RRC signaling when the number of cells comprised in the at least one cell is 1; or at least a part of parameters in the first parameter set do not use the configuration of the first RRC signaling when the number of cells comprised in the at least one cell is greater than 1.

10. A method used in a second node for wireless communication, comprising:
sending a first RRC signaling set, wherein the first RRC signaling set comprises first RRC signaling, and the first RRC signaling is configured for a first cell; and sending first DCI, wherein the first DCI is used for scheduling a PUSCH on at least one cell, and the first cell is one of the at least one cell; and
receiving the PUSCH on each of the at least one cell, wherein
a first field set in the first DCI is applied to the at least one cell, the indication of the first field set in the first DCI depends on a first parameter set, and whether the first parameter set uses a configuration of the first RRC signaling is related to the number of cells comprised in the at least one cell; and the first parameter set uses the configuration of the first RRC signaling when the number of cells comprised in the at least one cell is 1; or at least a part of parameters in the first parameter set do not use the configuration of the first RRC signaling when the number of cells comprised in the at least one cell is greater than 1.
